(19) Europäisches Patentamt
European Patent Office
Office européen des brevets

(11) EP 2 869 235 A1

(12) # EUROPEAN PATENT APPLICATION
published in accordance with Art. 153(4) EPC

(43) Date of publication:
**06.05.2015 Bulletin 2015/19**

(21) Application number: **13813445.7**

(22) Date of filing: **02.07.2013**

(51) Int Cl.:
***G06K 7/10*** *(2006.01)* ***G02B 7/02*** *(2006.01)*

(86) International application number:
**PCT/JP2013/068186**

(87) International publication number:
**WO 2014/007268 (09.01.2014 Gazette 2014/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **02.07.2012 JP 2012148579**
**02.07.2012 JP 2012148600**
**05.06.2013 JP 2013119343**

(71) Applicant: **Yoshida, Kenji**
**Bunkyo-ku**
**Tokyo 112-0002 (JP)**

(72) Inventor: **Yoshida, Kenji**
**Bunkyo-ku**
**Tokyo 112-0002 (JP)**

(74) Representative: **Klunker . Schmitt-Nilson . Hirsch**
**Patentanwälte**
**Destouchesstraße 68**
**80796 München (DE)**

(54) **LENS UNIT**

(57) A lens unit that is mounted on a camera to suitably photograph a dot pattern or the like is provided. The lens unit mounted on a camera of a smart phone or the like includes a cylindrical lens holder having a lower opening portion arranged to surround a photographing opening of the camera and an upper opening portion at both ends of the lens holder, a lens arranged at a predetermined position in the cylindrical lens holder, and an ID medium loaded on the upper opening portion of the lens holder to perform authentication. A lens unit includes a cylindrical lens holder having a lower opening portion arranged to surround a photographing opening of a camera and an upper opening portion at both ends the lens holder, a lens arranged at a predetermined position of the cylindrical lens holder, and an adjuster arranged on the lower opening portion of the lens holder to appropriately adjust a distance from the lens to the camera.

FIG. 55A

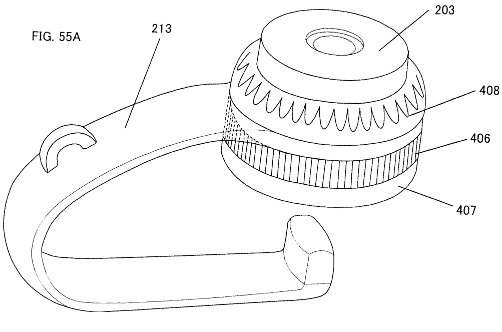


FIG. 55B

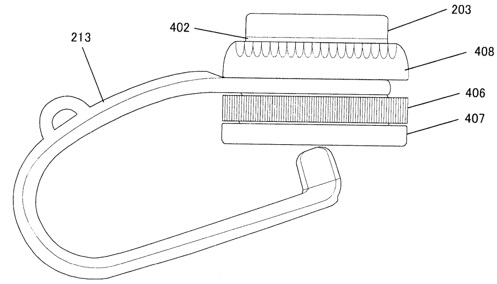




Printed by Jouve, 75001 PARIS (FR)

## Description

### Technical Field

The present invention relates to a lens unit that is detachably mounted to surround a photographing opening of a camera, and to a technique that photographs a pattern obtained by encoding an ID code serving as one of information codes with a camera through the lens unit to make it possible to decode the pattern with an information processing device including the camera.

The present invention relates to a lens unit that is detachably mounted to surround a photographing opening and relates to a mechanism that can adjust a focal length and a technique that photographs a pattern obtained by encoding an ID code serving as one of information codes formed on an ID medium loaded in a lens unit with a camera through the lens unit together with an object to be photographed to make it possible to decode an ID code with an information processing device including the camera.

### Background Art

Before the present application, a two-dimensional code that is read with a camera to make it possible to decode an encoded information code is known.

As a typical two-dimensional code, a conventional QR code (registered trade name (will be omitted hereinafter)) is known.

Since the QR code disadvantageously deteriorates the sensuousness of a printed medium, a method that causes the QR code to coexist with the original design of the printed medium is conventionally proposed.

All Patent Document 1, Patent Document 2, and Non-patent Document 1 disclose techniques that integrate arbitrarily designed designs with QR codes.

However, according to the above conventional technique, the object to provide a two-dimensional code that does not deteriorate the sensuousness of a printed medium cannot be achieved. Since a two-dimensional code is required to more naturally coexist with the original design of the printed medium, a "dot pattern" that is rarely visible unlike the QR code and serves as a two dimensional code that can be printed to overlap the design is devised and conventionally known.

The inventor of this application has proposed various inventions such as Patent Document 3, Patent Document 4, and Patent Document 5 to which the dot pattern is applied.

Patent Document 5 discloses an invention in which a dot pattern is printed with a K component, a normal printing region to which a design is applied is printed with a CMY component to extract only the dot pattern printed with the K component by using an infrared ray so as to make it possible to read the dot pattern.

Patent Document 3 discloses an invention of a dot pattern reading method that can optically discriminate a dot pattern from a normal printing region in a visible light region.

| | |
|---|---|
| [Patent Document 1] | Japanese Unexamined Patent Publication No. 2009-259192 |
| [Patent Document 2] | Japanese Unexamined Patent Publication No. 2009-230729 |
| [Patent Document 3] | International Publication 2004/029871 |
| [Patent Document 4] | International Publication 2007/105819 |
| [Patent Document 5] | International Publication 2006/040832 |
| [Non-patent Document 1] | Original QR code "Design QR" (http://d-qr.net/) |

### Summary of Invention

### Technical Problem

A first object of the invention of the present application is mainly to provide a lens unit that, although a camera attached to a smart phone, a mobile phone, or a personal computer has a main object to perform general photographing and is not often matched with photographing for dot pattern or the like, is fixed on the camera to cause the camera to be matched with photographing for dot pattern, and to make it possible to appropriately adjust a distance from a lens included in the lens unit to the camera.

A second object of the present invention is to photograph a lens ID together with an object to be photographed in photographing to specify a lens and to associate the lens with the image of the object.

A third object of the present invention is to provide a lens unit that is suitable for photographing of a printed medium that is a predetermined object photographed with a camera and on which a dot pattern obtained by encoding an information code is printed.

A fourth object of the present invention is to provide a lens unit that is suitable for photographing of a predetermined object photographed with a camera and to correct surface colors to original surface colors because an image of an object cannot be correctly obtained due to optical presentation by the color and brightness of illumination including natural light. In particular, in photographing of parts such as skin, scalp, hair, a claw, and an eye to be inspected and analyzed, original colors must be acquired.

Solution to Problems

<1> The present invention is a lens unit mounted on an information processing device including a camera and an analyzing means for decoding information codes, including: a lens holder having a lower opening portion detachably mounted to surround a photographing opening of the camera and an upper opening portion at both ends of the lens holder; a lens disposed at a predetermined position in the cylindrical lens holder; and an ID medium loaded in the upper opening portion of the lens holder, having an opening or a transparent region required to photograph a predetermined object, and formed to make it possible that the camera photographs a pattern obtained by encoding an ID code serving as one of the information codes to perform authentication in the analyzing means.

<2> Furthermore, the ID medium is preferably loaded by one method selected from methods of being stuck on the upper opening portion of the lens holder, fitted in the upper opening portion, and screwed in the upper opening portion.

<3> Furthermore, the pattern obtained by encoding the ID code is preferably formed near a peripheral edge of the opening or transparent region of the ID medium.

<4> Furthermore, the pattern is preferably a circle pattern that is formed with a plurality of marks arranged on a circumference of a predetermined circle, a circumference of a predetermined ellipse, or a circumference of a predetermined closed curved line on the basis of a predetermined rule and on which the ID code is encoded by the predetermined rule.

<5> Furthermore, a pattern to make it easy to focus in photographing by the camera is preferably printed near the periphery of the opening of the ID medium or near the center or the periphery of the transparent region of the ID region. The lens unit is described in any one of claims 1 to 4.

<6> Furthermore, the pattern is preferably printed with a transparent ink.

<7> Furthermore, the ID medium is preferably integrally molded together with the lens holder.

<8> Furthermore, the lens unit preferably includes an infrared filter at a predetermined position.

<9> Furthermore, the predetermined object is preferably photographed such that the object is in surface contact with the upper opening portion of the lens holder.

<10> Furthermore, the lens holder preferably further includes a lens cover arranged on the upper opening portion of the lens holder and having an opening or a transparent region required to photograph the predetermined object.

<11> Furthermore, the predetermined object is preferably photographed such that the object is in surface contact with the upper opening portion of the lens holder or the lens cover.

<12> Furthermore, the ID medium is preferably loaded by one method selected from methods of being stuck on the upper opening portion of the lens cover, fitted in the upper opening portion, screwed in the upper opening portion, and interposed between the lens cover and the lens holder.

<13> Furthermore, the lens cover is preferably integrally molded together with at lest one of the lens holder and the ID medium.

<14> Furthermore, the lens unit preferably includes an antislip mounted on the lower opening portion of the lens holder to mount the lens unit on the information processing device.

<15> Furthermore, the antislip is preferably mounted on the lower opening portion of the lens holder by being stuck on, fitted in, or screwed in the lower opening portion.

<16> Furthermore, the antislip is preferably integrally molded together with the lens holder.

<17> Furthermore, the lens unit further includes an adjuster that is arranged on the lower opening portion of the lens holder, has an opening or a transparent region required to photograph the predetermined object, and adjusts a distance from the lens to the camera to a proper distance.

<18> Furthermore, the lens unit preferably further includes a pedestal to stably place the predetermined object near a periphery of an outer wall of the upper opening portion of the lens holder.

<19> Furthermore, the pedestal is preferably integrally molded together with the lens holder.

<20> Furthermore, the pedestal and a lens cover arranged on the upper opening portion of the lens holder and having an opening or a transparent region required to photograph the predetermined object are preferably integrally molded together with each other.

<21> Furthermore, the lens unit preferably further includes a clip to fix the lens unit to mount the lens unit on a camera connected to the information processing device or an information processing device in which the camera is built.

<22> Furthermore, the clip preferably has an arm having one end attached to the lens holder and the other end formed to clip a rear side of the information processing device in which the camera is built.

<23> Furthermore, one end of the arm of the clip attached to the lens holder is preferably a ring-like or U-shaped stopper, and the lens unit is preferably attached to the stopper through the lens holder.

<24> Furthermore, a screw-like second stopper is preferably attached through the lens holder to fix the stopper of the clip.

<25> Furthermore, an O ring is preferably attached between the stopper of the clip and the second stopper through the lens holder.

<26> Furthermore, the clip is preferably integrally molded together with at least one of the lens holder and the lens cover.

<27> Furthermore, the clip is preferably designed such that, when the information processing device is placed on a horizontal plane while the lens unit faces upward to clip a rear side of the information processing device, the arm of the clip has a predetermined region being in surface contact with the horizontal plane.

<28> On the other hand, the present invention is a lens unit mounted on an information processing device including a camera and an analyzing means for decoding information codes including: a cylindrical lens holder having a lower opening portion detachably mounted to surround a photographing opening of the camera and an upper opening portion; a lens arranged at a predetermined position in the cylindrical lens holder; and an adjuster that is arranged on the lower opening of the lens holder, has an opening or a transparent region required to photograph the predetermined object, and appropriately adjust a distance from the lens to the camera.

<29> Furthermore, the lens unit preferably further includes an ID medium loaded in the upper opening portion of the lens holder, having an opening or a transparent region required to photograph a predetermined object, and formed to make it possible that the camera photographs a pattern obtained by encoding an ID code serving as one of the information codes to perform authentication in the analyzing means.

<30> Furthermore, the ID medium is preferably loaded by one method selected from methods of being stuck on the upper opening portion of the lens holder, fitted in the upper opening portion, and screwed in the upper opening portion.

<31> Furthermore, the pattern obtained by encoding the ID code is preferably formed near a periphery of the opening or the transparent region of the ID medium.

<32> Furthermore, the pattern is preferably a circle pattern formed with a plurality of marks arranged on a circumference of a predetermined circle, a circumference of a predetermined ellipse, or a circumference of a predetermined closed curved line on the basis of a predetermined rule and on which the ID code is encoded by the predetermined rule.

<33> Furthermore, a pattern to make it easy to focus in photographing by the camera is preferably printed near the periphery of the opening of the ID medium or near the center or the periphery of the transparent region of the ID region.

<34> Furthermore, the pattern is preferably printed with a transparent ink.

<35> Furthermore, the ID medium is preferably integrally molded together with the lens holder.

<36> Furthermore, the lens unit preferably further includes an infrared filter at a predetermined position.

<37> Furthermore, the predetermined object is preferably photographed such that the object is in surface contact with the upper opening portion of the lens holder.

<38> Furthermore, the lens unit preferably further includes a lens cover arranged on the upper opening portion of the lens holder and having an opening or a transparent region required to photograph the predetermined object.

<39> Furthermore, the predetermined object is preferably photographed such that the object is in surface contact with the upper opening portion of the lens holder or the lens cover.

<40> Furthermore, the lens unit preferably further includes a stopper mounted on the lower opening portion of the lens holder to mount the lens unit on the information processing device.

<41> Furthermore, the stopper is preferably mounted by one method selected from methods of being stuck on the lower opening portion of the lens holder, fitted in the lower opening portion, and screwed in the lower opening portion.

<42> Furthermore, the stopper is preferably integrally molded together with the lens holder.

<43> Furthermore, the stopper is preferably mounted by one method selected from methods of being stuck on the opening of the adjuster, fitted in the opening, screwed in the opening, and mounted between the adjuster and the lens holder.

<44> Furthermore, the adjuster is preferably integrally molded together with at least one of the lens holder and the stopper.

<45> Furthermore, the lens unit preferably further includes a pedestal to stably place the predetermined object near a periphery of an outer wall of the upper opening portion of the lens holder.

<46> Furthermore, the pedestal is preferably integrally molded together with the lens holder.

<47> Furthermore, the pedestal and a lens cover arranged on the upper opening portion of the lens holder and having an opening or a transparent region required to photograph the predetermined object are integrally molded together with each other.

<48> Furthermore, the lens unit preferably further includes a clip to fix the lens unit to mount the lens unit on a camera connected to the information processing device or an information processing device in which the camera is built.

<49> Furthermore, the clip preferably has an arm having one end attached to the lens holder and the other end formed to clip a rear side of the information processing device having the camera.

<50> Furthermore, one end of the arm of the clip attached to the lens holder is preferably a ring-like or U-shaped stopper, and the lens unit is preferably attached to the stopper through the lens holder.

<51> Furthermore, a screw-like second stopper is preferably attached through the lens holder to fix the stopper of the clip.

<52> Furthermore, an O ring is preferably attached between the stopper of the clip and the adjuster or the second stopper through the lens holder.

<53> Furthermore, the clip is preferably integrally molded together with at least one of the lens holder, the lens cover, and the adjuster.

<54> Furthermore, a screw thread is preferably formed on the lens holder such that at least the adjuster of the pedestal, the lens cover, the second stopper, the clip, and the adjuster can be attached or detached with a screw.

<55> Furthermore, the clip is preferably designed such that, when the information processing device is placed on a horizontal plane while the lens unit face upward to clip a rear side of the information processing device, the arm of the clip has a predetermined region being in surface contact with to the horizontal plane.

<56> Furthermore, the camera is preferably built in the information processing device.

<57> Furthermore, the camera is preferably connected to the information processing device with a cable or a wireless unit and preferably transmits an image of the predetermined object photographed with the camera and/or information codes decoded with the analyzing means to the information processing device.

<58> Furthermore, the camera preferably includes the analyzing means.

<59> Furthermore, the predetermined object is preferably a printed medium on which a dot pattern obtained by encoding information codes, and the analyzing means preferably decodes the information codes from the dot pattern photographed with the camera.

<60> Furthermore, the lens holder is preferably molded together with the lens.

<61> Furthermore, the lens unit preferably further includes a light source disposed at a predetermined position on an outer peripheral wall of the lens holder to almost uniformly irradiate light on the predetermined object, and a power supply that supplies an electric power to the light source.

<62> Furthermore, the power supply is preferably supplied from the information processing device.

<63> Furthermore, the information processing device preferably includes a storage means that decodes an ID code from the pattern photographed with the camera to record the decoded ID code in association with a photographed image of the predetermined object.

<64> Furthermore, the information processing device preferably includes an information processing means that transmits, together with the decoded ID code recorded on the storage means, the photographed image of the predetermined object associated with the ID code to a server.

<65> Furthermore, the predetermined object is preferably a region of a human body.

<66> Furthermore, the information processing device is preferably a smart phone, a mobile phone, a personal computer with camera, or a digital camera.

<67> The present invention is a program in which the lens unit is mounted to surround the photographing opening of the camera of the information processing device and the analyzing means included in the information processing device decodes, from an image obtained by photographing a pattern obtained by encoding an ID code together with a predetermined object, the ID code or transmits the ID code decoded together with the predetermined object to a second image processing device.

<68> Furthermore, the analyzing means preferably performs image processing to an image obtained by photographing the predetermined object to further acquire predetermined information, outputs at least the predetermined information with the information processing device, and/or transmits the predetermined information to a second information processing device together with the ID code.

<69> The present invention is a program in which the lens unit is mounted to surround to the photographing opening of the camera of the information processing device, and an analyzing means included in a second information processing device to which an image obtained by photographing a pattern obtained by encoding an ID code together with a predetermined object with the camera is transmitted decodes the ID code from the image.

<70> Furthermore, the analyzing means preferably performs image processing to an image obtained by photographing the predetermined object to further acquire predetermined information.

<71> The present invention is a program in which the lens unit is mounted to surround a photographing opening of a camera of the information processing device, an analyzing means included in the information processing device, from an image obtained by photographing the predetermined medium on which a dot pattern obtained by encoding the information code is printed with the camera, decodes the information code, and/or outputs information corresponding to the decoded information code, and/or transmits the decoded information code and/or information corresponding to the decoded information code to a second information processing device.

<72> The invention of this application is a program in which a lens unit is mounted to surround a photographing opening of a camera of the information processing device, an analyzing means included in the information processing device, from an image obtained by photographing a pattern obtained by encoding an ID code together with the predetermined medium on which a dot pattern obtained by encoding an information code is printed with the camera, decodes the information code and the ID code, and/or outputs information corresponding to the decoded information code and the decoded ID code, and/or transmits the decoded information code and the decoded ID code and/or information corresponding to the decoded information code and the decoded ID code to a second information processing device.

<73> The present invention is an information processing device with camera that includes a lens unit and in which a program is installed.

<74> The present invention is a second information processing device in which a program is installed.

<75> The present invention is an information processing device with camera including a lens unit.

<76> The present invention is an information processing system including an information processing device with camera and a second information processing device communicating with the information processing device.

## Advantageous Effects of Invention

According to the present invention, a lens unit is detachably mounted on a camera attached to a smart phone, a mobile phone, a personal computer, or the like and primarily intended to perform general photographing to photograph a pattern obtained by encoding an ID code serving as one of information codes with the camera through the lens unit so as to make it possible to perform decoding in an information processing device including the camera.

According to the present invention, a distance from a lens included in the lens unit to the camera can be appropriately adjusted.

According to the present invention, even though a predetermined object photographed with the camera is a printed medium on which a dot pattern obtained by encoding an information code is printed, a lens unit suitable for photographing of the printed medium can be provided.

According to the present invention, even though the predetermined object photographed with the camera is a part such as skin, scalp, hair, a claw, and an eye of a human body, a lens unit suitable for photographing of a region of the human body can be provided.

## Brief Description of Drawings

Figure 1 is a diagram (part 1) showing a basic embodiment of the present invention.
Figure 2 is a diagram (part 2) showing a basic embodiment of the present invention.
Figure 3 is a diagram showing a first embodiment of a printed medium according to the present invention.
Figure 4 is a diagram showing a second embodiment of the printed medium according to the present invention.
Figure 5 is a diagram showing a third embodiment of the printed medium according to the present invention.
Figure 6 is a diagram showing an embodiment of an icon according to the present invention.
Figure 7 is a diagram showing a method of image processing in the present invention.
Figure 8 is a diagram (part 1) showing a concrete example of an arrangement of CMY in the present invention.
Figure 9 is a diagram (part 2) showing a concrete example of the arrangement of CMY in the present invention.
Figure 10 is a diagram showing a method of image processing in the present invention.
Figure 11 is a diagram showing a method of image processing in the present invention.
Figure 12 is a diagram showing a method of image processing in the present invention.
Figure 13 is a diagram showing a method of image processing in the present invention.
Figure 14 is a diagram showing a method of image processing in the present invention.
Figure 15 is a diagram showing a method of image processing in the present invention.
Figure 16 is a diagram showing a method of image processing in the present invention.
Figure 17 is a diagram showing an embodiment of a printing system for an image with dot pattern according to the present invention.
Figure 18 is a diagram showing a lens unit according to the present invention.
Figure 19 is a diagram showing a lens unit according to the present invention.

Figure 20 is a diagram showing a lens unit according to the present invention.
Figure 21 is a diagram showing a lens unit according to the present invention.
Figure 22 is a diagram showing a lens unit according to the present invention.
Figure 23 is a diagram showing an ID code added to a lens unit according to the present invention.
Figure 24 is a diagram showing a figure added to the lens unit according to the present invention.
Figure 25 is a diagram showing a figure added to the lens unit according to the present invention.
Figure 26 is a diagram showing a lens unit with irradiation function according to the present invention.
Figure 27 is a diagram showing a lens unit with irradiation function according to the present invention.
Figure 28 is a diagram showing a lens unit with irradiation function according to the present invention.
Figure 29 is a diagram showing a lens unit with irradiation function according to the present invention.
Figure 30 is a graph showing a relationship between wavelengths and transmittances of a filter or the like used in a camera of a mobile phone.
Figure 31 is a diagram showing a state in which a lens unit according to the present invention is attached a tablet personal computer.
Figure 32 is a diagram showing a state in which a lens unit according to the present invention is attached a tablet personal computer.
Figure 33 is a diagram showing a state in which a lens unit according to the present invention is attached a tablet personal computer.
Figure 34 is a diagram for explaining that a dot pattern drawn on a card is read by using the lens unit according to the present invention.
Figure 35 is a diagram for explaining that a dot pattern drawn on a figure is read by using the lens unit according to the present invention.
Figure 36 is a diagram showing a figure on which the lens unit according to the present invention is arranged.
Figure 37 is a diagram for explaining that a lens unit is attached to a smart phone to read a dot pattern drawn on a card.
Figure 38 is a diagram for explaining that a lens unit is attached to a smart phone to read a dot pattern drawn on a card.
Figure 39 is a diagram showing a circle pattern according to the present invention.
Figure 40 is a diagram showing a circle pattern according to the present invention.
Figure 41 is a diagram showing a circle pattern according to the present invention.
Figure 42 is a diagram showing a circle pattern according to the present invention.
Figure 43 is a table showing an allocation of code values on the circle pattern according to the present invention.
Figure 44 is a diagram showing a circle pattern according to the present invention.
Figure 45 is a diagram showing a circle pattern according to the present invention.
Figure 46 is a table showing an allocation of code values on the circle pattern according to the present invention.
Figure 47 is a diagram showing a circle pattern according to the present invention.
Figure 48 is a diagram showing a circle pattern according to the present invention.
Figure 49 is a diagram showing a circle pattern according to the present invention.
Figure 50 is a diagram showing a circle pattern according to the present invention.
Figure 51 is a diagram showing a lens unit on which an ID code according to the present invention is printed.
Figure 52 is a diagram showing a lens unit with clip according to the present invention.
Figure 53 is a diagram showing an ID medium loaded on the lens unit according to the present invention.
Figure 54 is a diagram showing an adjuster arranged in the lens unit according to the present invention.
Figure 55 is a diagram showing an adjuster and a stopper that are arranged in the lens unit according to the present invention.
Figure 56 is a diagram showing an adjuster and a stopper that are arranged in the lens unit according to the present invention.
Figure 57 is a diagram showing an adjuster arranged in the lens unit according to the present invention.
Figure 58 is a diagram showing a clip arranged on the lens unit according to the present invention.
Figure 59 is a diagram showing each configuration of the lens unit according to the present invention.
Figure 60 is a diagram showing each configuration of the lens unit according to the present invention.
Figure 61 is a diagram showing a lens unit on which a pedestal according to the present invention is arranged.
Figure 62 is a diagram showing a using mode of the lens unit according to the present invention.
Figure 63 is a diagram in which light is strongly incident on the lower right of the periphery of the lens unit according to the present invention.
Figure 64 is a circle dot pattern of an ID medium of the lens unit according to the present invention.
Figure 65 shows a definition of numerical information of information dots of a circle dot pattern on the lens unit according to the present invention.
Figure 66 is a diagram showing an ID medium (color correction medium) used in color correction.
Figure 67 is a diagram showing an ID medium (color correction medium) used in color correction.

Figure 68 is a graph used to calculate a correction value in color correction.
Figure 69 is a diagram for explaining a measure point set on an ID medium (color correction medium).

Description of Embodiments

Embodiments for carrying out the present invention will be described below.

<Dot pattern>

A "dot pattern" in the present invention is obtained by encoding an information code with an arrangement algorithm of a plurality of dots.
A dot pattern 101 is printed with a K component in all the embodiments of the present invention. More specifically, only the dot pattern 101 is printed on a printed medium with the K component.
In a more preferable embodiment, the dot pattern 101 is printed with a black color that is the K component. However, the black color mentioned here need only be a black color that can be recognized as a black color with a CPU in reading of the dot pattern 101 (more specifically, the color may be a gray or the like having low brightness).
The dot pattern 101 may be printed with a black color (so-called composite black) using CMY components without using the K component. The dot pattern 101 may be printed such that one component of the CMY components is printed with a high tone and a graphic is printed with one component of the other components. In this case, the component selected for dot pattern printing or a mixed color of the component and the component selected for graphic printing may be read as a dot. Furthermore, an image region of the graphic is configured by a plurality of partial regions, and, as a component of the partial regions, any one component of the two components except for one component selected for dot pattern printing is used. The components of the partial image regions may be different from each other. More specifically, when only a component including one component selected for dot pattern printing is read, the dot pattern can be read. When the dots are to be recognized with one component selected for the dot pattern printing or a black color obtained by mixing the three components, as the other components, two components except for one component selected for dot pattern printing may be used without any inhibition.
As an encoding algorithm for an information code by a dot pattern, a known algorithm such as Grid Onput (registered trade mark) available from Gridmark Inc. or an Anoto pattern available from Anoto can be used.
The encoding algorithm itself of the dot pattern 101 is shared by reading with visible light as in the present invention and reading with infrared as in a conventional technique.
As the dot pattern 101, in addition to this, any dot pattern that cannot be visually recognized or is merely recognized as a pattern even though the dot pattern can be recognized can be used.
When coordinate values are defined for the dot pattern 101, different information codes can be encoded depending on read positions of the dot pattern.

<Image region>

An "image region" in the present invention means a region on which a figure, a letter, a hieroglyph, an image, or a photograph is printed.
The figure or the letter in the image region 102 is printed with one component selected from a C component, an M component, a Y component, a CM component, an MY component, and a CY component.
The "CM component" means superposition of the C component and the M component, the "MY component" means superposition of the M component and the Y component, and the "CY component" means superposition of the C component and the Y component.
The image region 102 may include two or more partial regions printed with one component selected from the C component, the M component, the Y component, the CM component, the MY component, and the CY component.
When the image region 102 includes a part in which all the CMY components are superposed, the part may be erroneously recognized as a black dot in reading of the dot pattern 101. Thus, as shown in Figure 1 and Figure 2, even in each of the partial regions of the image region 102, a region in which all the CMY components are superposed must be prevented from being formed.

<Printed medium>

In the present invention, as shown in Figure 3, the dot pattern 101 may be printed in an entire surface of a printed medium 103, or, as shown in Figure 4, the dot pattern 101 may be printed to be superposed on only the image region 102. Although not shown, in Figure 3, the dot pattern 101 may be printed in an arbitrary region but the entire surface of the printed medium 103.

When the dot pattern 101 is printed to be superposed on only the image region 102, as shown in Figure 4, the dot pattern 101 may be printed to be superposed on the entire image region 102, or, as shown in Figure 5, the dot pattern 101 may be printed to be superposed on a part of the image region 102.
As shown in Figure 6, the dot pattern 101 may be printed to be superposed on a symbol or a logo (including not only a logo obtained by a designed letter but also a logo obtained by a so-called standard letter) drawn on the surface of the printed medium 103.
In this manner, something obtained by printing and superposing a dot pattern on a symbol or a logo drawn on a medium surface is called an "icon" in the present invention.

<Optical reading>

When information is decoded from the dot pattern 101 of the present invention, the dot pattern 101 is photographed together with the image region 102 with a camera, image analysis is performed by a CPU, and black parts are extracted as the dot pattern 101 from the photographed image. As described above, since a black color does not expressed in the image region 102, the dot pattern 101 can be easily extracted. The dot pattern 101 may be printed such that one component of the CMY components may be printed with a high tone and the image region 102 may be printed with another component. In this case, a component selected for dot pattern printing or a mixed color (mixed color of inks) of the component and a component selected for printing the image region 102 is extracted as the dot pattern 101. As a matter of course, since the mixed color of the component and the component selected for printing the image region 102 is not expressed in the image region 102, the dot pattern 101 can be easily extracted.
The CPU decodes an information code encoded by the dot pattern 101 according to a decoding algorithm of an information code obtained by a dot pattern.

<Conversion method>

The image region 102 must be designed in advance to be printed with one component selected from the C component, the M component, the Y component, the CM component, the MY component, and the CY component of the CMY components, or must be subjected to image processing such that an original image expressed with the CMY components is printed with one component selected from the C component, the M component, the Y component, the CM component, the MY component, and the CY component.
Thus, a method of converting an image (illustration, photograph, or the like) expressed with normal CMY values into the image region 102 printed with one component selected from the C component, the M component, the Y component, the CM component, the MY component, and the CY component will be described below.

<First conversion method>

An image expressed with the normal CMY values is input, and the CMY values in each partial region are calculated.
The values of the C component, the M component, and the Y component in the partial regions are compared with each other, and a component having the smallest value is eliminated, so that the image is converted into the image region 102 printed with one component selected from the C component, the M component, the Y component, the CM component, the MY component, and the CY component.
In this case, the "component is eliminated" means at least one of that print data having zero as the component value is created, that a signal is transmitted to a printing means to prevent the component from being printed, and that a signal for printing the component is not transmitted to the printing means.

<Second conversion method>

As a modification of the first conversion method, a conversion method that focuses attention on the fact that the Y component slightly influences a color will be described below.
An image expressed with normal CMY values is input, and the CMY values in each partial region are calculated.
Values of the C component, the M component, and the Y component in the partial regions are compared with each other, and images input according the following classification are converted into the image region 102 printed with one component selected from the C component, the M component, the Y component, the CM component, the MY component, and the CY component in units of partial regions.

(1) When $C \geq Y \geq M$,

(1-1) and when Y ≤ αM, the Y component is eliminated.
(1-2) and when Y > αM, the M component is eliminated.

(2) When M ≥ Y ≥ C,

(2-1) and when Y ≤ αC, the Y component is eliminated.
(2-2) and when Y > αC, the C component is eliminated.

(3) When C > M > Y, the Y component is eliminated.
(4) When M > C > Y, the Y component is eliminated.
(5) When Y > C > M,

(5-1) and when Y ≤ αM, the Y component is eliminated.
(5-2) and when Y > αM, the M component is eliminated.

(6) When Y > M > C,

(6-1) and when Y ≤ αC, the Y component is eliminated.
(6-2) and when Y > αC, the C component is eliminated.

The " α " mentioned above is an arbitrary coefficient, and, more preferably, it is assumed that the second conversion method can be performed in a graphical user interface and that a designer can adjust the coefficient α while dots are actually read with an optical reading means. Alternatively, an image-pickup resolution and a color tone of the optical reading means and/or a printing precision and a color reproduction tone of a printed matter may be simulated to define an optimum value " α ".

<Third conversion method>

A third conversion method will be described.
In the third conversion method, an image expressed with normal CMY values is converted by using a table.
As an assumption for the conversion, a ratio conversion table in which ratios of converted CMY values corresponding to the ratios of CMY values of an original image as shown in Table 1 is created. The ratio conversion table is stored in a memory of a computer or a printer, and is designed to be referred to in the conversion. As a matter of course, the ratios of the converted CMY values must be described such that at least one value of the C, M, and, Y values becomes zero.

[Table]

| C is 1 | Y : 1 | Y : 2 | Y : ~ |
|---|---|---|---|
| M : 1 | C : 1.25<br>M : 1.25<br>Y : 0 | C : 0<br>M : 1.33<br>Y : 2.67 | C : -<br>M : 0<br>Y : - |
| M ; 2 | C : 1.25<br>M : 1.5<br>Y : 0 | C : 0<br>M : 2.33<br>Y : 2.67 | C : -<br>M : 0<br>Y : - |
| M : ~ | C : -<br>M : -<br>Y : 0 | C : 0<br>M : -<br>Y : - | C : -<br>M : 0<br>Y : - |

In the conversion, an image expressed with the normal CMY values is input, the CMY values in each partial region are calculated. Referring to the ratio conversion table, the ratios of the normal CMY values are converted into ratios of CMY values corresponding to the ratios of the normal CMY values to map the ratios on the corresponding part. The ratio conversion table is created in advance such that an image-pickup resolution and a color tone of the optical reading means and/or a printing precision and a color reproduction tone of a printed matter are simulated. Alternatively, test media actually printed under various conditions are measured, the performance of the optical reading means is added to the preconditions, so that a ratio conversion table is created in advance.

<Fourth conversion method>

A fourth conversion method is a method of converting an image (illustration, photograph, or the like) expressed with the normal CMY components into an image region printed with one component selected from the C component, the M component, the Y component, the CM component, the MY component, and the CY component by converting the color tone of the image into an arbitrary color tone.

<When color tone is converted into color tone of one color>

When the color tone is converted into the color tone of one color, an image expressed with the normal CMY components is input, the brightnesses of the parts of the image are calculated, and C components (or M components or Y components) having values corresponding to the brightnesses in the parts are mapped to convert the image into the image region 102 printed with only the C components.

As a method of converting the color tone into a color tone of another color, an image expressed with the CMY components is temporarily converted into a gray scale, and mapping may be performed with an arbitrary tone in the brightness. In the mapping, when the value of the gray scale and the scale of the arbitrary color tone are given by K and C, respectively, a function F given by C = F(K) may be used. The method of converting an image into a gray scale is an intermediate value method, a weighted average method, a simple average method, a G-channel method, or the like. Of these method, an optimum method that can express a target image may be selected.

The intermediate value method is a method of adding the maximum value and the minimum value of the R, G, and B values of all pixels to each other and dividing the resultant value by 2. The weighted average method is a method of weighting the R, G, and B values of all the pixels and calculating an average value of the R, G, and B values. The simple average method is a method of calculating an average value of the R, G, and B values. The G-channel method is a method of using the G value of the R, G, and B values.

A relationship between the calculated brightnesses and the converted values may be described in advance as a color tone conversion table.

<When color tone is converted into color tones of two colors>

An image expressed with normal CMY components is input, and the components except for the selected component are eliminated. For example, when a color tone is converted into color tones of the two C and M colors, the Y component is eliminated to convert the image into the image region 102 printed with one component selected from the C component, the M component, and the CM component.

In this case, a value obtained by multiplying the value of the eliminated Y component by a predetermined coefficient $\beta$ may be added to the value of the C component and the value of the M component in each part of the image.

Values obtained by multiplying the value of the Y component by different coefficients $\beta 1$ and $\beta 2$ may be added to the value of the C component and the value of the M component, respectively.

More specifically, it is assumed that the fourth conversion method can be performed in a graphical user interface and that a designer can adjust the coefficients $\beta$, $\beta 1$, and $\beta 2$.

<Fifth conversion method>

In a fifth conversion method, conversion is performed such that the color of a converted image looks like the same color as the original color of the image as much as possible.

An image expressed with normal CMY components is input, the image is divided into predetermined regions 1021, and a C value, an M value, and a Y value of each of the predetermined regions 1021 are calculated.

The C value, the M value, and the Y value calculated by reducing regions on which all the CMY components are superposed on the basis of the component values of each of the predetermined regions 1021.

Each of the predetermined regions 1021 is divided into component regions 1022 including a C component region printed with the C component of the CMY components, an M component region printed with only the M component, and a Y component region printed with only the Y component. As the component values included in the component regions 1022, the C values, the M values, and the Y values of the component regions 1022 are mapped such that a sum obtained by multiplying the C values, the M values, and the Y values of the components included in the component regions 1022 by values of the areas of the component regions 1022 is equal to a sum obtained by multiplying the C values, the M values, and the Y values of the component regions 1022 by the values of the areas of the predetermined regions 1021.

Each of the predetermined regions 1021 may be divided into the component regions 1022 including a C component region printed with only the C component of the CMY components and an MY component region printed with only the MY component, or each of the predetermined regions 1021 may be divided into the component regions 1022 including an M component region printed with only the M component and a CY component region printed with only the CY component.

Since the Y component slightly influences discrimination from black (dots), the Y component is preferably divided into the C component and the MY component or the M component and the CY component. In selection of the components, the Y component is preferably divided into the C component and the MY component when the C component is larger than the M component, and the Y component is preferably divided into the M component and the CY component when the C component is smaller than the M component.

Even though the image is converted as described above, as shown in Figure 7, with human's eyes, the colors of the finely divided component regions 1022 are mixed with each other (this is called "view mix"), and the colors are recognized as the colors (or approximate colors) of the original predetermined regions 1021. For this reason, the image can be visually recognized as an image that is almost the same as the original image. As general printing schemes, a halftone dot scheme and an FM screen scheme are known. The halftone dot scheme, dots of the C, M, and Y components are printed at positions where the C, M, and Y components are arranged according to a predetermined rule, and grayscales of the components are expressed with sizes (halftone dot values) of the dots. Even though the halftone dot values are small, a position where the components are superposed is generated by the predetermined rule to prevent moire. When the halftone dot values are large, the components are superposed, the colors on the superposed portion are mixed with each other to be dark brown (composite black) approximate to black. On the other hand, in the FM screen scheme, at print points aligned in predetermined regions obtained by uniformly dividing a printed region, dots having uniform sizes are arranged. The grayscale of each of the components is determined depending on the number of dots arranged at the print point in the predetermined region. When a brightness is low, the number of dots of the K component becomes large. When a saturation is high, the numbers of dots of the C, M, and Y components become large, and the number of dots of the K component becomes small. Both the halftone dot scheme and the FM screen scheme use the view mix. However, although black is not generated when printing is performed with only the C, M, and Y components in the FM screen scheme, the composite black is generated even though printing is performed with only the C, M, and Y components in the halftone dot scheme. Thus, the present invention is an invention in which conversion is performed to prevent the composite black from being generated in a region including the C, M, and Y components even in the halftone dot scheme. Furthermore, to express an original color by generating the composite black, black of a dot pattern is used in place of the composite black. At this time, the sizes of the dots of the dot pattern are made variable, and the sizes of the dots may be controlled to have a color influence almost equal to that of the generated composite black to create a dot pattern. More specifically, the sizes of dots may be determined such that an area of dots per unit area and a composite black area is almost equal to each other. At this time, although the C, M, and Y components are arranged in a predetermined region to prevent the composite black from being generated, the area of a composite black region must be reduced from each of the C, M, and Y components. When the composite black is not generated in image conversion, the sizes of the dots may be set such that the color rarely influences human's eyes.

More specifically, a total area of first dots each having the minimum size at which dots can be recognized and second dots each having the maximum size is compared with a total area of partial regions on which all the CMY components are superposed. The total area of the regions on which all the CMY components are superposed is smaller than the total area of the first dots, a dot pattern printed in the partial regions is defined as the first dots. When the total area of the regions on which all the CMY components are superposed is larger than the total area of the second dots, a dot pattern printed in the partial regions is defined as the second dots. When the total area of the regions on which all the CMY components are superposed is larger than the total area of the first dots and smaller than the total area of the second dots, dots the sizes of which are set such that the total area of dots of a dot pattern printed in the partial regions is equal to the total area of the regions on which all the CMY components are superposed are used.

In this case, when the total area of the regions on which all the CMY components are superposed is smaller than the total area of the first dots or larger than the total area of the second dots, the sizes of dot intervals are controlled within a predetermined range to be made larger than the total area of the first dots and smaller than the total area of the second dots so as to obtain dots the sizes of which are set such that the total area of the dots of the dot pattern printed in the partial regions is equal to the total area of the regions on which all the CMY components are superposed.

However, the sizes of the dots must be set within a range in which the dots can be recognized by an optical reading means.

Although each of the predetermined regions 1021 in Figure 7 is square, an arbitrary shape may be used as a matter of course.

Figures 8A, 8B, 9A, and 9B are diagrams showing a concrete example of the predetermined regions 1021 in Figure 7.

In Figure 8A, the shape of the each of the predetermined regions 1021 is made square according to the same arrangement rule as the RGB on a liquid crystal display providing a brilliant image by view mix. In Figure 8B, the shape of each of the predetermined regions 1021 is made hexagonal such that the same colors are not adjacent to each other at boundaries. In Figures 8A and 8B, the shape of each of the predetermined regions 1021 are made triangle such that the same colors are not adjacent to each other at boundaries.

In this manner, as the shapes of the predetermined regions 1021, various shapes can be employed. As shown in Figure 9, even though the predetermined regions 1021 have the same shapes, the shapes of pixels of the C, M, and Y components can be arbitrarily set.

A step in which, at a proper position for recognizing a printed matter with human's eyes or a predetermined position, component division and mapping are performed to appropriately generate view mix in which the C, M, and Y components divisionally printed by in a predetermined printed region or the C, M, and Y components and dots are mixed to exhibit a predetermined color is called a view mix step. View point positions change depending on applications, sizes, shapes, and the like of printed matters or target graphics. In a relatively small printed medium such as a post card, when the printed medium is viewed at a distance of 20 to 40 cm, the view mix is generated. In a large printed medium such as a poster, a predetermined printed region is defined to generate view mix at a distance of 1 m or longer. More specifically, a view point position may be roughly defined in advance to determine a proper predetermined region.

On the other hand, even though a camera is brought close to a medium or photographs the medium at a distance, image data recorded in a frame buffer (temporary storage medium in which photographing image data is recorded) of an information processing device need only have a resolution at which an arrangement of an original dot pattern 101 can be appropriately recognized. Light is irradiated on a printed surface by some light source (natural light, synthetic light, or indirect light) to obtain reflected lights having components, and the reflected lights are imaged by the camera. For this reason, since composite black is not generated by synthesizing the lights, the dot pattern 101 can be photographed independently of the image region 102. More specifically, even though the resolution of the camera is low, reflected lights from a medium surface are mixed by the color (white if a white sheet of paper) of the medium surface on which the CMY components and an ink are not applied, and imaged on the element of the camera. Unlike a case in which inks are mixed with each other to change the colors blackish (composite black), a large number of lights are mixed with each other in a unit area to increase the brightness, and the dot pattern 101 can be photographed independently of the image region 102.

More specifically, the inventor of this application develops a print technique that can coexist with a superposing print of a dot pattern and a dot pattern reading technique by visible light by using a vision of color by human's eye that cannot recognize a dot and a vision of color at a visual check position and a photographing position of a camera that can recognize a dot.

Another embodiment of the present invention will be described below.

As shown in Figures 10A to 10C, when a graphic is expressed by CMY components in the halftone dot printing, as shown in Figure 10A, the C, M, and Y components are arranged and printed. As the shape of the halftone dot, a circle or another shape may be employed. Normal dots are black and arranged as shown in Figure 10B. However, when the dots are printed to be superposed on a graphic, the dots are printed as shown in Figure 10C.

As shown in Figures 11A to 11C, when printing is performed by halftone dots, as shown in Figure 11A, inks are mixed with each other in a region in which the C, M, and Y components are superposed, and the region becomes dark-brown approximate to black. When only the C, M, and Y components are removed from the imaged image in Figure 11A by image processing, as shown in Figure 11B, an image that is dark-brown approximate to black in the region in which the C, M, and Y components are superposed is obtained. When an image is printed to be superposed on black dots, an image as shown in Figure 11C is obtained. Only dots are difficult to be binarized and extracted from the image. The printed region in which inks are mixed with each other and that is blackish-brown approximate to black may have halftone values of the C, M, and Y components obtained when the region is sufficiently smaller than the size of dot (the area of an image-pickup image is at least about 1/4 or less) and can be discriminated from the dot. The graphic need only be expressed such that the halftone dot values (diameters of dots) of the C, M, and Y components that are at least about 1/2 or less the size (diameter) of the dot and each of the halftone dot values is less than 50%. When each of the halftone dot values is less than 50%, a region in which the inks are mixed with each other and that is darkish-brown approximate to black has an area that is at least about 1/4 or less the size (area) of the dot, and the dot can be discriminated.

As shown in Figures 12A and 12B, in halftone dot printing, when a graphic is expressed with the CMYK components to superpose and print dots, as shown in Figure 12A, the C, M, Y, and K are arranged, and dots are superposed and printed in black. When only the C, M, and Y components are removed from the image-pickup image shown in Figure 12A by image processing, as shown in Figure 12B, an image that is blackish-brown approximate to the black color of a region in which the C, M, and Y components are superposed and a black image of the K component are obtained, and only dots are difficult to be binarized and extracted from the images. The printed blackish-brown region that is black obtained by mixing the inks and the black region of the K component need only have halftone dot values of the C, M, Y, and K components obtained when the regions have sizes that are sufficiently smaller than the size of dot (the area of the image-pickup image is at least about 1/4 or less) and can be discriminated from the dot.

As shown in Figure 13A to 13C, in halftone dot printing, a graphic is expressed with only the C component to superpose and print dots, as shown in Figure 13A, the C component is arranged, and dots are superposed and printed in black. Although only the black color of the dots are extracted by image processing, when the C component is large, in simple image processing, the graphics may be determined to have the same color as that of the dots. When the simple image processing is used, a C component value to be used is desirably a predetermined value or less. Similarly, cases in which dots are printed with only the M component and only the Y component are shown in Figures 13A and 13C, respectively. However, when only the Y component is used even in the simple image processing, even though the Y component is large, the dots are easily discriminated.

As shown in Figures 14A to 14C, in halftone dot printing, a graphic is expressed with only the C and M components to superpose and print dots, as shown in Figure 14A, the C and M components are arranged, and dots are superposed and printed in black. Only the black color of the dots are extracted by image processing. By the method of image processing to be used, the values of the C and M components are desirably restricted in discrimination of dots. Similarly, cases in which printing is performed by only the M and Y components or only the C and Y components are shown in Figures 14B and 14C. By the method of image processing to be used, component values of the components are desirably restricted in discrimination of dots.

Figure 15 is a diagram including partial regions obtained by three different components and a region (CMY region) on which the three components are superposed. Figure 16A is an enlarged diagram of the CMY region in Figure 15 and partial regions around the CMY region. Figure 16B is a diagram in which dots are binarized and only the C, M, and Y components are removed by image processing. In the CMY region, the dots cannot be discriminated. Near a boundary between the CMY regions, when printing is performed such that the C, M, and Y components are prevented from being superposed not to mix the inks, the dots cannot be discriminated in regions except for the CMY regions. When the size of a region (composite black) in which the C, M, and Y components are superposed and inks are mixed with each other in the CMY regions is sufficiently smaller than the size of dot, the dot can be discriminated by comparative calculation.

However, when the dots are superposed on the composite black, the centers of the dots are misaligned from their original positions. When the misalignment is large, a lot of attention is required because an arrangement of a dot pattern obtained by encoding an information code may not be able to be appropriately recognized. In the image processing, on the basis of not only the sizes of the dots but also the shapes of the dots, the composite black need only be excluded to appropriately calculate the centers of the dots, as a matter of course.

<Printing system>

A printing system for an image with dot pattern using the present invention will be described with reference to Figure 17.

In a server 105, an illustration or a photograph serving as a template is stored as image data.

The image data is designed in advance to include one partial region or two or more partial regions printed with one component selected from the C component, the M component, the Y component, the CM component, the MY component, and the CY component and not to include a part on which all the CMY components are superposed, or subjected to image processing by the conversion method described above.

A customer operates a customer terminal 106 to browse a catalogue on which an illustration or a photograph are placed.

The customer selects one illustration or one photograph on the catalogue and operates the customer terminal 106 to transmit a selection result to a server 105 so as to generate an order. An illustration or a photograph prepared by the customer herself/himself may be transmitted from the customer terminal 106 to the server 105.

The server 105 transmits the order received from the customer terminal 106 to a provider terminal 107.

A service provider operates the provider terminal 107 to add the dot pattern 101 to image data selected by a customer to generate image data with dot pattern and provides the image data with dot pattern to a printing device 108. In this case, image data selected by the customer from the catalogue may be data that is divided into partial regions having the C component, the M component, the Y component, the CM component, the MY component, and the CY component in advance to make it possible to discriminate dots, or may be converted into an image with the server 105. The image data with dot pattern subjected to image conversion is transmitted to the printing device 108 and printed. Depending on the printing device 108, the K component may be automatically added by color patterns of the components. A driver for controlling the K component is built in the printing device 108, or a signal from a server must be transmitted and controlled. The 108 has an image conversion function, and the region of an original illustration or photograph is divided into partial regions having the C component, the M component, the Y component, the CM component, the MY component, and the CY component of the CMY components. A dot pattern is printed with the K component to be superposed on the partial regions, and the printed medium 103 serving as an image with dot pattern in which dots can be discriminated may be output. As the image conversion, any method that is presented by the present invention and can discriminate dots may be used.

In printing, in a dot pattern printed in the partial region, a total area of first dots each having the minimum size at which a dot can be recognized and second dots each having the maximum size may be compared with a total area of partial regions in which all the CMY components are superposed.

In this case, when the total area of the areas in which all the CMY components are superposed is smaller than the total area of the first dots, a dot pattern printed in the partial regions is defined as the first dots. When the total area of the regions in which all the CMY components are superposed is larger than the total area of the second dots, a dot pattern printed in the partial regions is defined as the second dots. When the total area of the regions in which all the CMY components are superposed is larger than the total area of the first dots and smaller than the total area of the second dots, dots having sizes at which the total area of dots of a dot pattern printed in the partial regions is equal to the total area of regions in which all the CMY components are superposed.

When the total area of the regions in which all the CMY components are superposed is smaller than the total area of the first dots or larger than the total area of the second dots, the sizes of dot intervals of a dot pattern are controlled within a predetermined range, so that the total area of the regions in which all the CMY components is made larger than the total area of the first dots and smaller than the total area of the second dot. Dots having sizes at which the total area of dots of a dot pattern printed in the partial regions is equal to the total area of the regions in which all the CMY components are superposed may be used.

Furthermore, conversion is performed such that the halftone dot value of the CMY components is reduced such that the size of the region in which all the CMY components of image information can be recognized in comparison with the size of dots configuring a dot pattern. The total area of the first dots and the second dots may be compared with a total area corresponding to a difference of the halftone dot value reduced to the halftone dot value of the CMY components.

In this case, when the total area of the difference of the halftone dot value reduced to the halftone dot value of the CMY components is smaller than the total area of the first dots, the dot pattern in the region on which all the CMY components are superposed is defined as the first dots. When the total area of the difference of the halftone dot value reduced to the halftone dot value of the CMY components is larger than the total area of the second dots, the dot pattern in the region in which all the CMY components are superposed is defined as the second dots. When the total area of the difference of the halftone dot value reduced to the halftone dot value of the CMY components is larger than the total area of the first dot and smaller than the total area of the second dots, dots the sizes of which are set such that the total area of the dots of the dot pattern in the region in which all the CMY components are superposed is equal to the total area of the difference of the halftone dot value reduced to the halftone dot value of the CMY components may be used.

When the total area of the difference of the halftone dot value reduced to the halftone dot value of the CMY component is smaller than the total area of the first dots or larger than the total area of the second dots, dot intervals of the dot pattern are controlled within a predetermined range and made larger than the total area of the first dots and smaller than the total area of the second dots, and dots the sizes of which are such that the total area of the dots of the dot pattern in the region in which all the CMY components are superposed is equal to the total area of the difference of the halftone dot value reduced to the halftone dot value of the CMY components.

In the past, a dot pattern is printed by using an ink that can be read by only infrared. For this reason, a camera of a mobile phone or the like using a filter that shields infrared to inhibit photographing by infrared cannot read a dot code, and the dot pattern must be read by using a dedicated scanner.

In the present invention, a dot pattern that can be read with visible light is achieved. For this reason, a dot pattern can be read with a normal camera such as a mobile phone, a smart phone, a web camera, or a digital camera. In this manner, a dot code can be easily and popularly used.

<Embodiment using lens unit>

Figures 18 to 38 are diagrams for explaining cases in each of which a dot pattern that can be read with visible light by using a lens unit 200 for reading a dot pattern and that is obtained by encoding code information is photographs.

The lens unit 200 for reading a dot pattern used in the embodiment is supposed to be mounted on an information processing device such as a smart phone, a tablet personal computer, or a mobile phone with camera (to be referred to as a "smart phone or the like" hereinafter) and used therein. The code information includes a code value or coordinate values or a code value and coordinate values.

However, any information processing device including a reading means that reads a dot pattern obtained by encoding information code from image data photographed with a camera through the lens unit 200 and decodes the pattern into an information code and an information processing means that transmits the information code or outputs information corresponding to the information code can be mounted on a camera and used therein. The lens unit 200 includes a cylindrical lens holder 201 having a lower opening portion mounted to surround a photographing opening of the camera and an upper opening portion being in surface contact with a printed medium and a lens 202. When a dot pattern is photographed with the camera through the lens unit 200, the lens 202 is arranged and designed to be located at a predetermined position in the cylindrical lens holder 201 such that the printed medium on which a dot pattern being in surface contact with the upper opening portion is printed ranges within a depth of field.

On the other hand, a filter that shields an infrared wavelength including some visible light having a wavelength of about 700 is mounted to prevent an object such as a person from being photographed on the assumption that a consumer uses a smart phone or the like.

When photographing is performed with a camera of a smart phone or the like, the camera is not designed in many cases such that the camera is brought close to (about 1 to 2 cm) a minimum object and is focused on the object to perform enlargement photographing. For this reason, the camera must photograph the object at a predetermined distance. For this reason, even though a two-dimensional code such as a QR code is photographed with a smart phone or the like, the object is difficult to be instantaneously focused on due to blurring or the like, and a magnification is also low. Furthermore, when the camera is to be focused on a dot by an automatic focus system, the dot is so minimum in comparison with a two-dimensional code such as a QR code having a relatively large pattern that the mounted automatic focus system does not operate not to focus on the object in many cases. If the dot pattern is focused on and photographed, the dot pattern cannot be read at a precision at which a dot code can be analyzed from the minimum dots due to the limit of a depth of filed. Thus, a camera of a smart phone is disadvantageously difficult to read a minimum dot pattern.

However, the lens unit 200 is used to make it possible to focus on a contact surface between the lens unit 200 and the printed medium and to enlargement-photograph a dot pattern of an object, and the dot pattern can be imported at a resolution at which the dot code can be analyzed. For this reason, a dot pattern can be read with a normal smart phone or the like. Note that the length unit 200 having a large depth of field is used to make it possible to import a dot pattern even though the lens unit 200 is not in surface contact with a printed medium surface. Furthermore, when a telescopic lens having a large depth of field is used, a printed medium with dot pattern located at a remote position is photographed to import a dot pattern.

Figures 18 to 19C are diagrams of the lens unit 200 used in the embodiment. Figure 18 is a perspective view, Figure 19A is a side view, Figure 19B is a front view (medium contact surface contact side), and Figure 19C is a rear view (lens unit 200 mounting side).

The lens unit 200 has a structure including a tapered upper part and a lower columnar part. Near the boundary between the upper part and the lower part, the lens 202 (convex lens) is arranged. An adhesive member is arranged on a bottom surface to make it possible to mount a smart phone or the like. In an outer peripheral wall (D) on the mounting side of the lens unit 200, the lens unit 200 is attached to surround a camera of a smart phone or the like. The structure of the lens unit 200 may have any shape such as a cylindrical shape, a conical shape, or a box-like shape as long as the lens unit 200 surrounds a camera of a smart phone or the like in the outer peripheral wall (D) on the mounting side. At least one of the upper opening portion and the lower opening portion may have a tapered shape. Although not shown, as the lens, not only one convex lens but also a plurality of lenses or an aspheric lens may be used. In this manner, an aberration can be suppressed, a depth of field is increased to easily focus on, and the lens can also be reduced in height. A material of the lens unit 200 including the lens holder 201 and the lens 202 is desirably transparent to make a medium surface to be photographed bright.

However, since the lens holder 201 is used to secure external light, the lens holder 201 need not necessarily transparent when an amount of light enough to photograph a dot pattern of an object can be secured (translucent or the like).

As the material of the lens 202, transparent acrylic manufactured at low cost is desirably used. However, glass may be used to improve precision. Furthermore, the lens holder 201 may be made of transparent acrylic, and the lens 202 may be made of glass. When all the parts are made of acrylic, if the lens holder is tapered toward the opening, the lens and the lens holder can be integrally molded and manufactured at low cost.

Figure 20 is a diagram for explaining various modes of the lens unit 200.

In the lens unit 200, the opening portion (lower opening portion) on the lower bottom surface is mounted on a camera, and the opening portion (upper opening portion) at the upper end is in surface contact with a medium surface.

In a mobile phone or a smart phone, the size of the portion in the outer peripheral wall is required to be enough to cover the camera (diameter of about 1.5 cm). In a table personal computer, the size may be a diameter of 3 to 7 mm. On the other hand, the upper opening may have various sizes as shown in Figures 20A to 20C.

Figure 20A shows the lens unit 200 formed to be saucer-shaped. The upper part of the drawing is a front view (medium contact surface side), the middle part of the drawing is a side view, and the lower part of the drawing is a rear view (lens mounting side).

When the lens unit 200 is saucer-shaped, the upper opening portion, i.e., an area on the medium side is large. For this reason, as will be described below, the lens unit is suitably used such that a card or a figure is loaded. Unless a camera of a smart phone or the like is located at the center in the outer peripheral wall (D) of the lower opening portion on the mounting side of the lens unit 200, a photographing range is misaligned, and a dot pattern printed on the medium surface is not photographed in regions except for some region of the upper opening portion (W).

Figure 20B shows the lens unit 200 formed to have a columnar shape. The upper part of the drawing is a front view (medium contact surface side), the middle part of the drawing is a side view, and the lower part of the drawing is a rear view (lens mounting side). A mold for manufacturing the lens unit can be easily manufactured to obtain high cost performance.

Figure 20C shows the lens unit 200 formed to have a conical shape. The upper part of the drawing is a front view (medium contact surface side), the middle part of the drawing is a side view, and the lower part of the drawing is a rear view (lens mounting side).

When the lens unit is a conical shape, the upper opening portion, i.e., an area on the medium side is narrow. For this reason, the lens unit is suitably used to reliably photograph an entire region of a printed medium on which a dot pattern, which is seen from the inside of the upper opening portion, is printed. More specifically, the lens unit 200 is designed such that, even though a camera of a smart phone or the like is located at any position in the outer peripheral wall (D) of the lower opening portion on the mounting side of the lens unit 200, the dot pattern printed on the medium surface can be reliably photographed in all the regions of the upper opening portion (W). Such design is caused by an attaching position of a lens and a focal length of the lens. The structures in Figures 20A and 20B are not manufactured easily more than the structure in Figure 20C, but can be actually manufactured. As a matter of course, when the upper opening portion is increased to increase a photographing region, a slightly wide-angle lens must be used.

In each of all the modes in Figures 20A, 20B, and 20C, a pedestal indicated by a dotted line is arranged near the upper opening portion of the lens unit 200 to make it easy to load a figure or a card.

In this manner, depending on applications, the various reading lens units 200 can be selectively used.

In Figure 21, on the upper opening portions on the medium contact surface sides of the lens units 200 in Figures 20A to 20C, lens covers 203 each having an opening are arranged.

The lens cover 203 is arranged, a printed region is arranged near the inside of the outer peripheral wall on the medium contact surface side, and an ID code or a pattern to make it easily to focus on is printed. A print surface is preferably on the medium contact surface side of the lens cover 203 close to the medium. However, the print surface may be on the lens 202 side within a depth of field not to stain the print surface. An opening is formed in the center of the lens cover 203 to prevent the lens cover 203 from being stained or scratched by dust so as to prevent a dot pattern printed on the medium surface from being difficult to be read, and has a ring-like shape.

In Figure 22, transparent lens covers 204 are arranged on the upper opening portions on the medium contact surface sides of the lens units 200 shown in Figures 20A to 20C. A printed region is arranged near the inside of the outer peripheral wall on the medium contact surface side, and an ID code or a pattern to make it easily to focus on is printed. Although a print surface is preferably on the medium contact surface side of the transparent lens cover 204 close to the medium, the print surface may be arranged on the lens side within the depth of field to prevent the print surface from being stained. Furthermore, the lens cover 204 also effectively servers as a dust-proof unit to prevent dust from adhering to the lens 202. Note that the transparent lens cover 204 is arranged at a portion stepped down from an outer peripheral frame on the medium contact surface side of the lens unit 200 on the lens side to prevent the transparent lens cover 204 from being stained or scratched by dust so as to prevent a dot pattern printed on the medium surface from being difficult to be read.

Figures 23A to 23C are diagrams in each of which an ID code is added on the medium contact surface side of the lens unit 200. Figures 23A to 23C are diagrams in each of which a notch is formed in the inner wall on the medium contact surface side of the lens holder 201. The notch is formed according to a predetermined rule to add an ID code.

The ID code is code information to specify the lens unit 200. By encoding the code information on the ID code, the lens unit 200 by which photographing is performed can be identified when a user photographs a dot pattern with a camera. Software for reading a dot pattern stored in a smart phone or the like is not activated when the IC code cannot be recognized. When the ID code is recognized, the read dot pattern is analyzed. In this manner, prevention of falsification and unauthorized use of the lens unit 200, quality certification of a photographed image (photographed with predetermined performance), execution of software corresponding to the ID code, and the like can be achieved. The notch has an arbitrary shape such as a half circle or a polygon and an arbitrary size. When a combination between the shape and the size is added to the predetermined rule described above, an ID code in which the number of information codes is increased can be encoded.

Figure 23D shows a circle pattern in which the lens cover 203 is mounted on the medium contact surface side of the lens unit 200, dots are arranged at predetermined intervals near the upper opening portion in a rotating direction, and a code is defined by a combination between the arrangement intervals and an order. Furthermore, although not shown, when a stream dot pattern devised by the present inventor is arranged in the rotating direction and used, a larger amount of information can be used as an ID. Note that the details of a stream dot pattern are disclosed in International publication WO2011/007783. The lens cover 203 must have a color and a material that can discriminate a dot or a graphic printed on a medium from a circle pattern. As a matter of course, predetermined brightness and predetermined contrast are required to photograph a circle pattern. A region in which the circle pattern is printed is desirably creamy-white acrylic or white (may be printed). The circle pattern need not be circular dots, and the circle pattern may be a circle pattern that is formed by polygonal dots or a plurality of marks such as line segments each having an arbitrary shape and an arbitrary size and on which a combination between the shape and the size of the mark is added to the predetermined rule to encode an ID code. Furthermore, when a plurality of colors are used in marks and combined to each other, the amount of information of the ID code can be further increased.

Figures 24A to 24D is a diagram in which the lens cover 203 or the transparent lens cover 204 are mounted on the medium contact surface side of the lens unit 200, and a pattern to focus on by an automatic focus system is printed. When dots are photographed with a camera of a mobile phone or a smart phone, the camera cannot easily focus on the dots because the dots are minimum, and cannot accurately photograph a dot pattern. Thus, a pattern to focus on is added to the lens cover 203 or the transparent lens cover 204 mounted on the lens unit 200. When the dots are photographed while the pattern is focused on, the dot pattern can be focused on and photographed. As a matter of course, a combination between a camera and the lens 202 that focus on within a depth of field together with the printed medium in which the printed medium contact surface side of the lens cover 204 or the lens side surface is in surface contact with the upper opening portion is required, and the lens 202 must be appropriately arranged. Analysis of a dot code targets a dot pattern photographed through the central opening of the lens cover 203 or a dot pattern photographed at the central portion on which neither the pattern of the transparent lens cover 204 nor the ID code are printed. The lens cover 203 must be a color and made of a material such that, when an ID code is printed, dots and the ID code can be discriminated from each other. In particular, in order to photograph the dot pattern with a camera to read the ID code, the ID code requires predetermined brightness and predetermined contrast, and a region in which the ID code is printed is desirably creamy-white acrylic or white (may be printed).

Figures 24A and 24C show the lens cover 203 in which the opening is formed, and Figures 24B and 24D show the transparent lens cover 204 in which no opening is formed.

In Figure 24A, a notch is formed in the inner periphery of the opening, and a coaxial pattern is formed on the outer periphery of the opening. As described above, the notch is to encode an information code as an ID code.

In Figure 24B, only a cylindrical pattern is formed on the outer periphery. When the cylindrical pattern is used to encode an information code into an ID code, for example, by a combination between a color forming the pattern and a size of the region and an order, the information code may be encoded into the ID code. As the pattern, any pattern may be used as long as the pattern is focused on. However, even though the dot pattern and the graphics are overlapped and imaged through the lens cover 203 or the transparent lens cover 204, the dot pattern or the graphic must be recognized as the ID code.

In Figures 24C and 24D, a circle pattern is formed on an inner periphery according to a predetermined rule, and a coaxial pattern is formed on the outer periphery thereof. As described above, the circle pattern is used to encode an ID code. The lens cover 203 in Figure 24C is desirably made of creamy-white acrylic and the transparent lens cover 204 in Figure 24D preferably has a region in which an ID code is printed and that has a white underlayer (may be printed) such that a dot pattern and a graphic printed on a medium are superposed and imaged through the lens cover 203 or the transparent lens cover 204 to make it possible to read a circle pattern. However, the transparent lens cover 204 is more preferably made of creamy-white acrylic. This is because, when the transparent lens cover 204 is white, an optical transmittance becomes low, and a printed region of a pattern or a printed medium surface is slightly darker than that when the creamy-white acrylic is used. When a photographing surface is bright as much as possible, the dot pattern can be easily focused on, and dots and a graphic can be easily discriminated from each other. In addition, when the lens cover is made of acrylic, the cover can be molded simultaneously with a transparent part by multi-injection, and cost performance can be obtained. An ink may be poured in molding to draw a pattern on acrylic. In a camera in which a focusing function operates on an entire surface, since the center is focused on even though the periphery is focused on, a pattern can be arranged on the outer periphery of the lens cover 203 and the transparent lens cover 204 as described above.

Figure 25 is a diagram in which a pattern printed with a transparent ink to focus on is formed at the central portion of the transparent lens cover 204 arranged on the lens unit 200 for a camera that operates a focusing function at the central portion. When a medium on which a dot pattern is printed to be superposed on a graphic is read, the dot pattern is read through the transparent lens cover 204, and the dots, the graphic, and the pattern to focus on are photographed to overlap each other. Thus, only the dots must be extracted from the image on which the dots, the graphic, and the pattern overlap. For example, when the pattern is red (R), when the graphic is cyan (C), the cyan emits blue (B) and green (G), and there is no red (R) component. For this reason, on the photographed image, the red (R) pattern becomes black (B), and if the dots are black (B), the dots cannot be discriminated. On the other hand, when the pattern is cyan (C), when the graphic is blue (B), the photographed image is blue (B). When the graphic is green (G), the photographed image is green (G). When the graphic is yellow (Y), the photographed image is green (G). When the graphic is magenta (M), the photographed image is blue (B). When the graphic is cyan (C) or white (W), the photographed image is cyan (C). Only when the graphic is red (R), the photographed image is black (B). In this case, when the dots are black (B), the dots cannot be discriminated.

Thus, a pattern for focusing on is drawn in cyan (C) to print the dots in black (B), red (R) should not be used for the graphic. More specifically, the colors of the pattern for focusing on and the graphic must be determined not to be the same color as that of the dots. When only the dots are always printed, the pattern for focusing on and the dots need only be discriminated from each other. When the dots are always printed to be superposed on the graphic, an automatic focusing system is operated with the graphic to focus on, a pattern for focusing on is not required. More specifically, the pattern for focusing on is required when only dots are printed and when the dots are printed to be superposed on the graphic. As a color used in the pattern, yellow does not become dark black even though blue is used in the graphic because yellow has a low color temperature is preferably used.

In Figure 25A, a coaxial pattern is formed at a central portion, and a circle pattern is formed around the coaxial pattern. In the transparent lens cover 204, although an underlayer of a region on which the circle pattern is printed may be white (may be printed), the lens cover is desirably made of creamy-white acrylic. This is because an optical transmittance decreases when the underlay is white, and a printed region of the pattern and the printed medium surface are slightly darker than those in the creamy-white acrylic. When the photographing surface is bright as much as possible, the photographing surface is easily focused on, and the dots and the graphic are easily discriminated from each other. When the lens cover is made of acrylic, the lens cover can be molded simultaneously with the transparent portion to obtain high cost performance. Note that an ink is poured in molding to draw a pattern on the acrylic.

Figure 25B is a diagram in which a coaxial pattern is formed at a central portion and a notch is formed in an inner wall on the medium contact surface side of the lens holder 201. This notch is formed according to a predetermined rule, and an ID code is encoded.

In Figure 25C, only a coaxial pattern is formed at a central portion. When the coaxial pattern is used to encode an information code into an ID code, for example, by a combination between a color forming the pattern and a size of the region and an order, the information code may be encoded into the ID code. As the pattern, any pattern may be used as long as the pattern is focused on. However, even though the dot pattern and the graphics are overlapped and imaged through the transparent lens cover 204, the pattern or the graphic must be recognized as the ID code.

The circle patterns and the patterns explained in Figures 23 to 25 may be not only printed but also engraved. The engraved portion can be read because the portion has light and shadow. However, since the engraved portion has low contrast, the engraved portion has a low recognition rate. In mass-production, engraved marks can be manufactured at low cost.

Figures 26A to 26C are diagrams for explaining the lens unit 200 with irradiation function.

Although the structure of the lens unit 200 is the same as that in Figure 20, a light source 205 and a battery 206 (button-shaped battery or the like) are arranged at a predetermined position on the outer peripheral wall of the lens holder such that light is almost uniformly irradiated on the printed medium being in surface contact with the upper opening portion. As the light source, an LED having a small size and a low power consumption is desirably used. Since the LED is inexpensive like the lens unit 200, a power supply switch may not be arranged for the LED to make the LED disposable. A battery housing case may have any shape, arranged on a side surface of the lens holder 201, or may be formed independently of the lens holder 201 and the battery 206 by extending a conducting wire.

Figure 26A shows the lens unit 200 formed to have a bowl-like shape. The upper part of the drawing is a front view, the middle part of the drawing is a side view, and the lower part of the drawing is a rear view.

Figure 26B shows the lens unit 200 formed to have a columnar shape. The upper part of the drawing is a front view, the middle part of the drawing is a side view, and the lower part of the drawing is a rear view.

Figure 26C shows the lens unit 200 formed to have a conical shape. The upper part of the drawing is a front view, the middle part of the drawing is a side view, and the lower part of the drawing is a rear view.

In Figures 26A to 26C, the number of light sources 205 is one. However, in the present invention, the number of light sources is not limited to one, the two light sources 205 may be used, and the three or more light sources may be used to uniform irradiate light on the printed medium surface. In particular, when a diffuser 209 shown in Figure 29 is arranged or when a diffusion-emitting type LED is used as the light sources 205, since light can be uniformly irradiated on the printed medium surface by refracting and diffusing the light, only one light source 205 may be used.

Figures 27A to 27B are diagrams for explaining another embodiment of the lens unit 200 with irradiation function.

Figure 27A shows the lens unit with irradiation function on which a power supply button 207 is not arranged. As described above, when an LED is used as the light source 205, a very small power consumption can be achieved, and the lens unit 200 is inexpensive. For this reason, the LED can be made disposable without arranging a power supply switch.

Figure 27B is a lens unit with irradiation function in which the battery 206 is arranged outside the lens holder 201. The lens unit 200 and the battery 206 are connected to each other with a conducting wire. According to this, since a space for housing the battery 206 need not be formed in the lens holder 201, the lens holder 201 can be simply manufactured.

Figure 28 is a diagram in which the lens cover 204 is arranged in a lens unit with irradiation function. The application of the lens cover 204 is the same as that in Figure 22. The lens cover 203 having an opening formed therein may be arranged. The application in this case is the same as that in Figure 23.

Figures 29A to 29C are diagrams showing modes of the lens unit with irradiation function. The light source 205 is desirably arranged to uniformly irradiate light on the medium surface. The diffuser 209 formed by a member that causes light irradiated from the light source 205 is refracted, diffused, and reflected by the lens holder 201 near the light source so as to uniformly irradiate the light on the printed medium surface being in surface contact with the upper opening portion, or a diffusion-emitting type LED may be used as the light source 205.

In Figure 29A, the lens unit with irradiation function, a white LED 208 is used as the light source 205. When the medium surface is so dark that dots cannot be recognized, the medium surface is irradiated with the 208 to make the medium surface bright to make it possible to read a dot code. In this manner, (1) even though a peripheral environment is dark, (2) even though the lens holder 201 has a lightproof color and is made of a material that does not transmit light, and (3) even though the lens unit 200 is built in an object such as a figure, the dot code can be read. When a program for reading a dot code is activated by the lens unit 200, the display of a smart phone or the like becomes white and bright to irradiate light on the medium surface.

Figure 29B is obtained by arranging the transparent lens cover 204 in Figure 29A. A printed region is formed near the inside of the outer peripheral wall on the lens side, and an ID code and a pattern for focusing on is printed. As in Figure 25, a pattern may be printed at a central portion in a transparent color.

In Figure 29C, in the lens unit with irradiation function, the transparent lens cover 204 is arranged, and an IR LED 210 having a predetermined wavelength is used as the light source 205. In the transparent lens cover 204, a printed region is formed near the inside of the outer peripheral wall on the lens 202 side, and an ID code or a pattern for focusing on is printed. On the medium contact surface side of the transparent lens cover 204, an IR filter 211 that transmits only an infrared ray having a predetermined wavelength or more and shield light having another wavelength is arranged. Unless the ID code or the pattern for focusing on is arranged, the IR filter 211 may be located at any position between the transparent lens cover 204 and the mounting side of the lens unit 200. A filter may be manufactured on the surface of the lens 202.

When the IR LED 210 irradiates light on the medium surface on which a dot pattern is printed to be superposed on the graphic, a dot is printed with an ink (carbon black or the like) absorbing infrared to photograph only a dot portion in black in an image-pickup image of a camera. Thus, a dot code can be easily read. A lens unit with IR LED irradiating function in Figure 29 is used when an infrared-shielding filter is used in a smart phone or the like or when an infrared ray is not completely shielded even though the infrared-shielding filter is used.

In Figures 29A to 29C, although the number of light sources 205 is two, the number of light sources 205 is not limited to 2. When the high-performance diffuser 209 is arranged or when the diffusion-emitting type LED is used as the light source 205, light is refracted and diffused to make it possible to uniformly irradiate light on the printed medium surface. For this reason, the number of light sources 205 may be one.

Figure 30 is a diagram for explaining a relationship between the wavelengths and the transmittances of the white LED 208, a filter of a camera built in a mobile phone or a smart phone, an infrared filter, and an IR LED.

An infrared-shielding filter is arranged in a camera of a smart phone or the like. On the other hand, in the lens unit with irradiation function shown in Figures 26 and Figure 29C, an IR filter 211 (visible-light-shielding filter) is arranged. The infrared-shielding filter cuts a wavelength of 700 nm or more. On the other hand, the IR filter cuts a wavelength of about 700 nm or less. When a strong infrared ray having a wavelength of about 850 nm is irradiated by the IR LED, by using an infrared ray that is transmitted by about 5%, even a camera of a smart phone or the like can read a dot pattern printed with an ink absorbing infrared.

Figure 31 includes a front view and a side view showing a state in which the lens unit 200 is attached to a camera of a tablet personal computer 212.

In this manner, the lens unit 200 can be attached/detached by an adhesive member (not shown) applied to a contact surface of the lens unit 200 and the tablet personal computer 212. As a matter of course, the lens unit 200 may be completely bonded to prevent the lens unit 200 from being removed, or may be integrally molded together with the tablet personal computer 212.

Figure 31 explains an example in which the lens unit 200 is attached to the camera of the tablet personal computer 212. However, the lens unit may be attached to the camera part of a smart phone 222, as a matter of course.

Figures 32A to 33C are diagrams for explaining modes and attaching methods of the lens unit 200.

In the lens unit 200 in Figure 32A, an adhesive member is arranged on the lower opening portion on the bottom surface. The lens unit can be directly attached to the camera part of the tablet personal computer 212 or the smart phone 222 and can be attached and detached. As a matter of course, the lens unit 200 is completely bonded to the tablet personal computer 212 or the smart phone 222 to prevent the lens unit 200 from being removed, or the lens unit 200 may be integrally molded together with the tablet personal computer 212 or the smart phone 222.

In Figure 32B, a clip 213 and the lens unit 200 are integrated with each other. A part of the clip 213 being in contact with the bottom of the lens unit 200 has an opening for photographing a printed medium surface, or is transparent. A user clips the camera part of the tablet personal computer 212 or the smart phone 222 with the clip to make it easy to attach or remove the lens unit 200. In comparison with the adhesive member the adhesive force of which is deteriorated in use, a durability becomes considerably long.

In Figure 32C, the lens unit with irradiation function described in Figure 26 or the like and the clip 213 are integrated with each other. In the clip 213, a power supply cable (including, a USB cable, an earphone, a cable with dedicated mobile phone connector, and the like) is arranged. When the clip 213 is attached, the connector of the cable is inserted into the connector of the tablet personal computer 212 or the smart phone 222. In this manner, the lens unit can receive an electric power supplied from the tablet personal computer 212 or the smart phone 222. As in the lens unit with irradiation function being free from the clip, a power supply can be achieved by the power supply cable.

Figures 33A to 33C are diagram for explaining examples in each of which a cartridge-like case 221 and the lens unit 200 are integrated with each other. This case is used in the smart phone 222 or a mobile phone. A part of the case 221 being in contact with the bottom of the lens unit 200 has an opening for photographing a printed medium surface, or is transparent. When a user fits the case in the smart phone 222 or the mobile phone such that the lens unit 200 is located on the rear side (opposite side of a display) of the smart phone 222, the lens unit 200 can be easily attached or removed. In comparison with the adhesive member, the adhesive force of which is deteriorated in use, a durability becomes considerably long. Furthermore, when a mounting position of the lens unit 200 is fixed, the lens unit 200 can be accurately attached without positioning each time the lens unit is attached.

Figure 33B is a diagram for explaining a state in which the lens unit with irradiation function and the case 221 are integrated with each other. In this case, the battery 206 and a switch are arranged on the case 221. As shown in Figure 32C, a power supply cable may be arranged.

Figure 33C is a diagram for explaining a lens unit with irradiation function that receives a power supply from the smart phone 222 or a mobile phone. According to this, since a power supply need not be arranged on the case 222, the case 222 can be easily manufactured at low cost. As shown in Figure 32C, a power supply cable may be arranged. As shown in Figure 33A, the lens unit may be also used as a mobile phone protecting case to mount an LED-less lens unit.

Figures 34A and 34B are diagrams showing an embodiment in which a dot pattern printed on a card 214 is read with the lens unit 200 attached to the camera of a tablet personal computer.

Figure 34A is a diagram for explaining a case in which a dot pattern is drawn on one entire surface of the card 214. A user brings the surface of the card 214 on which the dot pattern is drawn into surface contact with the lens unit 200. The dot pattern printed on the card 214 is enlargement-photographed with the lens 202.

When a user place the card 214 on the lens unit 200, an output or an operation instruction of contents corresponding to read code information is executed. Furthermore, when the placed card 214 is rotated, by a rotation angle between a direction of the dot pattern and an angle (upward direction of camera) of the camera, information to be output can be changed. For example, when the card 214 is placed in a direction at an angle of 30° with reference to the camera, voice "hello" is output from a loudspeaker (not shown). In this state, when the card 214 is rotated and placed in a direction at an angle of 90 ° voice "goodbye" is output. As a matter of course, corresponding video contents may be displayed on the display. Furthermore, the read code information may be transmitted to a dot code management server through the internet or a mobile phone network to browse or download corresponding contents, or the tablet personal computer may be controlled by an operation instruction corresponding to the code information. The same is also applied to a case in which a smart phone is used.

When the code information is defined while being added with an X-Y coordinate, depending on a specific part of the card 214 placed on the lens unit 200, information output in accordance with input X-Y coordinate values can be changed. At the same time, information corresponding to the rotation angle may be used as a selecting condition.

When a lens unit with irradiation function using the white LED 208 as the light source 205 is used, code information can be reliably read even in an environment in which the dot pattern cannot be read at the periphery. Furthermore, the lens unit with irradiation function using the IR LED 210 as the light source 205 is used to photograph a printed medium on which dots are printed with an ink (carbon black) absorbing infrared, only the dot portion is photographed in black in the image-pickup image, and the dot code can be easily read. The lens unit with IR LED irradiation function is used when an infrared-shielding filter is not used in the smart phone or the like or when an infrared ray is not completely shielded even though the infrared-shielding filter is used.

Figure 34B is a diagram for explaining a case in which a guard 215 is arranged on one surface of the card 214 and a dot pattern is printed in only the guard 215. The guard 215 is structured to be fitted on a dot pattern reading lens. When a user fits the guard 215 in the dot pattern reading lens, the dot pattern printed on the card 214 is enlargement-photographed with the lens 202.

When a user rotates the card 214 after fitting the guard 215 in the lens unit 200, information to be input/output can be changed. In Figure 34A, when the card 214 is rotated, the card 214 cannot be correctly rotated because the card 214 is misaligned. When the guard 215 is arranged as shown in Figure 34B, the problem is solved, and the card 214 can be rotated without being misaligned to make it easy to perform an operation desired by the user. Furthermore, even a visually-impaired person can confirm the guard 215 and easily operate the lens unit. A technique that changes input/output information by reading the dot pattern described in Figures 34A and 34B is described in Japanese Patent No. 4465016. A visually-impaired person can recognize that the dot pattern is formed on the printed medium by the guard and can easily operate the lens unit.

Figures 35A and 35 are diagram for explaining an embodiment for reading a dot pattern formed on a figure 216.

Figure 35A is a diagram in which the figure 216 is placed on a dot pattern reading lens attached to a camera of a tablet personal computer. A dot pattern is printed on the bottom of the figure 216, and the camera reads the dot pattern on the bottom of the figure 216 to decode information.

The figure 216 is rotated on the lens unit 200 to make it possible to change information to be input/output. For example, when the figure 216 is placed, voice "hello" is output from a loudspeaker. When the figure 216 is rotated at an angle of 90°, voice "goodbye" is output.

Figure 35B is a diagram in which the figure 216 and a dot pattern reading lens are integrated with each other. The figure 216 has the lens unit 200 attached to a lower part of a pedestal. A dot pattern is formed on a rear side of the pedestal. When the figure 216 is placed on the camera of the tablet personal computer 212, the camera reads a dot code formed on the figure 216 through the lens of the 216.

When the figure 216 is rotated on the camera, as in Figure 35A, information to be input/output can be changed.

The technique that changes output information with rotation of the figure 216 as shown in Figures 35A and 35B is described in Japanese Patent No. 4465016.

With respect to information processing for the operation and the read code information and the case in which the white LED 208 or the IR LED 210 is used as the light source 205, all the operations and the processing as those in Figure 34 can be achieved.

Figure 36 is a diagram for explaining the figure 216 in which the lens unit 200 with white LED irradiation function is built.

In a pedestal of the figure 216, the lens unit 200, the white LED 208, and the battery 206 are built. When a user places the figure 216 on a camera of a smart phone or the like, the camera reads a dot code formed on the figure 216 through the lens unit 200 of the figure 216. Even though the lens unit 200 is built in the figure 216 to shield external light, the white LED 208 irradiates light on the printed medium surface to make it possible to read the dot code. Furthermore, the battery 206 of the white LED 208 is desirably built in the figure, and the power supply button 207 is desirably arranged at an obscure position. Although not shown, a sensor type power supply switch activated when the figure is lifted up or touched with something may be used.

With respect to information processing for the operation and the read code information and the case in which the white LED 208 or the IR LED 210 is used as the light source 205, all the operations and the processing as those in Figure 34 can be achieved.

Figures 37 to 38 are diagrams showing embodiments in each of which a dot pattern printed on the card 214 is read by the lens unit 200 attached to the camera of the smart phone 222. Figure 37 shows a state before the card 214 is brought into surface contact with the lens unit 200, and Figure 38 shows a state in which the card 214 is in surface contact with the lens unit 200.

In this case, a user fixes the card 214, holds the smart phone 222 in her/his hand, and touches a part of the card 214 to read the dot pattern.

As shown in Figure 38, the dot pattern photographed by using the lens unit 200 may be directly displayed on the display of the smart phone 222 or the tablet personal computer 212. As a matter of course, contents corresponding to the read dot code may be displayed. When a user holds the smart phone 222 in her/his hand to read the dot pattern on the card 214, outputting of contents corresponding to the read code information or an operation instruction is executed. Furthermore, when the smart phone 222 is rotated, information to be output can be changed by a rotation angle between a direction of the dot pattern and an angle (upward direction of camera) of the camera. When an X-Y coordinate is additionally defined in the code information, depending on a specific part on the card 214 photographed on the lens unit 200, information output in accordance with input X-Y coordinate values can be changed. At the same time, information corresponding to the rotation angle may be used as a selecting condition.

With respect to information processing for the operation and the read code information and the case in which the white LED 208 or the IR LED 210 is used as the light source 205, all the operations and the processing as those in Figure 34 can be achieved.

<Circle pattern>

Figures 39 to 50 show the concepts and the actual examples of circle patterns obtained by encoding an ID code. These circle patterns are obtained by encoding the ID code according to adjacent marks printed or engraved on a circumference of a circle, the circumference of an ellipse, or the circumference of a predetermined closed curved line (to be referred to "on a circumference or the like" hereinafter), peripheral lengths having a plurality of lengths on the circumference or the like between the marks, a combination between the adjacent marks and direct distances (to be referred to as "inter-mark distances") of the plurality of distances of the marks, and/or arrangements thereof.

Figures 39A to 39C is a diagram showing a concrete example of a circle pattern 300. Figure 39A shows a circular circle pattern, Figure 39B shows an elliptical circle pattern, and Figure 39C shows a circle pattern having another closed-curve shape.

In this manner, the circle pattern 300 can be formed by arranging marks 301 on an arbitrary closed curved line.

Figures 40A to 40C are diagrams showing other modes of the circle pattern. Figure 40A to 40C are diagrams in each of which one mark 301 is arranged at the center of figure of a closed curved line. Figure 40A shows a case in which the circle pattern is a circular circle pattern, Figure 40B shows a case in which the circle pattern is an elliptical circle pattern, and Figure 40C shows a case in which the circle pattern is a circle pattern having another closed-curved shape.

In this manner, by arranging the mark 301 at the center of figure, when the circle pattern 300 photographed with the camera is image-analyzed with a CPU, the region of the circle pattern 300 can be easily determined.

A position where the mark 301 is arranged may be not only the center of figure of a closed curved line but also the center of the closed curved line. In addition, the number of marks 300 arranged at the center of figure or the center, although not shown, is not limited to on, and a plurality of marks 300 may be used. When parameters such as the shape, the size, and the like of the curved line are not defined in advance, the pieces of information are given to the marks in the closed curved line to make it possible to specify the closed curved line and decode a use code. In the elliptical shape, the two marks 300 are given to make it possible to specify an ellipse and easily decode a code. In order to discriminate the marks 300 from the marks 300 on the circumference, the sizes, shapes, and colors of the marks 300 are desirably changed.

Figures 41 to 50 are diagrams for explaining still another embodiment.

Figure 41 and later show cases in each of which a circle pattern is circular. However, each of the embodiments is applied to circle patterns having an elliptical shape and another arbitrary closed curved shape, as a matter of course.

Figure 41 is a diagram for explaining the circle pattern 300 in which a start mark 302 and an encoding mark (information dot 303) are arranged as marks.

As shown in Figures 41A to 41I, the start mark 302 for determining a start point for encoding is arranged on a predetermined circumference, and the information dots 303 are clockwise arranged as encoding marks, and an ID code is encoded by a combination in which predetermined intervals between the adjacent marks are clockwise arranged from the start mark 302. The encoding may be counterclockwise performed, as a matter of course. The predetermined intervals between the marks are defined as inter-information-dot peripheral lengths having a plurality of peripheral lengths on circumferences between the adjacent marks or inter-information-dot distances. An index of the combination may be any one of an inter-information-dot peripheral length 304 and an inter-information-dot distance 305.

Figure 41A shows that the start mark 302 is a mark having a shape larger than that of the information dot 303, Figure 41B shows that the start mark 302 is a mark having a shape different from that of the information dot 303, Figure 41C shows that the start mark 302 is a mark obtained by arranging two marks each having the same shape as that of the information dot 303, Figure 41D shows that the start mark 302 is a mark having the same shape as that of the information dot 303 and identified in color, Figure 41E shows that the start mark 302 is a mark obtained by arranging marks each having the same shape as that of the information dot 303 while being out of alignment in an outer circumferential direction, and Figure 41F shows that the start mark 302 is a mark obtained by arranging two marks each having the same shape as that of the information dot 303 in an outer circumferential direction. In any case, the start mark 302 is formed with a reading means of an information processing device such that the start mark can be discriminated from an information dot. In Figures 41C and 41F, the three or more start marks 302 may be formed to be aligned. In Figure 41E, the start marks 302 may be arranged while being out of alignment in an inner circumferential direction.

Figures 41G to 41I show examples in each of which the two circle patterns 300 having concentric circles having different diameters are formed. More specifically, similar circles having different sizes are coaxially arranged and formed. In this manner, a large amount of information can be defined. As a matter of course, the plurality of circle patterns 300 may be formed to further increase the amount of information. In Figure 41G, all the information dots 303 have the same shapes, and, on the outer circumferential circle pattern 300, dots each having a size different from that of the information dot 303 is defined as the start mark 302. At the inside position, the information dots 303 are arranged as the inner circumferential start marks 302. In Figure 41H, in order to easily discriminate the outer circumference from the inner circumference, the information dots 303 on the outer circumference and the inner circumference are made different from each other in size, and the start marks 302 have shapes different from those of the information dots 303. Also in Figure 41I, in order to easily discriminate the outer circumference from the inner circumference, the information dots 303 on the outer circumference and the inner circumference are made different from each other in size, and the start marks 302 are marks having shapes different from those of the information dots 303.

In the embodiments in Figures 41G to 41I, as described above, when the circle pattern 300 is circular, the centers of similar circles having different sizes are matched with each other to include the small circle in the large circle. However, when the circle pattern 300 has an elliptical shape or an arbitrary closed curved shape, the centers of figure of similar ellipses having different sizes or closed curved lines are matched with each other, and the small ellipse or the small closed curved line are included in the large ellipse or the large closed curved line.

Figures 42A to 42C show examples in each of which a total of three marks including the start mark 302 and the two information dots 303 are arranged. The information dots 303 are arranged such that intervals between the marks are intervals of one to three types. When three coordinate values on the circumference are calculated, a central position and a radius are calculated to easily calculate intervals between the marks.

In Figure 42A, intervals of three types are formed to arrange the information dots 303, and combinations of the shortest interval given by (1) (corresponding to circled number 1 in Figure 42A and so forth), the second shortest interval given by (2), and the longest interval given by (3) are obtained. Combinations of six types clockwise arranged from the start mark are given.

In Figure 42B, intervals of two types are formed to arrange the information dots 303, and combinations of the shortest intervals given by (1) and the second shortest interval given by (2) is obtained. Combinations of six types clockwise arranged from the start mark 302 are given. In this manner, any one of the intervals (1) and (2) may be equal intervals.

In Figure 42C, intervals of one type are formed to arrange the information dots 303, and a combination of the intervals given by (1) is obtained. As a matter of course, the combination is of only one type. In Figures 42A to 42C, a total number of combinations is 13, and 13 ID codes can be encoded. When the ID codes are formed by two circle patterns, 13 x 13 = 169 ID codes can be encoded.

In Figure 42, although a total of three marks are arranged, when N is 4, the number of codes that can be encoded as ID codes is given by the following numerical expression:

[Numerical expression 1]

$$\left(\sum_{i=1}^{\left[\frac{n}{2}\right]}\sum_{j=0}^{\left[\frac{n-3}{i}\right]}(2+j)\prod_{k=0}^{j}{}_{n-ik}c_i\right)+n!+1-{}_nc_{\frac{n}{2}}\,(n=4)$$

When N is 3 or 5,
by [Numerical expression 2],

$$\left(\sum_{i=1}^{\left[\frac{n}{2}\right]}\sum_{j=0}^{\left[\frac{n-3}{i}\right]}(2+j)\prod_{k=0}^{j}{}_{n-ik}c_i\right)+n!+1(n=3,5)$$

the number of codes can be calculated.

Thus, when four marks are used, the number of codes becomes 75. In this case, when the marks 301 are arranged such that the three marks 301 and the four marks 301 are included in the circle pattern 300, 13 + 75 = 88 ID codes can be encoded. When the 5 marks 301 are used, 541 ID codes can be encoded. When the 6 marks 301 are used, 4683 ID codes can be encoded. When the 10 marks 301, 22174447 codes can be encoded.

Figure 43 is a table in which code values are allocated to the combinations in which the three marks 301 shown in Figure 42 are arranged. An arbitrary code value can be allocated to the combination.

Figure 44A to 44C are diagrams for explaining a circle pattern obtained by encoding one code by including the plurality of marks 301.

In this embodiment, the L to M marks 301 subsequent to the circle pattern 300 can be arranged. At this time, the circle patterns 300 of M - L + 1 types are given.

For example, Figure 44A shows a case in which the three marks 301 are arranged, Figure 44B shows a case in which the four marks 301 are arranged, and Figure 44C shows a case in which the five marks 301 are arranged. More specifically, L = 3 and M = 5. Thus, the types of the circle patterns 300 are 5 - 3 + 1 = 3 types.

In each of the three types, by the combinations described in Figures 42 and 43, the ID codes can be encoded. As described above, in Figure 44A, the three marks 301 are present, 13 ID code can be encoded. In Figure 44B, the four marks 301 are present, 88 ID code can be encoded. In Figure 44C, the five marks 301 are present, 541 ID codes can be encoded. Thus, when the circle pattern 300 includes the three to five marks 301, 13 + 75 + 541 = 629 ID codes can be encoded.

In this manner, when the different numbers of marks 301 can be arranged, the circle pattern 300 can encode a larger number of ID codes.

In Figures 45A to 45D, only the four information dots 303 are arranged without arranging the start mark 302, and the information dots 303 are arranged such that intervals between the information dots 303 are intervals of 1 to 4 types, and a code is encoded by only a combination of a plurality of inter-information-dot circumference or a plurality of inter-information-dot distances. According to this, since the start mark 302 is not arranged, although an amount of information is small, the pattern can be formed by only the information dots each having the same shape to achieve good looking. Furthermore, since the start marks 302 and the information dots 303 need not be discriminated by a reading means of an information processing device, the ID codes can be easily decoded. The ID codes may be encoded clockwise or counterclockwise, as a matter of course.

In Figure 45A, intervals of four types are formed to arrange the information dots 303, and combinations in which the shortest interval is given by (1), the second shortest interval is given by (2), the third shortest interval is given by (3), the longest interval is given by (4) are obtained. Combinations of six types in the clockwise direction are given.

Figure 45B intervals of three types are formed to arrange the information dots 303, and combinations in which the shortest interval is given by (1), the second shortest interval is given by (2), and the longest interval is given by (3) are obtained. Combinations of nine types in the clockwise direction are given. In this manner, one or two of the (1) to (3) may be the same intervals.

In Figure 45C, intervals of two types are formed to arrange the information dots 303, and combinations in which the shortest interval is given by (1) and the second shortest interval is given by (2) are obtained. Combinations of four types arranged from the start mark 302 in the clockwise direction are given. In this manner, one of the (1) and (2) may be the same intervals.

In Figure 45D, intervals of one type are formed to arrange the information dots 303, a combination in which the intervals are given by (1), and a combination of only one type is given as a matter of course. In Figures 45A to 45D, the combinations of 20 types are given, and 20 ID codes can be encoded. When the combinations are formed by the two circle patterns 300, 20 x 20 = 400 ID codes can be encoded. Even though the start mark 302 is not formed, when a reference direction is determined in advance (for example, as in Figures 45A to 45D, an upward direction), as in Figures 42 to 43, ID codes can be encoded by the permutations and combinations.

Figure 46 is a table in which code values are allocated to combinations obtained when the four marks shown in Figures 45A to 45D are arranged. The code value may be arbitrarily allocated to the cases of the combinations.

Figure 47 is a diagram for explaining an embodiment in which the same two or more circle patterns 300 are arranged.

In this manner, the plurality of circle patterns 300 may be arranged. In this manner, the circle patterns 300 are continuously arranged on a medium such as a printed matter having a predetermined area to make it possible to output the same information by reading any portion of the medium.

The circle may be more reduced in diameter to arrange circle patterns at smaller intervals.

Figures 48 to 50 are diagrams for explaining an embodiment in which one code is encoded by the plurality of circle patterns 300.

In this embodiment, one data block is configured by the plurality of (9 in the drawings) circle patterns 300 arranged at different positions. One data block encodes one code.

Figure 48 is a diagram for explaining a method of defining a region of the data block.

In the circle pattern 300 of the embodiment, the same data block can be repeatedly printed on a printed matter or the like two more times. In this case, unless the region of one data block can be recognized, a CPU cannot correctly analyze the circle pattern 300 and cannot execute processing corresponding to a code. Thus, the regions of data blocks must be defined.

Figure 48A is a diagram in which the start mark 302 of the predetermined circle pattern 300 is made different from the start marks 302 of the other circle patterns 300. In Figure 48A, only the upper left circle pattern 300 has the start mark 302 having a size different from that of the information dot 303, and the other circle patterns 300 have the start marks 302 having shapes different from the information dots 303. In this manner, with reference to the circle pattern 300 having the different start mark 302, the regions of data blocks can be recognized.

Figure 48B is a diagram in which the shape of the mark 301 of the predetermined circle pattern 300 is made different from the shapes of the marks 301 of the other circle patterns 300. In Figure 48B, only the upper left circle pattern 300 has the triangle mark 301 arranged therein, and the circular mark 301 is arranged in each of the other circle patterns 300. In this manner, with reference to the circle pattern 300 in which the triangle mark 301 is arranged, the regions of data blocks can be recognized.

Figure 48C is a diagram in which a method of arranging the predetermined circle patterns 300 is made different from a method of arranging the other predetermined circle patterns 300. In Figure 48C, only the upper left circle pattern 300 has the circular start mark 302 and the triangle information dot 303, and each of the other circle patterns 300 has the triangle start mark 302 and the circular information dot 303. In this manner, with reference to the circle pattern 300 having the circular start mark 302 and the triangle information dot 303, the regions of data blocks can be recognized.

The regions of data blocks can be defined by not only the methods in Figures 48A to 48C but also various methods.

Figures 49A to 49C are diagrams for explaining methods of defining directions of data blocks.

Even through the same circle pattern 300 is used, by defining a specific direction as a normal state, i.e., by selecting a reference for recognizing the circle pattern 300, analysis results of the CPU and results of processing to be executed change. Thus, in order to recognize a reference direction for forming the circle pattern 300, a direction of a data block must be defined.

Figure 49A is a diagram in which a direction of a data block is defined depending on the position of the start mark 302. In this drawing, the start mark 302 is located on the left. In this manner, it can be recognized that the data block is left-pointing.

Figure 49B is a diagram in which a direction of a data block is defined by a method of arranging the marks 301. In this case, the position of the circle pattern 300 having a combination of specific mark intervals is defined as a direction of a data block. The specific combination is not used in the circle pattern 300 except for the circle pattern 300 in which a direction of a data block is defined. For example, in Figure 49B, in only the upper left circle pattern 300, the marks 301 are arranged to have combinations of (1), (2), (3), and (4) (corresponding to circled numbers in Figure 49B, respectively). The combinations of (1), (2), (3), and (4) are not used in another circle pattern. In this manner, it can be recognized that the data block faces upward. Although not shown, only the upper left circle pattern 300 may be formed by using the four marks 301, and each of the other circle patterns 300 may be formed by using the marks 301 the number of which is not four.

Figure 49C is a diagram in which only the specific circle pattern 300 has the start mark 302 to define a direction of a data block. In Figure 49C, in only the upper left circle pattern 300, the start mark 302 is arranged in an upper part. Each of the other circle patterns 300 does not have the start mark 302 arranged therein. In this manner, it can be recognized that the data block faces upward. According to this, since the direction of the data block is defined by the upper left circle pattern 300, a code can be encoded without arranging the start mark 302 in another circle pattern. Thus, an algorithm for generating a data block can be simplified.

Figure 50 is a diagram for explaining an embodiment in which 3 x 3 circle patterns of data blocks are continuously arranged.

The data blocks are continuously arranged to the upper, lower, left, and right sides. Thus, when the data blocks are read with a camera, one data block must be read. When the same data blocks are adjacent to each other, as indicated by a chain line in Figure 50, the 3 x 3 circle patterns 300 the number of which is equal to the number of data blocks arranged around the center read with the camera need only be read. However, a specific position at which each of the circle patterns 300 is arranged must be recognized. More specifically, as shown in Figure 49, a means for defining a region of a data block is required. In Figure 49, only the start mark 302 of the upper left circle pattern 300 has a size different from the size of each of the start marks 302 of the other circle patterns 300. In this manner, the region and the direction of the data block are defined. When a mark + in Figure 50 is a center of a region to be read with the camera, the peripheral 3 x 3 circle patterns necessarily includes the circle pattern 300 having only the start mark 302 having a different side. In this manner, the region and the direction can be recognized, the codes of the 3 x 3 circle patterns are decoded according to a predetermined order to make it possible to read one code.

When the many information dots 303 are arranged on one circumference, the amount of information of the circle pattern 300 can be increased. However, when the number of information dots 303 increases, the intervals of the information dots 303 become small, looking is deteriorated, and the information dots 303 are connected to each other depending on printing accuracy or reading accuracy. As a result, disadvantageously, a code cannot be accurately read and analyzed. Thus, as described above, when the circle patterns 300 the numbers of which are different from each other are arranged to encode the code, the amount of information of the circle patterns 300 serving as data blocks can be increased while solving the above problem.

The marks 301 of the circle pattern 300 may be formed by not only printing or engraving but also notching. More specifically, the marks are shown in Figures 23A to 23C.

In this manner, also when notches are formed, the circle patterns 300 described in Figures 39 to 50 can be achieved.

A conventional two-dimensional code such as a dot pattern is suitably arranged on a straight line or a rectangular plane. However, the two-dimensional code is difficult to be arranged on a circular or torus-shaped medium. In the circle pattern 300 according to the present invention, marks can be easily arranged on a circle, an ellipse, and an irregular closed curved shape to make it possible to form a two-dimensional code. Thus, the circle pattern 300 can be used as an ID code to identify the lens cover 203 used in the lens unit 200 according to the present invention. Furthermore, the circle pattern 300 can be used as a two-dimensional code for a circular or torus-shaped medium. The circle pattern 300 can accurately decode a code even though the circle pattern 300 is arranged on a curved surface because the code is encoded by comparing distances between the marks 301. The circle pattern 300 can also be arranged on a curved surface on which a conventional two-dimensional code is difficult to be arranged. Furthermore, even though a dot pattern (circle pattern 300) is largely deformed by reading the dot pattern with an inclined optical reading means, the code can be accurately decoded for the above reason.

<Other embodiments of lens unit>

Figures 51 to 58 explain other embodiments of the lens unit 200.

The lens unit 200 described later is not limited to the embodiments (will be described below). The following lens unit 200 can be executed in combination with all the embodiments (will be described below), as a matter of course.

(ID code and clip)

In the above embodiments, when a printed ID code 401 is used, the ID code 401 is printed on the lens cover 203 or the transparent lens cover 204. However, the ID code 401 can also be formed by a method except for the above method.
Figure 51 is a diagram showing a state in which the ID code 401 is directly printed on the upper opening portion of the lens holder. In Figure 51, although the circle pattern 300 is directly printed as the ID code 401, another ID code 401 may be printed, as a matter of course.
The ID code 401 may be printed on a sticker, and the sticker may be stuck on the upper opening portion of the lens holder 201.
An ID code may be fitted between the lens cover 201 and the lens 202 or screwed therebetween.
Figures 52A to 53B are diagrams for explaining a lens unit with clip in which the lens cover 203 that can clip a medium on which the ID code 401 is printed.
The clip 213 is a modification of the clip explained in Figure 32B. More specifically, the clip 213 to clip the camera portion of the tablet personal computer 212 or the smart phone 222 is arranged integrally with the lens unit 200. The structure of the clip 213 will be described later.
Figure 52A is a perspective view of a lens unit with clip, and Figure 52B is a front view. The lens unit 200 includes the lens cover 203, the lens holder 201, and the clip 213. The lens cover 203 and the lens holder 201 can be separated from each other. As shown in Figures 52B, an ID medium 402 serving as a medium on which the ID code 401 is printed is clipped between the lens cover 203 and the upper part of the lens holder 201.
In the lens holder 201, a transparent region that is an opening 403 is formed or a transparent sheet such as a film is arranged at the center to secure a region required to photograph an object.
With the above structure, the lens unit 200 having the ID code 401 can be easily manufactured. A manufacturer collects the lens unit 200 that is unnecessary for a user, removes the ID medium 402 that had been used, and clips a new ID medium 402 to make it possible to provide the lens unit 200 to another user. For this reason, a lens unit manufactured in consideration of global environment and economical efficiency can be achieved.
Figures 52A and 52B show an example of the lens unit 200 in which the lens cover 203 that can clip an ID medium. This mode need not be always used, as a matter of course. For example, a mode being free from the clip 213 may be used.
Figure 53 is a diagram for explaining the ID medium 402 used in the lens holder 201 in Figures 52A and 52B.
The ID medium 402 is a circular medium on which the ID code 401 is printed. The center of the medium has an opening to secure a region required to photograph an object. The ID code 401 is printed on the periphery of the opening. Figure 53A shows the ID medium 402 on which the circle pattern 300 serving as the ID code 401 is printed. Figure 53B shows the ID medium 402 on which a focusing pattern 404 for focusing on with an automatic focusing system and the circle pattern 300 are printed.
The focusing pattern 404 is preferably printed with an ink that transmits an infrared ray and visible light. In this manner, since the focusing pattern 404 is not photographed with a camera, the camera can photograph only the necessary ID code 401 and the dot pattern of an object.
At the center of the medium, in place of the opening 403, a transparent region in which a transparent sheet such as a film is arranged may be used. The transparent sheet is arranged to make it possible to prevent the lens 202 from being stained.
The ID medium 402 may be integrally molded together with the lens holder 201.

(Adjuster and antislip)

Figures 54A to 56 are diagrams for explaining an adjuster 406 and an antislip 407.

(Adjuster)

An adjuster is a device to adjust a height and a length. The adjuster 406 according to the present invention is arranged to adjust the height of the lens unit 200.
Figure 54 shows the lens unit 200 being free from a clip, and Figures 55A to 56 show the lens units 200 each having a clip. Figure 57 is a perspective view showing the structure of the adjuster 406.
As shown in Figure 57, the adjuster 406 has a cylindrical structure having the opening 403 at the center. A plurality of grooves are formed in the inner wall of the adjuster 406. On the other hand, a groove is also formed in the lens holder 201 so as to be fitted on the adjuster 406.

As shown in Figure 54A, the lens unit 200 is configured by a lens-integrated lens holder 405 and the adjuster 406. Figure 54B shows a most popular embodiment that includes the ID medium 402, the lens cover 203, the lens-integrated lens holder 405, a screw-like stopper 408, the adjuster 406, and the antislip 407. On the upper part of the lens-integrated lens holder 405, the screw-like stopper 408 (screw cap) fixed and mounted. On the other hand, the adjuster 406 is mounted on the lower part of the lens-integrated lens holder 405.

Figure 55A is a perspective view of the lens unit with clip 200 having the adjuster 406 and the antislip 407, and Fig,. 55B is a front view of the lens unit with clip 200. Figures 56A and 56B are diagrams for explaining a case in which height adjustment is performed by the adjuster 406 in the lens unit 200 with clip.

The main body of the lens holder 201 has the same basic structure as that of the lens unit 200 in Figure 54. The clip 213 is arranged between the screw-like stopper 408 and the adjuster 406. When the distance between the camera and the lens 202 is small, as shown in Figure 56A, the adjuster 406 is moved downward. When the distance is large, as shown in Figure 56B, the adjuster 406 is moved upward. A difference between the distance obtained when the adjuster 406 is maximally moved upward and the distance obtained when the adjuster 406 is maximally moved downward is about 2 centimeters.

Optimum focuses of cameras arranged on the smart phone 222 and the like may change depending on the types of the cameras. In this case, optimum distances between the lenses and the cameras are different from each other. Thus, in some of the structures of the lens units 200, an accurate in-focus state cannot be obtained, and photographing cannot be optimally performed. On the other hand, different lens units 200 cannot be manufactured for different machine types, respectively, to obtain accurate in-focus states without increasing the cost.

Furthermore, a user frequently uses the smart phone 222 or the like with a cover (protective cover). Since covers, i.e., products of different types have different thicknesses, respectively, in some of the covers to be used, an accurate in-focus state cannot be achieved, and optimum photographing cannot be performed.

The adjuster 406 according to the present invention is to solve the above problem. More specifically, when the adjuster 406 is arranged as described above, in any camera, or by using any cover, a distance from the lens 202 to the camera can be optimally adjusted, and an object can be accurately photographed.

In photographing an object, the object is photographed while bring the upper opening portion of the lens unit 200 into surface contact with the object, and the object can be photographed with a predetermined distance between the lens unit 200 and the object. The surface contact or distances between the lens unit 200 and objects are determined by the sizes or the like of dot patterns of the objects.

The center of the adjuster 406 may be a transparent region in which a transparent sheet or the like is formed in place of the opening 403. When the transparent sheet or the like is arranged to make it possible to prevent the lens 202 from being stained.

The structure of the adjuster 406 is not limited to the structure described above, and may be formed integrally with the lens holder 201. Any structure may be used as long as the structure can correctly adjust a distance between the lens 202 and the camera, as a matter of course.

(Antislip)

The antislip 407 will be described below.

The antislip has a torus-shape structure having the opening 403 at the center, and is arranged at the lower part of the lens holder 201. In this embodiment, the antislip is fitted on the lower part of the adjuster 406. The antislip is made of a viscous material such as rubber.

The surface of the smart phone 222 is made of a smooth material, the lens unit 200 cannot be mounted on the smart phone 222 without being slipped out of the smart phone 222. Even though the lens unit 200 is fixed with the clip 213 or the like not to be slipped out, the lens unit 200 slightly shakes, and an object may not accurately focused. The antislip is arranged to make it possible to prevent the lens unit 200 from being slipped out of the smart phone 222 or the like or being shaken.

The antislip 407 may be arranged by not only fitted on the lower part of the adjuster 406 as in the present invention but also stuck on or screwed in the adjuster 406. The antislip 407 may be arranged by being directly stuck on, fitted on, or screwed in the lower part of the lens unit 200. The antislip 407 may be arranged by being mounted between the adjuster 406 and the lens holder 201. Furthermore, the adjuster 406 and the antislip 407 may be integrally molded.

(Clip)

The clip 213 described above will be described below with reference to Figures 58A and 58B.

One end of the clip 213 is attached to the lens holder 201, and the other end is formed to clip a rear side on the side on which the camera is arranged.

The clip 213 includes an arm 410 and a stopper. The stopper is to attach the lens holder 201, and is arranged on one end of the arm 410. As the stopper, a ring-like stopper 409 shown in Figure 58A or a U-shaped stopper 411 shown in Figure 58B is used. In the ring-like stopper 409, when the lens holder 201 is to be removed, a ring is removed first, and the clip 213 must be removed, so that the convenience is deteriorated. However, the ring-like stopper 409 has high strength advantageously. On the other hand, although the U-shaped stopper 411 disadvantageously has low strength, the lens holder 201 can be easily removed to advantageously achieve convenience.

The other end of the arm 410 is formed to clip a rear side of the smart phone 222 or the like.

A second stopper may be attached to the upper part of the stopper. The second stopper, as shown in Figures 54 and 55, is preferably a screw-like stopper 408. However, a stopper of another type may be used. When the second stopper is attached, the stoppers 409 and 411 of the clip 213 can be more tightly fixed.

Between the stoppers 409 and 410 and the adjuster 406 or between the stoppers 409 and 411 and the second stopper, an O ring 412 may be attached. In this manner, the adjuster 406 and the second stopper can be tightly fixed.

The clip 213 may be integrally molded together with one or two or more of the lens holder 201, the lens cover 203, and the adjuster 406.

Figures 59 and 60 are perspective views showing configurations of the lens unit 200.

As shown in Figure 59, the lens unit 200 is configured by the lens cover 203, the ID medium 402, the screw-like stopper 408, the lens-integrated lens holder 405, the adjuster 406, and the antislip 407. The clip 213 may be additionally arranged.

Figure 60 shows an example in which the O ring 412 is additionally arranged. The O ring 412 is inserted between the screw-like stopper 408 and the adjuster 406.

A screw thread is formed on the lens holder 201 to make the adjuster 406 detachable with a screw.

The lens holder 405 need not be integrally with the lens 202, and may be arranged independently of the lens 202, as a patter of course.

(Other structure)

The lens unit 200 according to the embodiment may have various structures.

Figure 61 shows a structure in which a pedestal 413 is arranged on a periphery of the outer wall of the upper opening portion of the lens-integrated lens holder 405. When the pedestal 413 is arranged to make it possible to stably place an object, and shaking in photographing can be prevented.

The pedestal may be integrally molded together with the lens holder 201, 405 or the lens cover 203. The pedestal, the lens cover 203, and the lens holder 201, 405 may be integrally molded together with each other.

In the lens unit 200, the IR filter described in Figure 29C may be arranged.

In the lens unit, the light source and the power supply as described in Figures 26 to 29 may be arranged.

(Use form)

Figures 62A to 62C are diagrams for explaining most preferable use forms of the lens unit 200 described above.

Figure 62A shows a use form of the lens unit 200 that does not have the clip 213 shown in Figure 54.

The lens unit 200 that does not have clip 213 is suitably used in the tablet personal computer 212. This is because the tablet personal computer 212 is frequently used while being placed on a desk and the lens unit 200 can be stably arranged on the tablet personal computer 212.

Figures 62B and 62C show use forms of the lens unit 200 having the clip 213 shown in Figures 52, 55.

The lens unit 200 having the clip 213 is suitably used in the smart phone 222 or a mobile phone. Since the smart phone 222 and the mobile phone is frequently used while being held in a hand, when the lens unit 200 is merely arranged, the lens unit 200 is probably misaligned or removed from the smart phone 222 or the mobile phone.

Fig 62B shows a case in which the adjuster 406 is moved downward. When the distance between the camera and the lens 202 is excessively small, an accurate in-focus state cannot be achieved, and an appropriate photographed image cannot be obtained. Thus, the adjuster 406 is moved to keep the distance between the camera and the lens appropriate.

Figure 62C shows a case in which the adjuster 406 is moved upward. In Figure 62C, a smart phone cover 414 is arranged on the smart phone 222. The camera and the smart phone have a predetermined distance therebetween in advance. For this reason, the adjuster 406 is moved upward to prevent the camera from being far from the lens 202.

In this manner, by using the adjuster, a distance H from the surface of the lens of the camera to the lower end of the lens 202 of the lens unit 200 can be kept optimum.

In this manner, the lens unit 200 according to the present invention can be used in accordance with the states of the tablet personal computer 212, the smart phone 222, and the mobile phone to achieve good flexibility and convenience.

The use form of the lens unit 200 is not limited to the use form described above, and can be variously changed depending on the preference, the status of use, and the like of users, as a matter of course.

(Photographing of region of human body)

Furthermore, the lens unit 200 according to the present invention can photograph not only a dot pattern but also a region of human body.

Regions of human body include skin, scalp, hair, a claw, an eye, and the like. Although a human body is illustrated, as a predetermined region, all the regions of not only a human being but also an animate being can be targeted. Furthermore, as the predetermined region, any object or any photographed image having a unique characteristic feature may be used. Any object may be used as long as the object can be associated with a unique ID code.

As an example, a case in which skin of a human body is photographed will be described.

In order to accurately diagnose a condition of skin, a high-definition skin image enlarged by a magnification power of about 30. In the past, accurate skin diagnosis cannot be performed without photographing by an expensive skin diagnosing device. However, the lens unit 200 according to the present invention is attached to the smart phone 222 to make it possible to easily photograph an accurate skin image. Most women the smart phones 222 with protective cases. However, an adjust function to cause the lens unit to focus on an object even though the lens unit is attached to the smart phone 222 through the case is installed to make it possible to achieve optimum photographing without removing the protective case. An ID obtained by a dot code is formed on the lens opening, and the dot code is photographed together with skin to perform skin diagnosis for an individual so as to make it possible to provide appropriate anti-aging skin care. In this case, as the photographed skin image, depending on photographing in a photographing environment, i.e., in the morning or the evening or an ambient surrounding (sunset glow, clouding, rain, snow, colors of buildings, in a green forest, or the like) or photographing under illumination or in ambient surrounding (color of wall, color, strength, and arrangement of illumination, or the like), the colors of light being incident on a lens change, so that appropriate skin diagnosis is difficult. In addition to the photographing environment, depending on the machine types of the smart phones 222, camera performances are different from each other such that images are slightly blueish, red-tinged, or whitish. Thus, in the present invention, the color of a medium itself is set to be white, and, in an image of the ID medium 402 photographed simultaneously with the photographed skin image, a manner of changing white on the ID medium 402 is image-analyzed to calculate an amount of correction of the skin image. On the basis of the amount of correction, the skin image is corrected. Light being incident on the periphery of the lens is not uniform, and the light changes depending on directions. For this reason, as shown in Figure 63, image analysis must be performed on the basis of the images of the media in 4 to 8 directions of a periphery on which at least the circle dots 300 are formed to determine amounts of correction of the skin image. Figure 63 shows a case in which light is strongly incident from the lower right. On the basis of the amounts of correction in the 4 to 8 directions, the amounts of correction in the entire area of a skin photographing region are interposed to correct the skin image. In the simplest method of calculating an amount of correction, since white includes R, G, and B components the total percentages of which are 100, when the photographed ID medium image is given by R', G', and B', the amounts of correction are given by differences $\Delta R = R - R'$, $\Delta G = G - G'$, and $\Delta B = B - B'$, and the differences $\Delta R$, $\Delta G$, and $\Delta B$ may be added to the photographed skin image. Furthermore, in order to improve the accuracy of image analysis, the white of the ID medium 402 is desirably photographed with a camera in an optimum photoenvironment for skin diagnosis, and, with reference to R, G, and B values obtained by the photographing, amounts of correction are desirably calculated. The dots of the circle dots 300 are printed in black, and amounts of correction are calculated by using the white of the photographed ID medium 402 and the black of the dots, so that the accuracy is further improved. Since black includes R, G, and B components the total percentages of which are 0, when a circle dot image on the photographed ID medium 402 is given by R", G" and B", amounts of correction $\Delta R$, $\Delta G$, and $\Delta B$ based on white and amounts of correction (photographed skin images having amounts of correction varying depending on R, G, and B levels) complemented by the amounts of correction R", G", and B" based on black may be calculated in all the ranges of the R, G, and B levels to correct the skin image. For this purpose, the dots of the ID medium 402 on the periphery of the skin photographing region must be formed at positions in the 4 to 8 directions.

The color of the ID medium may be set to black, and the color of the dots may be set to white, so that the amounts of correction may be calculated. By using the R, G, and B components without using black, amounts of correction of the colors may be calculated to correct a skin image.

In this case, in order to necessarily arrange dots at the positions in the 4 to 8 directions of the ID medium on the periphery in the skin photographing region, a second circle dot pattern (will be described below) need only be used.

As shown in Figures 64A and 64B, in a circle dot pattern, reference dots are arranged at predetermined intervals on a circular virtual closed curved line, an arrangement direction and a start point of the circle dot pattern are defined by using at least one of the reference dots as a key dot of a form that can be discriminated from another dot, on a circle (virtual closed curved line) defined by virtual reference dots, a virtual point determined on the basis of an arrangement of the reference dots is defined as the start point, and information dots are arranged at positions determined by at least one of a distance and a direction to define information. In order to discriminate the key dot from other information dots, the key dot is expressed at least one of (1) the dots are changed in size, (2) the dots are changed in shape, (3) the dots are shifted in a predetermined direction, (4) a plurality of dots are arranged, and (5) the dots are changed in color. Furthermore, the information can also be defined depending on whether a dot is arranged at the virtual point. In Figure 64A, one dot is arranged above the reference dot, and the two dots define the key dot. The information dots are arranged in four oblique directions with reference to the direction (upward) of the key dot. In Figure 64B, two dots are arranged in the normal direction of the circle while sandwiching the circle (virtual closed curved line) to define the key dot. The information dots are arranged in four oblique directions with reference to the outward direction of the normal direction of the circle. The information dots may be arranged in the horizontal and vertical directions with reference to the direction (upward direction) of the key dot. The information dots may be arranged in the horizontal and vertical directions with reference to the direction of the circle. In this case, the horizontal directions may be defined along the circle. As a matter of course, the information dots may be arranged in only the circle directions without the vertical directions. All the information dots may be arranged in an arbitrary direction, as a matter of course.

Figures 65A to 65C show pieces of numerical value information defined by an arrangement of information dots. Figure 65A shows pieces of numerical value information in four oblique directions, Figure 65B shows pieces of numerical value information four vertical directions, and Figure 65C shows pieces of numerical value information in eight directions including the four oblique directions and the four vertical directions. Although not shown, when a distance from the virtual point is changed, a larger amount of information can be defined. In order to further increase the amount of information, a plurality of circle dots that are similar to each other and are different from each other in size may be arranged about the same center point.

In skin diagnosis, skin may not be directly photographed, a keratoid checker may be stuck on the skin, and the keratoid checker that collects a horny cell layer may be photographed by using the lens unit 200. In any case, the photographed image is transmitted to an external database. A service that performs image processing and pattern recognition on the external database side to collide the data with a database of skin images and to execute skin diagnosis and returns the result to a user is considerably matched with the needs of users.

<About color correction>

Color correction of a predetermined object will be described below.

For example, when the skin of a face is photographed, the color of the skin photographed in the morning is different from the color of the skin photographed in the evening. In the evening, since the color of light becomes red, the color of skin is red-tinged. More specifically, the color of a photographed image of a predetermined object is influenced by environment light obtained by natural light, illumination, or the like.

An original color which a certain thing has is called a surface color. A change in color by light is called a rendition effect.

Since the color of the predetermined object changes by the rendition effect, the real color of the object cannot be known without adjustment. In particular, in order to photograph an object for the purposes of inspection and analysis, correction is necessary.

A concrete method of color correction will be described below with reference to Figures 66A to 66D.

Figures 66A to 66D show ID media used in color correction. An outside pattern of the ID medium is used in color correction. Inside the pattern, a circle pattern serving as an ID code is printed. The medium has an opening at the center or has a transparent region in which a transparent sheet such as a film is arranged. Although the ID medium is described, an ID code need not be always printed on the medium. In this case, a color correction medium is used.

(Case 1: In use of white)

Figure 66A shows an ID medium (color correction medium) used when color correction is performed by white.

When an object is photographed with a camera, the resultant image is photographed with R, G, and B components. When white light is irradiated on perfect white of the color correction medium, the white fully reflects all the color components. Thus, R = 100, G = 100, and B = 100. On the other hand, when the object is photographed under real environment light, even though the medium is in perfect white, R = 100, G = 100, and B = 100 are not always be obtained. When color correction is performed by using white, differences calculated by subtracting R, G, and B values obtained by photographing white from 100 may be added to R, G, and B values of pixels obtained by photographing the object.

It is assumed that, when a white part on an outer periphery of the color correction medium is photographed, for example, R = 95, G = 80, and B = 90 are obtained. Since the differences obtained in this case are given by R = 5, G = 20, and B = 10, the intensities of the color components are influenced by environment light or individual differences of cameras. In this case, when R = 5, G = 20, and B = 10 are added to each of pixel values in the entire area of an image obtained by photographing the object, the values are corrected to R = 100, G = 100, and B = 100 with respect to the white part, and perfect white is expressed. However, in this method, even though black is photographed, values of the corresponding region are always given by R = 5, B = 20, and B = 10 or more, and black cannot be correctly expressed. This means that even intermediate values between black and white are not accurately corrected.

Thus, as shown in Figure 68A, pixel values of a photographed object are given by R, G, and B, pixel values obtained after correction are given by R', G', and B', and pixel values obtained by photographing the white part of the color correction medium are given by r, g, and b. In this case, since the R' value obtained after the correction is given by R = 1 to 100, the R' value is assumed to be linearly changed with respect to an unknown number x for the sake of convenience, and

$$R' = x \ldots (1)$$

is obtained.

Furthermore, by using the r value obtained by photographing the color correction medium and the value x equal to the value (1) when the R' value is derived from the R value,

$$R = rx/100 \ldots (2)$$

is obtained.

Thus,

x = 100R/r is satisfied.

This is assigned to Equation (1), the unknown number x is eliminated to calculate the R' value.

R' = 100R/r is satisfied, and the R value obtained after the correction is calculated.

According to this calculating method, the G' and B' values are also calculated.

As described above, the above calculation is performed to each of the pixel values in the entire area of an image obtained by photographing an object to make it possible to solve the above problems. However, in the above equations, intermediate colors are merely linearly interpolated. In order to further improve the accuracy of correction, gamma correction, another correction formula, an experimental formula, or a table obtained by an experiment is preferably used.

(Case 2: In use of white and black)

Figure 66B shows an ID medium (color correction medium) used when color correction is performed in printing in white and black. Since black absorbs all the light components, even though any light is irradiated on a black part, the part does not change in color. More specifically, regardless of influences of colors of light, R = 0, G = 0, and B = 0 are obtained. For this reason, black color can be used as a reference for color correction. An influence by an individual difference between cameras is an exception.

Essentially, the values of colors are 0 to 100. However, when a black part of a color correction medium is photographed, R = 5, G = 10, and B = 0 are obtained. When a white part of the color correction medium is photographed, R = 95, G = 80, and B = 90 are obtained. In this case, pixel values of the photographed object fall within the ranges given by R = 5 to 95, G = 10 to 80, and B = 0 to 90, and the values must be corrected to obtain gradations 0 to 100.

Thus, as shown in Figure 68B, pixel values of a photographed object are given by R are given by R, G, and B, pixel values obtained after correction are given by R', G', and B', and pixel values obtained by photographing a black part of the color correction medium are given by r0, g0, and b0, and pixel values obtained by photographing a white part are given by r, g, and b. In this case, since the R' value obtained after the correction is given by R = 1 to 100, the R' value is assumed to be linearly changed with respect to the unknown number x for the sake of convenience, and

$$R' = x \ldots (1)$$

is obtained.

Furthermore, by using the r and r0 values obtained by photographing the color correction medium and the value x equal to the value (1) when the R' value is derived from the R value,

$$R = (r - r0)x/100 + r0 \ldots (2)$$

Thus,

$$((r - r0)/100) \times x = R - r0$$

$$x = 100(R - r0)/(r - r0)$$

is satisfied.
This is assigned to Equation (1), the unknown number x is eliminated to calculate the R' value.

$$R' = 100(R - r0)/(r - r0)$$

is satisfied, and the R value obtained after the correction is calculated.
According to the calculating method, the G' and B' values are also calculated. As in correction in white, in the above equations, intermediate colors are merely linearly interpolated. In order to further improve the accuracy of correction, gamma correction, another correction formula, an experimental formula, or a table obtained by an experiment is preferably used.

(Case 3: In use of red, green, and blue)

Figure 66C shows an ID medium (color correction medium) used when color correction is performed in printing in red, green, and blue.
When an object is photographed with a camera, the resultant image is photographed with R, G, and B components. When white light is irradiated on the red color, green color, and the blue color printed on the color correction medium, the colors fully reflect all the color components. Thus, R = 100, G = 100, and B = 100. On the other hand, when the object is photographed under real environment light, even though the medium is in perfect red, green, and blue, R = 100, G = 100, and B = 100 are not always be obtained. Therefore, when color correction is performed by using the R, G, and B components, differences calculated by subtracting R, G, and B values obtained by photographing the red color, the green color, and the blue color from 100 may be added to R, G, and B values of pixels obtained by photographing the object.
It is assumed that, when red, green, and blue parts on an outer periphery of the color correction medium are photographed, for example, R = 95, G = 80, and B = 90 are obtained. Since the differences obtained in this case are given by R = 5, G = 20, and B = 10, the intensities of the color components are influenced by environment light or individual differences of cameras. In this case, when R = 5, G = 20, and B = 10 are added to each of pixel values in the entire area of an image obtained by photographing the object, the values are corrected to R = 100, G = 100, and B = 100 with respect to the red, green, and blue parts, and perfect red, perfect green, and perfect blue are expressed. However, in this method, even though black is photographed, values of the corresponding region are always given by R = 5, B = 20, and B = 10 or more, and black cannot be correctly expressed. This means that even intermediate values between black and white are not accurately corrected.
Thus, as shown in Figure 68A, pixel values of a photographed object are given by R, G, and B, pixel values obtained after correction are given by R', G', and B', and pixel values obtained by photographing the red part, the green part, and the blue part of the color correction medium are given by r, g, and b. In this case, since the R' value obtained after the correction is given by R = 1 to 100, the R' value is assumed to be linearly changed with respect to the unknown number x for the sake of convenience,

$$R' = x \ldots (1)$$

is obtained.
Furthermore, by using the r value obtained by photographing the color correction medium and the value x equal to the value (1) when the R' value is derived from the R value,

$$R = rx/100 \ldots (2)$$

is obtained.
Thus,
x = 100R/r is satisfied.
This is assigned to Equation (1), the unknown number x is eliminated to calculate the R' value.
R' = 100R/r is satisfied, and the R value obtained after the correction is calculated.

According to this calculating method, the G' and B' values are also calculated.

As described above, the above calculation is performed to each of the pixel values in the entire area of an image obtained by photographing an object to make it possible to solve the above problems. However, in the above equations, intermediate colors are merely linearly interpolated. In order to further improve the accuracy of correction, gamma correction, another correction formula, an experimental formula, or a table obtained by an experiment is preferably used.

(Case 4: In use of red, green, blue, and black)

Figure 66D shows an ID medium (color correction medium) used when color correction is performed in printing in red, green, blue, and black. Since black absorbs all the light components, even though any light is irradiated on a black part, the part does not change in color. More specifically, regardless of influences of colors of light, R = 0, G = 0, and B = 0 are obtained. For this reason, black color can be used as a reference for color correction. An influence by an individual difference between cameras is an exception.

Essentially, the values of colors are 0 to 100. However, when a black part of a color correction medium is photographed, R = 5, G = 10, and B = 0 are obtained. When a red part, a green part, and a blue part of the color correction medium are photographed, R = 95, G = 80, and B = 90 are obtained. In this case, pixel values of the photographed object fall within the ranges given by R = 5 to 95, G = 10 to 80, and B = 0 to 90, and the values must be corrected to obtain gradations 0 to 100.

Thus, as shown in Figure 68B, pixel values of a photographed object are given by R are given by R, G, and B, pixel values obtained after correction are given by R', G', and B', and pixel values obtained by photographing a black part of the color correction medium are given by r0, g0, and b0, and pixel values obtained by photographing the red part, the green part, and the blue part are given by r, g, and b. In this case, since the R' value obtained after the correction is given by R = 1 to 100, the R' value is assumed to be linearly changed with respect to the unknown number x for the sake of convenience, and

$$R' = x \ldots (1)$$

is obtained.
Furthermore, by using the r and r0 values obtained by photographing the color correction medium and the value x equal to the value (1) when the R' value is derived from the R value,

$$R = (r - r0)x/100 + r0 \ldots (2)$$

Thus,

$$((r - r0)/100) \times x = R - r0$$

$$x = 100(R - r0)/(r - r0)$$

is satisfied.
This is assigned to Equation (1), the unknown number x is eliminated to calculate the R' value.
R' = 100(R - r0)/(r - r0) is satisfied, and the R value obtained after the correction is calculated.

According to the calculating method, the G' and B' values are also calculated. As in correction in white, in the above equations, intermediate colors are merely linearly interpolated. In order to further improve the accuracy of correction, gamma correction, another correction formula, an experimental formula, or a table obtained by an experiment is preferably used.

The correction of an image obtained by photographing an object by using a color correction medium has been described above. However, when white, red, green, and blue color correction media are photographed, one of the pixel value that is 100 is a pixel value that essentially exceeds 100, and saturation may occur. For this reason, the camera is corrected in sensitivity or the like to desirably adjust all the pixel values of the R, G, and B components to values slightly smaller than 100. With respect to black, all the pixel values of the R, G, and B components are desirably adjusted to slightly exceed 0.

(When light is incident on side)

Light is not always uniformly irradiated on an object, and even sunlight or illumination light is actually incident on a side, and brightness and colors gradually change from a non-uniformly bright side to a slightly dark side to frequently irradiate the light on the object.

In Figure 67A, ring-like white and black parts are formed on the color correction medium to make it possible to exactly measure a change in light when an object is photographed. More specifically, a procedure to perform color correction for the change in light will be described below.

(1) As shown in Figure 69a, white and black measurement points are arranged at necessary positions (12 positions in this drawing), according to a calculating formula for (case 2: when white and black are used), r, g, and b values and r0, g0, and b0 values at the corresponding positions are measured. With respect to white and black, 8 to 12 measurement points are desirably arranged at equal intervals on a circumference.

(2) With respect to white and black, by using center points (center points of the measurement points on the circumference) of the color correction medium as average value calculating points, average values of the measurement results on the circumference are set as the r, g, and b values and the r0, g0, and b0 values of the average value calculating points.

(3) Values from the r, g, and b values and the r0, g0, and b0 values of the average value calculation points to the r, g, and b values and the r0, g0, and b0 values of the measurement results on the circumference in a radial direction are linearly interpolated to calculate r, g, and b values and r0, g0, and b0 values at the positions of all the pixels in the radial direction. In order to simplify the calculation, all the pixels are not divided by a predetermined number, but the length in the radial direction may be divided by the predetermined number, and values at a typical point of the divided sections.

(4) From interpolation points in the radial direction, the values are linearly interpolated to calculate r, g, and b values and r0, g0, and b0 values at the positions of all the pixels in the circumferential direction. As a matter of course, in order to simplify the calculation, all the pixels are not divided by a predetermined number, a distance in the circumferential direction may be divided by the predetermined number to calculate values at a typical point of the divided sections.

(5) On the basis of the r, g, and b values and the r0, g0, and b0 values calculated by (3) and (4), a calculating formula for (case 2: in use of white and black) to correct colors of the pixels at the positions. When the calculation is simplified, corrections of regions formed by the sections divided in the radial direction and the circumferential direction are performed by the same formula.

According to the above method, a change in light irradiated on the object is simulated to make it possible to secure the accuracy of color interpolation durable in purposes of inspection and analysis.

In Figure 67B, although white and black are alternately arranged, r, g, and b values and r0, g0, and b0 values at four white and black positions adjacent to each other are measured and averaged, and the average values are defined as r, g, and b values and r0, g0, and b0 values at an rgb value calculation typical point in Figure 69B. The subsequent color correction may be executed according to the above method. The same interpolation and the same color correction need only be executed in Figures 67C and 67D. As well as know, there are various methods of performing two-dimensional interpolation, and an appropriate interpolation method may be used.

Industrial Applicability

According to the present invention, industrial applicability to provide invisible dot patterns that can be read with visible light to all printed media such as a post card, a stamp, a greeting card, a coupon, a game card, an educational card, and a figure using two-dimensional codes such as conventional bar codes or QR codes is conceivable.

Furthermore, according to the present invention, industrial applicability to provide a lens unit that can be mounted on a tablet personal computer, a smart phone, or a mobile phone through a protective case is conceivable.

Furthermore, according to the present invention, industrial applicability in which a dot pattern is provided as a two-dimensional code to an ID medium on which a circle pattern is formed and a circular or torus-shaped medium, and the ID medium and an object are simultaneously photographed to associate an ID with the object is conceivable.

In addition, according to the present invention, by a technique of color correction that corrects the color of a photographed image into the original color of an object, skin or the like of a human body can be inspected and analyzed. For this reason, industrial applicability in cosmetic and medical fields is conceivable.

Reference Signs List

| | |
|---|---|
| 101 | Dot pattern |
| 102 | Image region |
| 1021 | Predetermined region |
| 1022 | Component region |
| 103 | Printed medium |
| 104 | Icon |
| 105 | Server |
| 106 | Customer terminal |
| 107 | Provider terminal |
| 108 | Printing device |
| 200 | Lens unit |
| 201 | Lens holder |
| 202 | Lens |
| 203 | Lens cover |
| 204 | Transparent lens cover |
| 205 | LED |
| 206 | Battery |
| 207 | Battery button |
| 208 | White LED |
| 209 | Diffuser |
| 210 | IR LED |
| 211 | IR filter |
| 212 | Tablet personal computer |
| 213 | Clip |
| 214 | Card |
| 215 | Guard |
| 216 | Figure |
| 221 | Case |
| 222 | Smart phone |
| 230 | Infrared-shielding filter |
| 300 | Circle pattern |
| 301 | Mark |
| 302 | Start mark |
| 303 | Information dot |
| 304 | Inter-information-dot peripheral length |
| 305 | Inter-information-dot distance |
| 401 | ID code |
| 402 | ID medium |
| 403 | Opening |
| 404 | Focusing pattern |
| 405 | Lens-integrated lens holder |
| 406 | Adjuster |
| 407 | Antislip |
| 408 | Screw-like stopper |
| 409 | Ring-like stopper |
| 400 | Arm |
| 411 | U-shaped stopper |
| 412 | O ring |
| 413 | Pedestal |

414 Smart phone cover

## Claims

1. A lens unit that is mounted on an information processing device including a camera and an analyzing means for decoding information codes, comprising:

   a cylindrical lens holder having a lower opening portion detachably mounted to surround a photographing opening of the camera and an upper opening portion at both ends thereof; and
   an ID medium mounted on the upper opening portion of the lens holder, having an opening or a transparent region required to photograph a predetermined object, and formed to make it possible to photograph a pattern obtained by encoding an ID code serving as one of the information codes to perform authentication in the analyzing means.

2. The lens unit according to claim 1, wherein the ID medium is mounted by one method selected from methods of being stuck on the upper opening portion of the lens holder, fitted in the upper opening portion, and screwed in the upper opening portion.

3. The lens unit according to claim 1 or 2, wherein the pattern obtained by encoding the ID code is formed near a periphery of the opening or the transparent region of the ID medium.

4. The lens unit according to any one of claims 1 to 3, wherein
   the pattern is a circle pattern formed by a plurality of marks arranged on the basis of a predetermined rule on a circumference of a predetermined circle, a circumference of a predetermined ellipse, or a circumference of a predetermined closed curved line, the ID code being encoded by the predetermined rule.

5. The lens unit according to any one of claims 1 to 4, wherein
   a pattern to make it easy to focusing on in photographing with the camera is printed near the periphery of the opening of the ID medium or near the center or periphery of the transparent region of the ID medium.

6. The lens unit according to claim 5, wherein
   the pattern is printed with a transparent ink.

7. The lens unit according to any one of claims 1 to 6, wherein
   the ID medium is integrally molded together with the lens holder.

8. The lens unit according to any one of claims 1 to 7, wherein
   the lens unit further includes an infrared filter at a predetermined position.

9. The lens unit according to any one of claims 1 to 8, wherein
   the predetermined object is photographed while being in surface contact with the upper opening portion of the lens holder.

10. The lens holder according to any one of claims 1 to 9, further comprising
    a lens cover arranged on the upper opening portion of the lens holder and having an opening or a transparent region required to photograph the predetermined object.

11. The lens unit according to claim 10, wherein
    the predetermined object is photographed while being in surface contact with the upper opening portion of the lens holder or the lens cover.

12. The lens unit according to claim 10 or 11, wherein
    the ID medium is mounted on the upper opening portion of the lens cover by one method selected from methods of being stuck on the upper opening portion of the lens holder, fitted in the upper opening portion, and screwed in the upper opening portion, and interposed between the lens cover and the lens holder.

13. The lens unit according to any one of claims 10 to 12, wherein the lens cover is integrally molded together with at least one of the lens holder and the ID medium.

**14.** The lens unit according to any one of claims 1 to 13, wherein
the lens unit further comprises an antislip mounted on the lower opening portion of the lens holder to mount the lens unit on the information processing device.

**15.** The lens unit according to claim 14, wherein
the antislip is mounted on the lower opening portion of the lens holder by one method selected from methods of being stuck on the lower opening portion of the lens holder, fitted in the lower opening portion, and screwed in the lower opening portion.

**16.** The lens unit according to claim 14 or 15, wherein
the antislip is integrally molded together with the lens holder.

**17.** The lens unit according to any one of claims 1 to 16, further comprising
an adjuster that is arranged on the lower opening portion of the lens holder, has an opening or a transparent region required to photograph the predetermined object, and adjusts a distance from the lens to the camera to an appropriate distance.

**18.** The lens unit according to any one of claims 1 to 17, wherein
the lens unit further comprises a pedestal to stably place the predetermined object on a periphery of an outer peripheral wall of the upper opening portion of the lens holder.

**19.** The lens unit according to claim 18, wherein
the pedestal is integrally molded together with the lens holder.

**20.** The lens unit according to claim 18 being subordinate to claim 10, wherein
the pedestal and a lens cover arranged on the upper opening portion of the lens holder and having an opening or a transparent region required to photograph the predetermined object are integrally molded together with each other.

**21.** The lens unit according to any one of claims 1 to 20, wherein
the lens unit further comprises a clip to fix the lens unit to mount the lens unit on the camera connected to the information processing device or an information processing device in which the camera is built in.

**22.** The lens unit according to claim 21, wherein
an arm of the clip has one end attached to the lens holder and the other end formed to clip a rear side of the information processing device including the camera.

**23.** The lens unit according to claim 21 or 22, wherein
one end of the arm of the clip attached to the lens holder is a ring-like or U-shaped stopper, and the lens unit is attached to the stopper through the lens holder.

**24.** The lens unit according to claim 23, wherein
in order to fix the stopper of the clip, a screw-like second stopper is attached through the lens holder.

**25.** The lens unit according to claim 24, wherein
an O ring is attached between the stopper of the clip and the second stopper through the lens holder.

**26.** The lens unit according to any one of claims 21 to 25, wherein
the clip is integrally molded together with at least one of the lens holder and the lens cover.

**27.** The lens unit according to any one of claims 21 to 26, wherein
the clip is designed such that, when the information processing device is placed on a horizontal plane while the lens unit faces upward to clip a rear side of the information processing device, the arm of the clip has a predetermined region being in surface contact with the horizontal plane.

**28.** A lens unit mounted on an information processing device including a camera and an analyzing means for decoding an information code, comprising:

a cylindrical lens holder including a lower opening portion detachably mounted to surround a photographing opening of the camera and an upper opening portion at both ends of the lens holder;
a lens arranged at a predetermined position in the cylindrical lens holder; and
an adjuster that is arranged on the lower opening portion of the lens holder, has an opening or a transparent region required to photograph the predetermined object, and appropriately adjusts a distance from the lens to the camera.

**29.** The lens unit according to claim 28, further comprising
an ID medium that is loaded on the upper opening portion of the lens holder and has an opening or a transparent region required to photograph the predetermined object and on which a pattern obtained by encoding an ID code serving as one of the information codes is formed to make it possible to photograph the pattern with camera.

**30.** The lens unit according to claim 29, wherein
the ID medium is loaded by one method selected from methods of being stuck on the upper opening portion of the lens holder, fitted in the upper opening portion, and screwed in the upper opening portion.

**31.** The lens unit according to claim 29 or 30, wherein
the pattern obtained by encoding the ID code is formed near a periphery of the opening or the transparent region of the ID medium.

**32.** The lens unit according to claim 29 or 31, wherein
the pattern is formed with a plurality of marks arranged on a circumference of a predetermined circle, a circumference of a predetermined ellipse, or a circumference of a predetermined closed curved line on the basis of a predetermined rule and on which the ID code is encoded by the predetermined rule.

**33.** The lens unit according to any one of claims 29 to 32, wherein
a pattern to make it easy to focus in photographing by the camera is printed near the periphery of the opening of the ID medium or near the center or the periphery of the transparent region of the ID region.

**34.** The lens unit according to claim 32, wherein
the pattern is printed with a transparent ink.

**35.** The lens unit according to any one of claims 29 to 34, wherein
the ID medium is integrally molded together with the lens holder.

**36.** The lens unit according to any one of claims 29 to 35, wherein
the lens unit further includes an infrared filter at a predetermined position.

**37.** The lens unit according to any one of claims 28 to 36, wherein
the predetermined object is photographed such that the object is in surface contact with the upper opening portion of the lens holder.

**38.** The lens unit according to any one of claims 29 to 37, further comprising
a lens cover arranged on the upper opening portion of the lens holder and having an opening or a transparent region required to photograph the predetermined object.

**39.** The lens unit according to claim 38, wherein
the predetermined object is photographed such that the object is in surface contact with the upper opening portion of the lens holder or the lens cover.

**40.** The lens unit according to any one of claims 29 to 39, wherein
the lens unit further includes an antislip arranged on the lower opening portion of the lens holder to mount the lens unit on the information processing device.

**41.** The lens unit according to claim 40, wherein
the antislip is mounted by one method selected from methods of being stuck on the lower opening portion of the lens holder, fitted in the lower opening portion, screwed in the lower opening portion.

**42.** The lens unit according to claim 40 or 41, wherein
the stopper is integrally molded together with the lens holder.

**43.** the lens unit according to claims 40 to 42, wherein
the antislip is mounted by one method selected from methods of being stuck on the opening of the adjuster, fitted in the opening, screwed in the opening, and mounted between the adjuster and the lens holder.

**44.** The lens unit according to claim 43, wherein
the adjuster is integrally molded together with at least one of the lens holder and the antislip.

**45.** The lens unit according to any one of claims 29 to 44, wherein
the lens unit further includes a pedestal to stably place the predetermined object near a periphery of an outer wall of the upper opening portion of the lens holder.

**46.** The lens unit according to claim 45 wherein
the pedestal is integrally molded together with the lens holder.

**47.** The lens unit according to claim 45 or 46, wherein
the pedestal and a lens cover arranged on the upper opening portion of the lens holder and having an opening or a transparent region required to photograph the predetermined object are integrally molded together with each other.

**48.** The lens unit according to any one of claims 29 to 47, wherein
the lens unit further includes a clip to fix the lens unit to mount the lens unit on a camera connected to the information processing device or an information processing device in which the camera is built.

**49.** The lens unit according to claim 48, wherein
the clip has an arm having one end attached to the lens holder and the other end formed to clip a rear side of the information processing device in which the camera is built.

**50.** The lens unit according to claim 48 or 49, wherein
one end of the arm of the clip attached to the lens holder is a ring-like or U-shaped stopper, and the lens unit is attached to the stopper through the lens holder.

**51.** The lens unit according to claim 50, wherein
a screw-like second stopper is attached through the lens holder to fix the stopper of the clip.

**52.** The lens unit according to claim 51, wherein
an O ring is attached between the stopper of the clip and the adjuster or the second stopper through the lens holder.

**53.** The lens unit according to claim 48 being subordinate to claim 38, wherein
the clip is integrally molded together with at least one of the lens holder, the lens cover, and the adjuster.

**54.** The lens unit according to claim 48 being subordinate to claim 38 and 45, wherein
a screw thread is formed on the lens holder, and at least the adjuster of the pedestal, the lens cover, the second stopper, the clip and the adjuster can be attached or detached with a screw.

**55.** The lens unit according to claim 48, wherein
the clip is designed such that, when the information processing device is placed on a horizontal plane while the lens unit faces upward to clip a rear side of the information processing device, the arm of the clip has a predetermined region being in surface contact with the horizontal plane.

**56.** The lens unit according to any one of claims 1 to 55, wherein
the camera is built in the information processing device.

**57.** The lens unit according to any one of claims 1 to 56, wherein
the camera is connected to the information processing device with a cable or a wireless unit and transmits an image of the predetermined object photographed with the camera and/or information codes decoded with the analyzing means to the information processing device.

**58.** The lens unit according to any one of claims 1 to 57, wherein the camera includes the analyzing means.

**59.** The lens unit according to any one of claims 1 to 58, wherein the predetermined object is a printed medium on which a dot pattern obtained by encoding an information code is printed, and
the analyzing means decodes the information code from the dot pattern photographed with the camera.

**60.** The lens unit according to any one of claims 1 to 59, wherein the lens holder is integrally molded together with the lens.

**61.** The lens unit according to any one of claims 1 to 60, wherein the lens unit further includes a light source disposed at a predetermined position on an outer peripheral wall of the lens holder to almost uniformly irradiate light on the predetermined object, and
a power supply that supplies an electric power to the light source.

**62.** The lens unit according to claim 61, wherein the power supply is supplied from the information processing device.

**63.** The lens unit according to any one of 1 to 27 and claims 29 to 62, wherein the information processing device includes a storage means that decodes an ID code from the pattern photographed with the camera to record the decoded ID code in association with a photographed image of the predetermined object.

**64.** The lens unit according to claim 63, wherein the information processing device includes an information processing means that transmits, together with the decoded ID code recorded on the storage means, the photographed image of the predetermined object associated with the ID code to a server.

**65.** The lens unit according to any one of claims 1 to 58 and claims 60 to 64, wherein the predetermined object is a region of a human body.

**66.** The lens unit according to any one of claims 1 to 65, wherein the information processing device is any one of a smart phone, a mobile phone, a personal computer with camera, a digital camera.

**67.** A program wherein the lens unit according to any one of claims 1 to 27 and claims 29 to 66 is mounted to surround a photographing opening of a camera of the information processing device, and an analyzing means included in the information processing device decodes the ID code from an image obtained by photographing a pattern obtained by encoding the ID code with the camera together with a predetermined object or transmits the ID code decoded together with the predetermined object to a second information processing device.

**68.** The program according to claim 67, wherein a predetermined object is subjected to image processing, and
the analyzing means performs image processing to an image obtained by photographing the predetermined object to further acquire predetermined information, or outputs at least the predetermined information by the information processing device, and/or transmits the predetermined information to the second information processing device together with the ID code.

**69.** A program wherein a lens unit according to any one of claims 1 to 27 and claims 29 to 66 is mounted to surround a photographing opening of a camera of the information processing device, and an analyzing means included in a second information processing device to which an image obtained by photographing a pattern obtained by encoding an ID code with the camera together with the predetermined object is transmitted decodes the ID code from the image.

**70.** The program according to claim 69, wherein the analyzing means performs image processing to an image obtained by photographing the predetermined object to further acquire predetermined information.

**71.** A program wherein
the lens unit according to any one of claims 1 to 66 is mounted to surround the photographing opening of the camera of the information processing device, and, by the analyzing means included in the information processing device, an image obtained by photographing the predetermined medium on which a dot pattern obtained by encoding the information code is printed and with the camera is decoded into the information code, and/or information corresponding to the decoded information code is output, and/or the decoded information code and/or the information corresponding to the decoded information code are transmitted to the second information processing device.

**72.** A program wherein
the lens unit according to any one of claims 1 to 27 and claims 29 to 66 is mounted to surround the photographing opening of the camera of the information processing device, and, by the analyzing means included in the information processing device, an image obtained by photographing the predetermined medium on which a dot pattern obtained by encoding the information code is printed and a pattern obtained by encoding an ID code with the camera is decoded into the information code and the ID code, and/or information corresponding to the decoded information code and the ID code is output, and/or the decoded information code and the ID code and/or the information corresponding to the decoded information code and the ID code are transmitted to the second information processing device.

**73.** A information processing device with camera comprising a lens unit according to any one of claims 1 to 66, wherein the information processing device includes the program according to any one of claims 67, 68, 71, and 72.

**74.** A second information processing device comprising the program according to any one of claims 69 and 70.

**75.** An information processing device with camera comprising
the lens unit according to any one of claims 1 to 66.

**76.** An information processing system comprising the information processing device with camera according to claim 75, and a second information processing device communicating with the information processing device.

FIG. 1

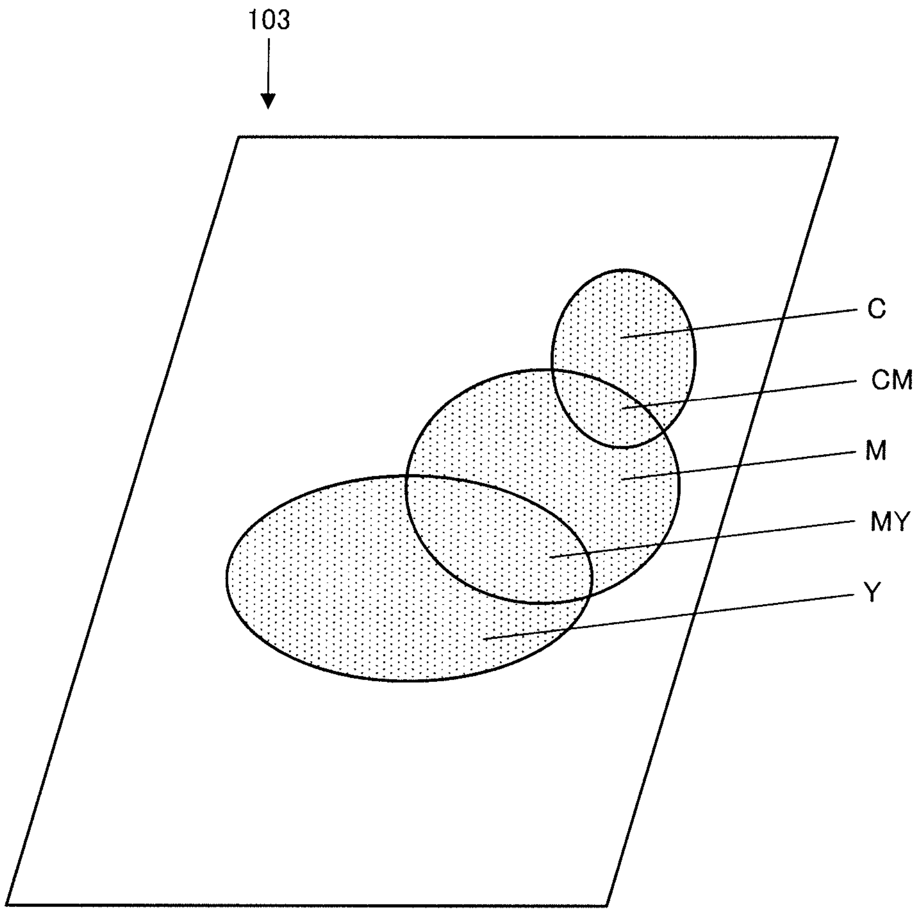

FIG.2

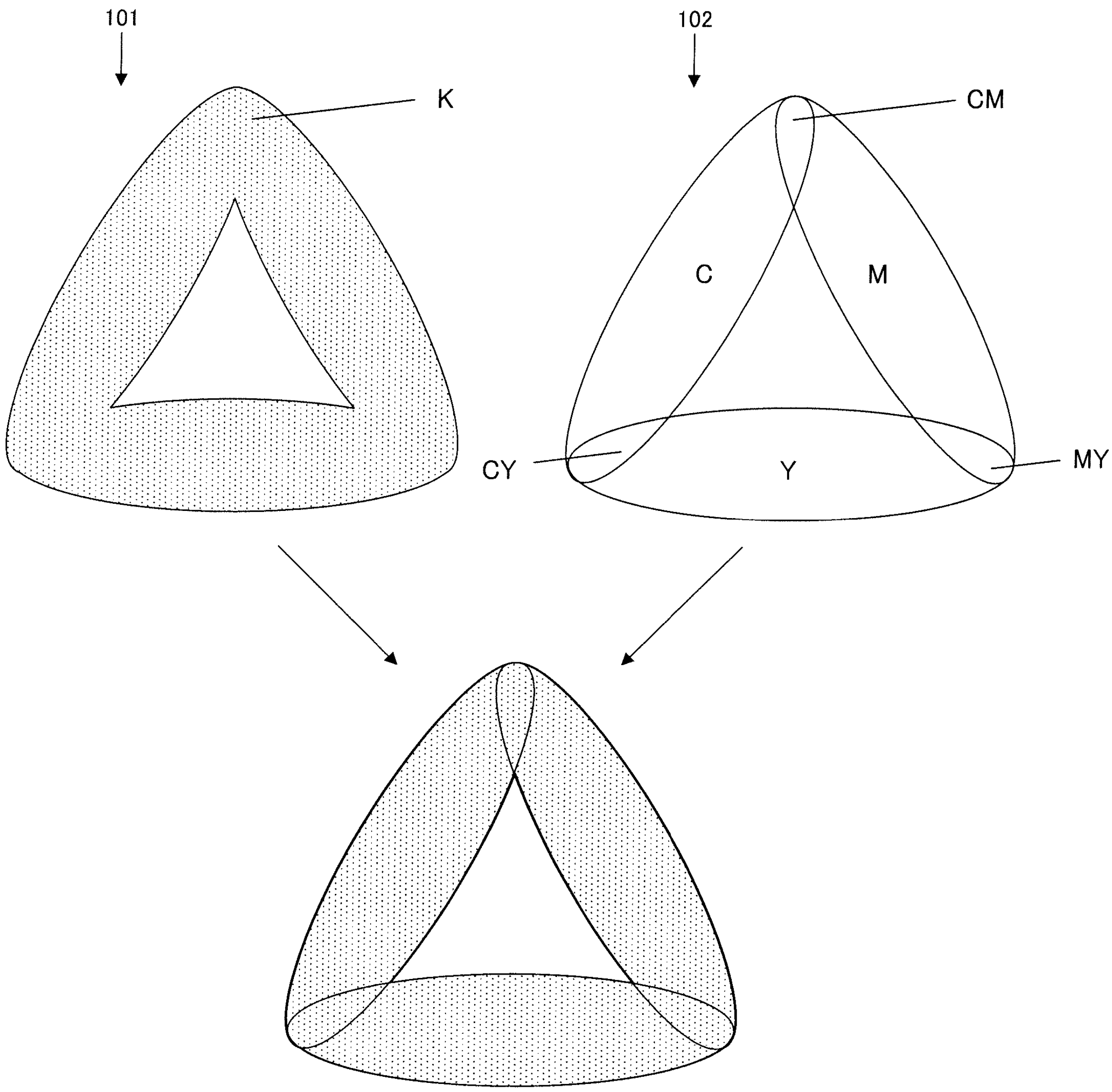

FIG.3

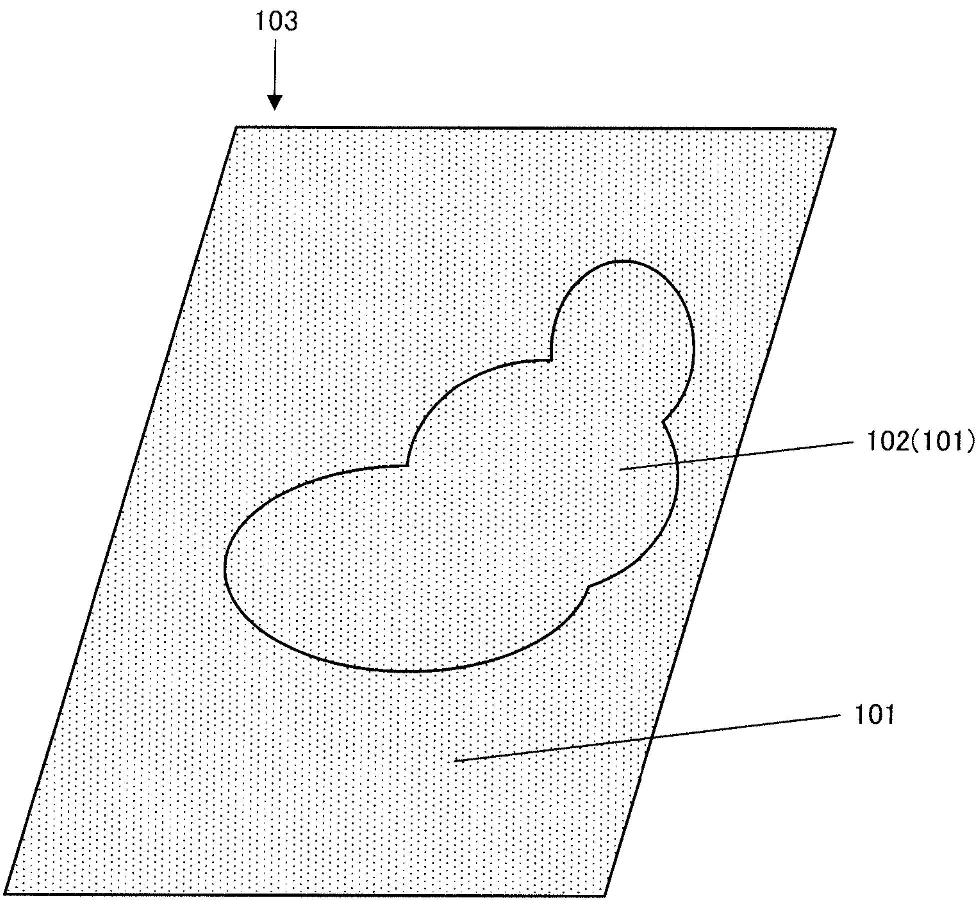

FIG.4

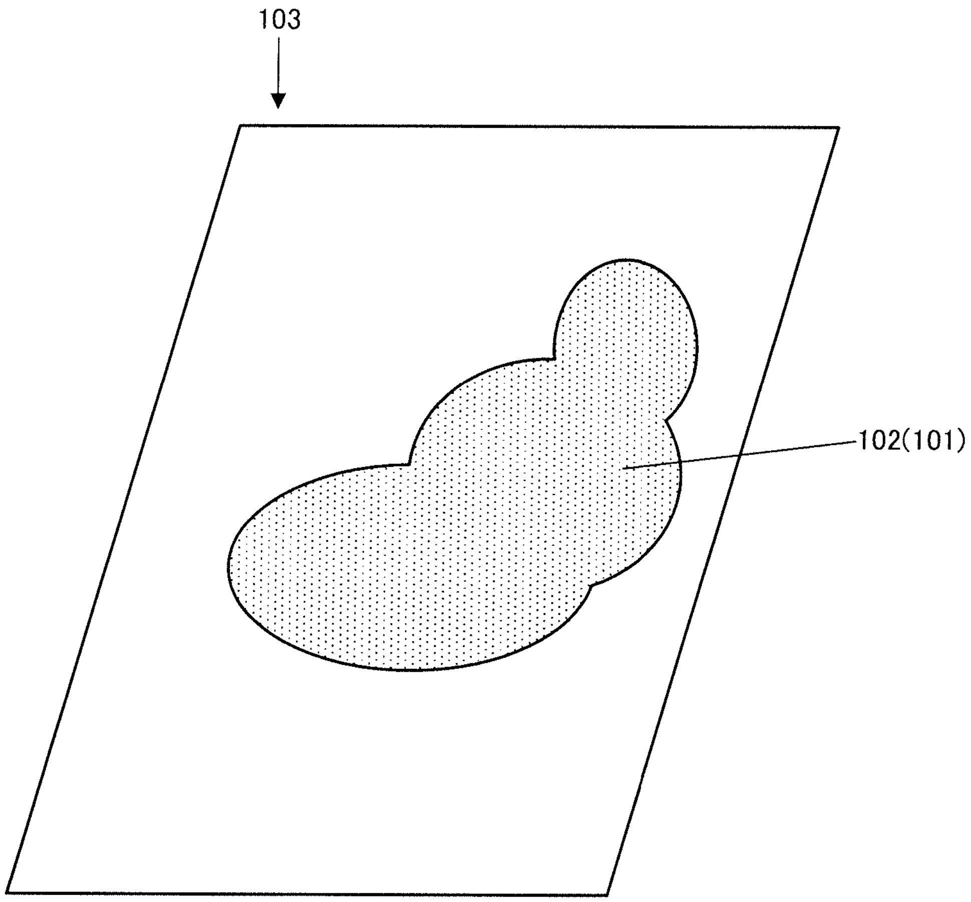

FIG.5

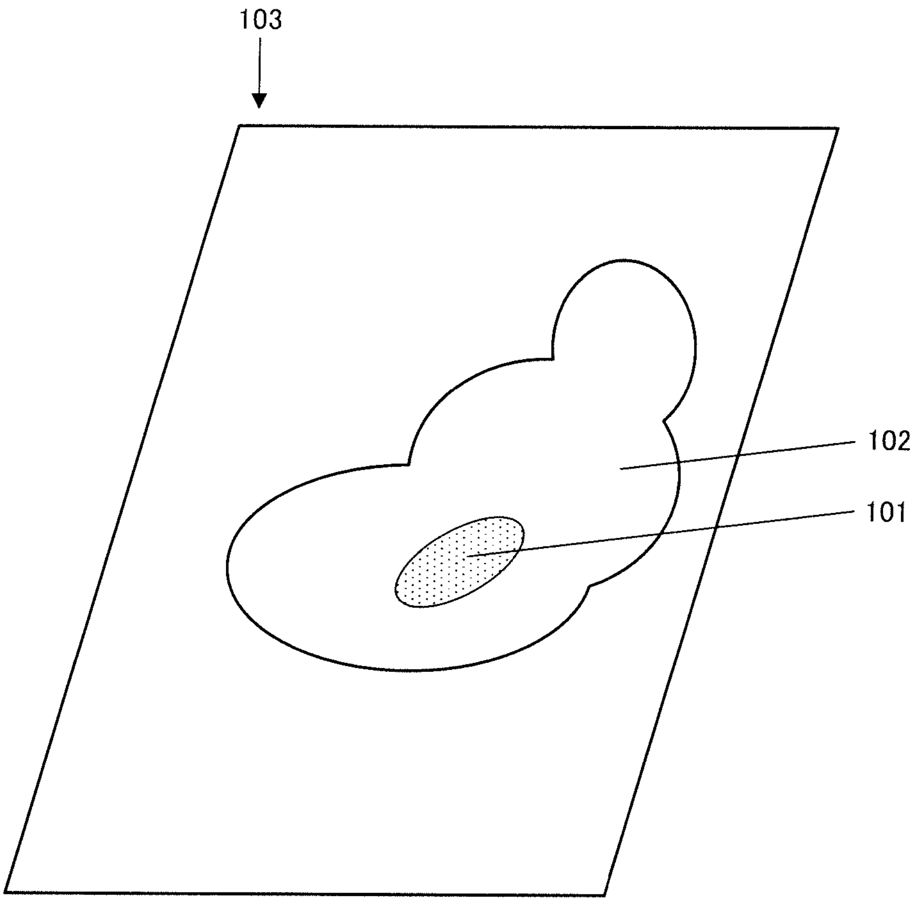

FIG.6

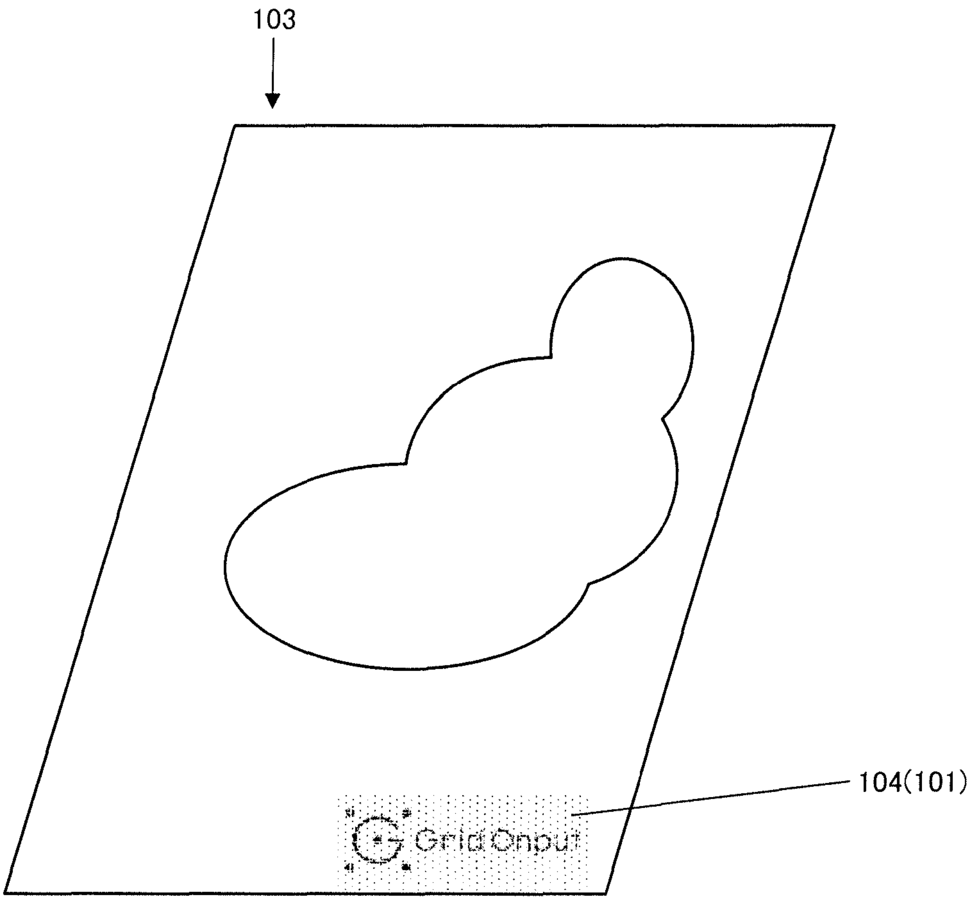

FIG.7

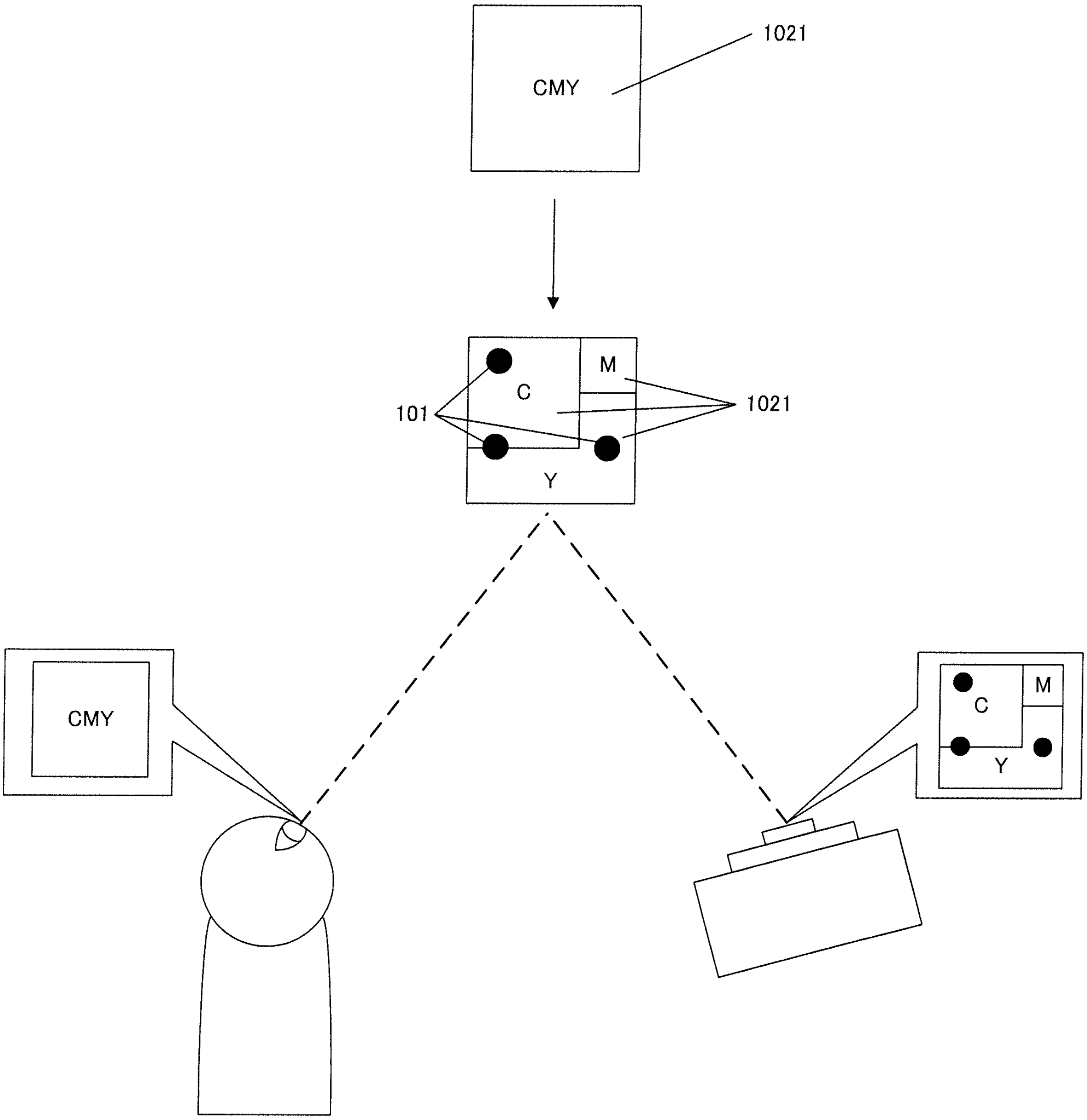

FIG. 8A RECTANGLE

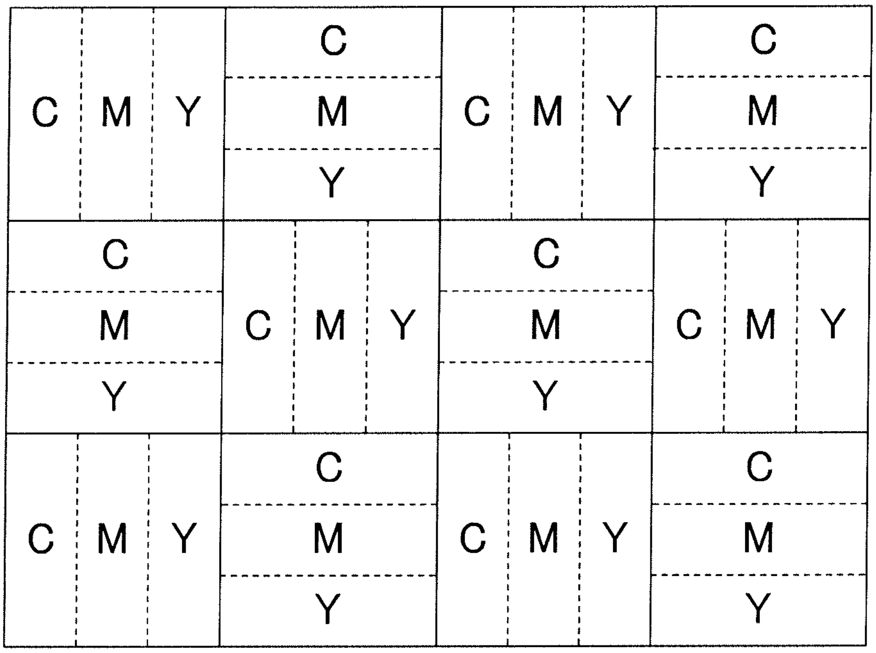


FIG. 8B HEXAGON

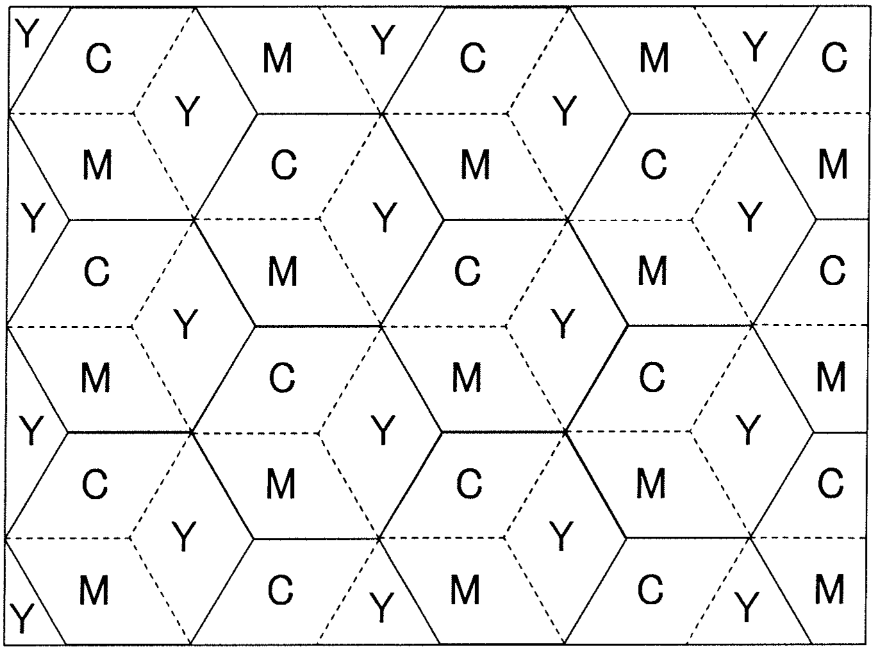

FIG. 9A TRIANGLE

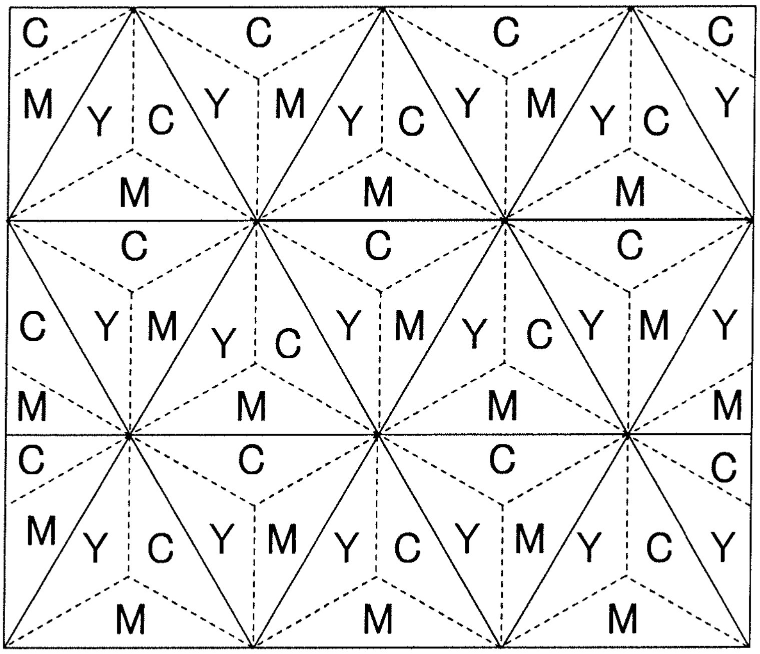


FIG. 9B TRIANGLE

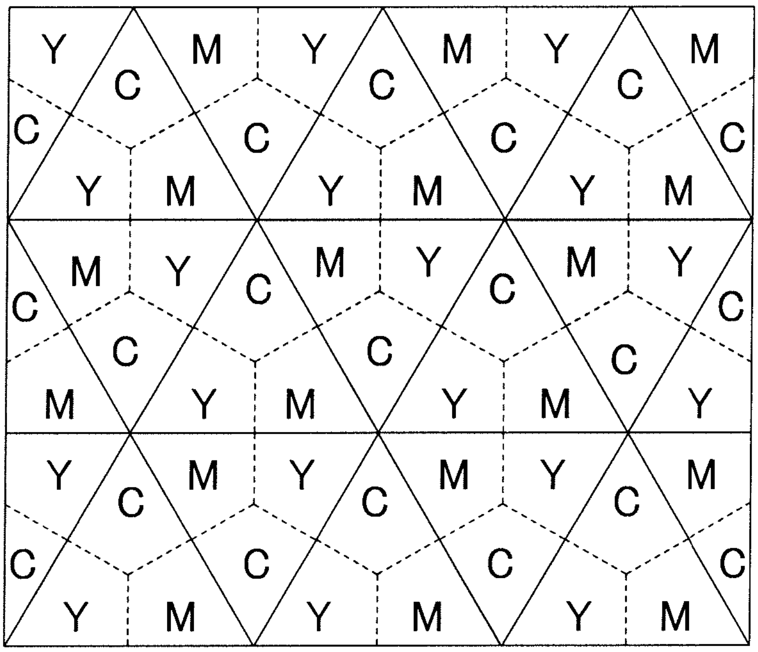

FIG. 10A

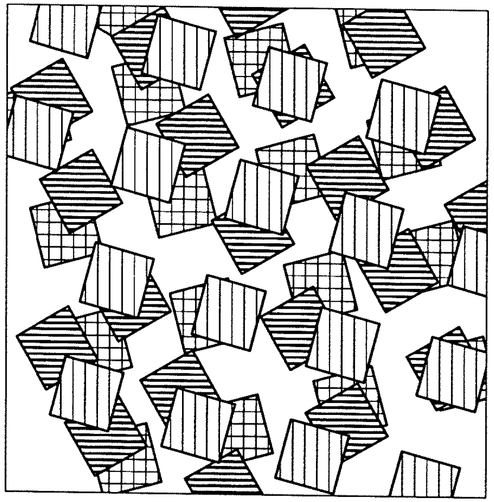

FIG. 10B

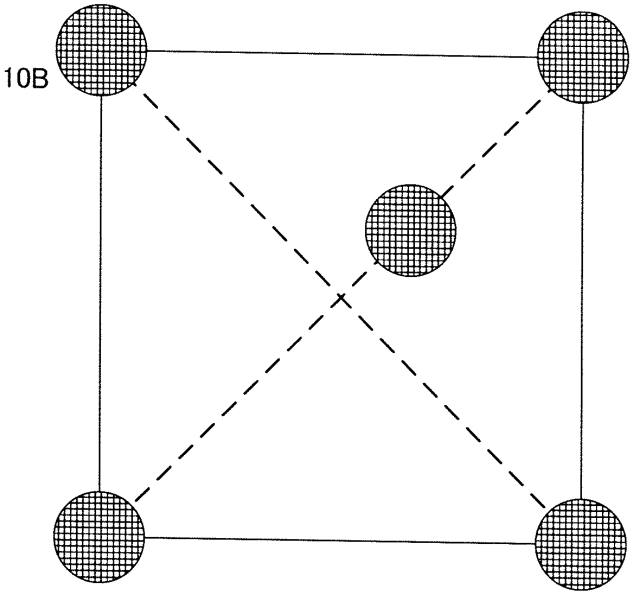

FIG. 10C

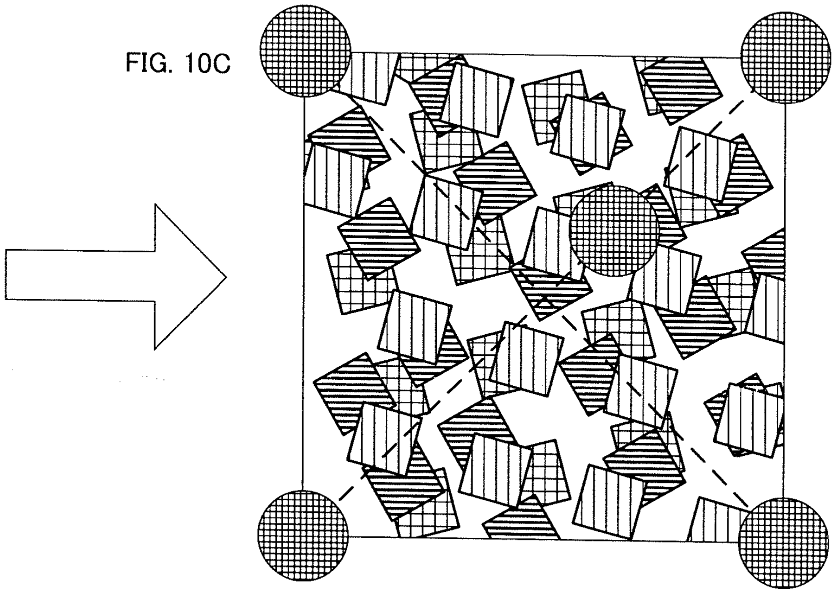

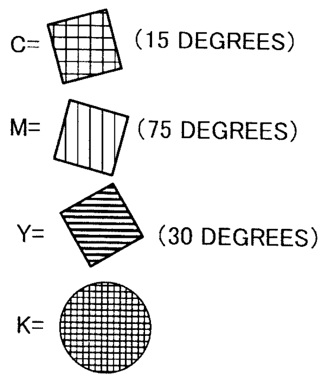

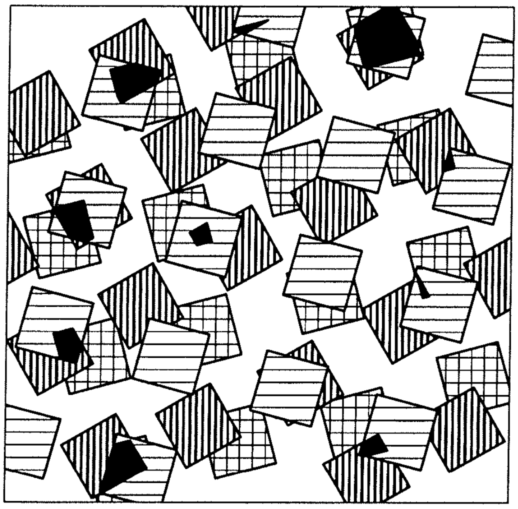

FIG. 11A

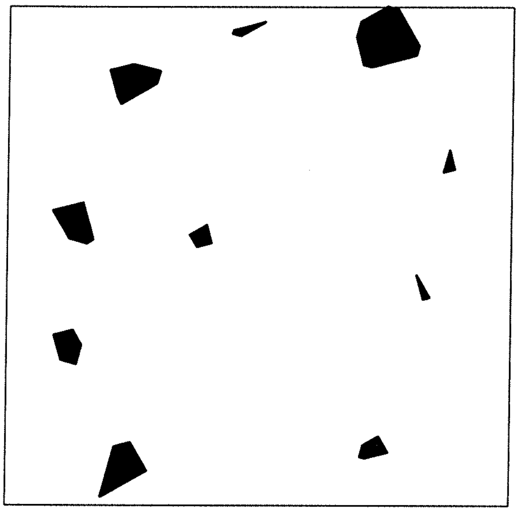

FIG. 11B

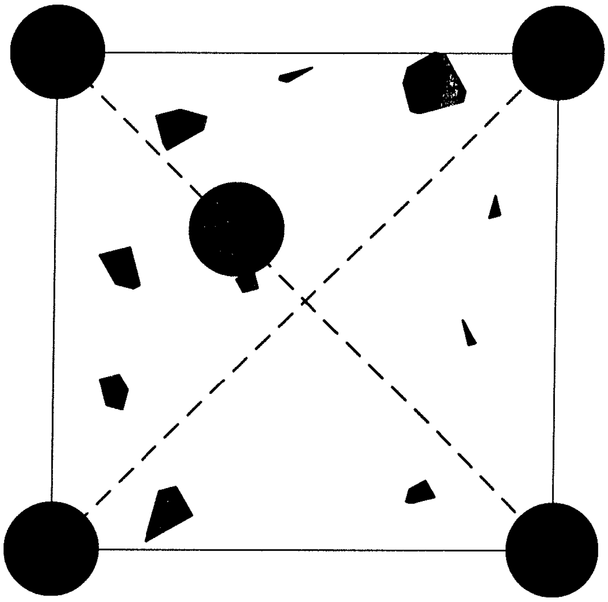

FIG. 11C

FIG. 12A

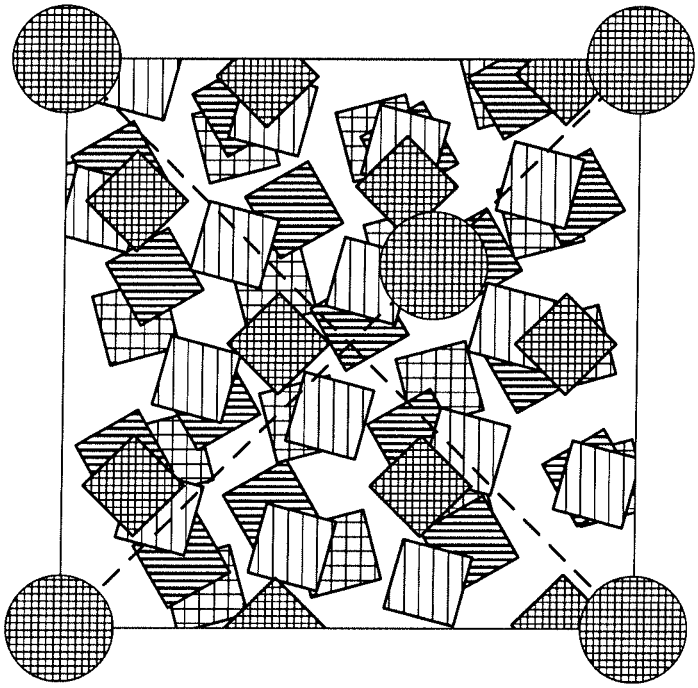

FIG. 12B

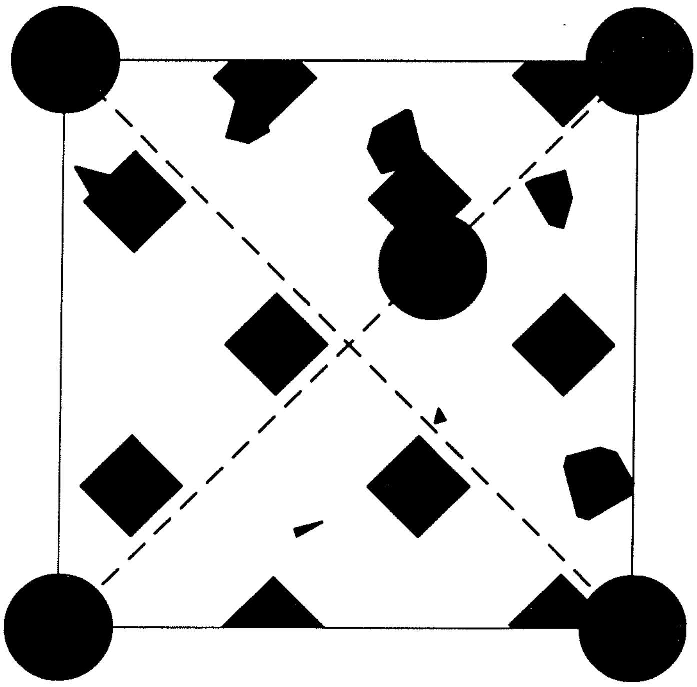

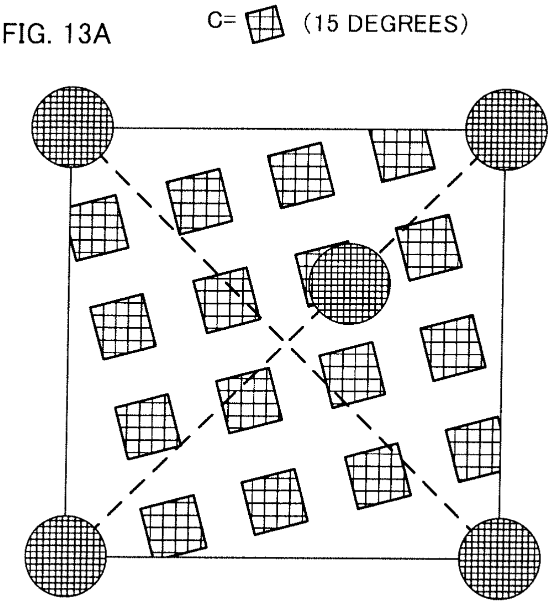


FIG. 13A

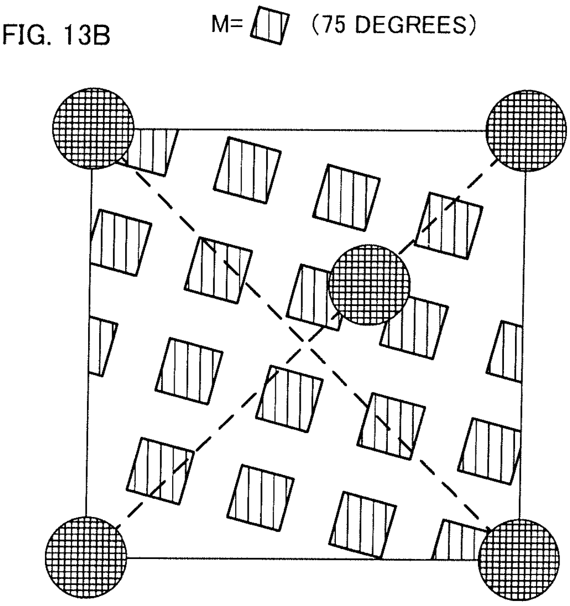


FIG. 13B

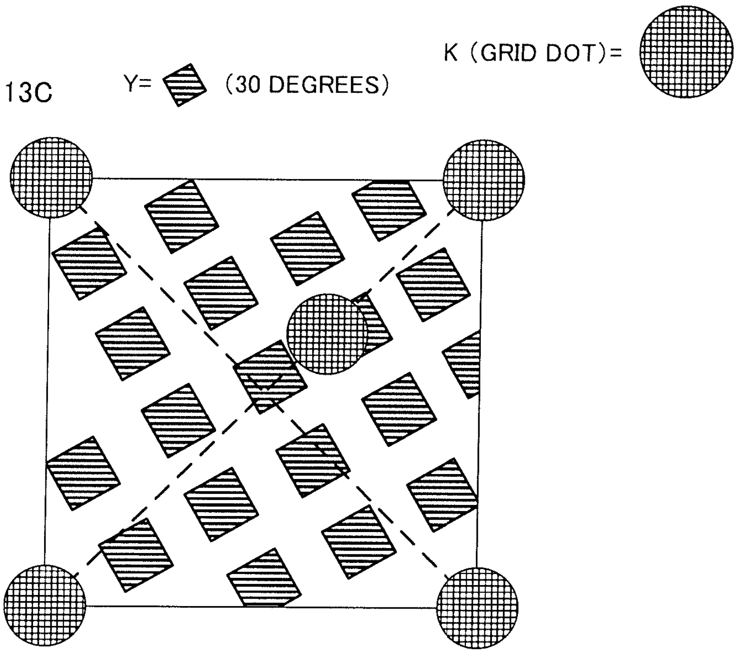


FIG. 13C

FIG. 14A

FIG. 14B

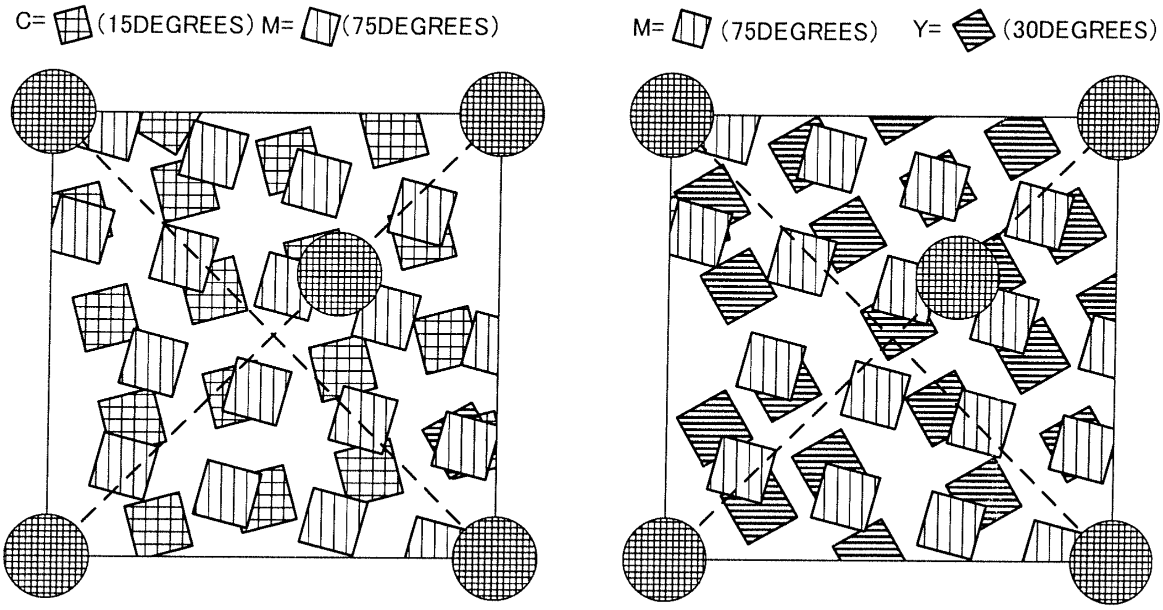


FIG. 14C

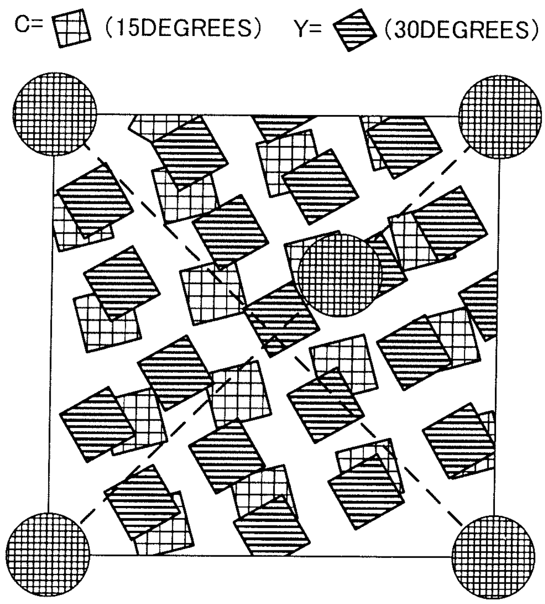

FIG. 15

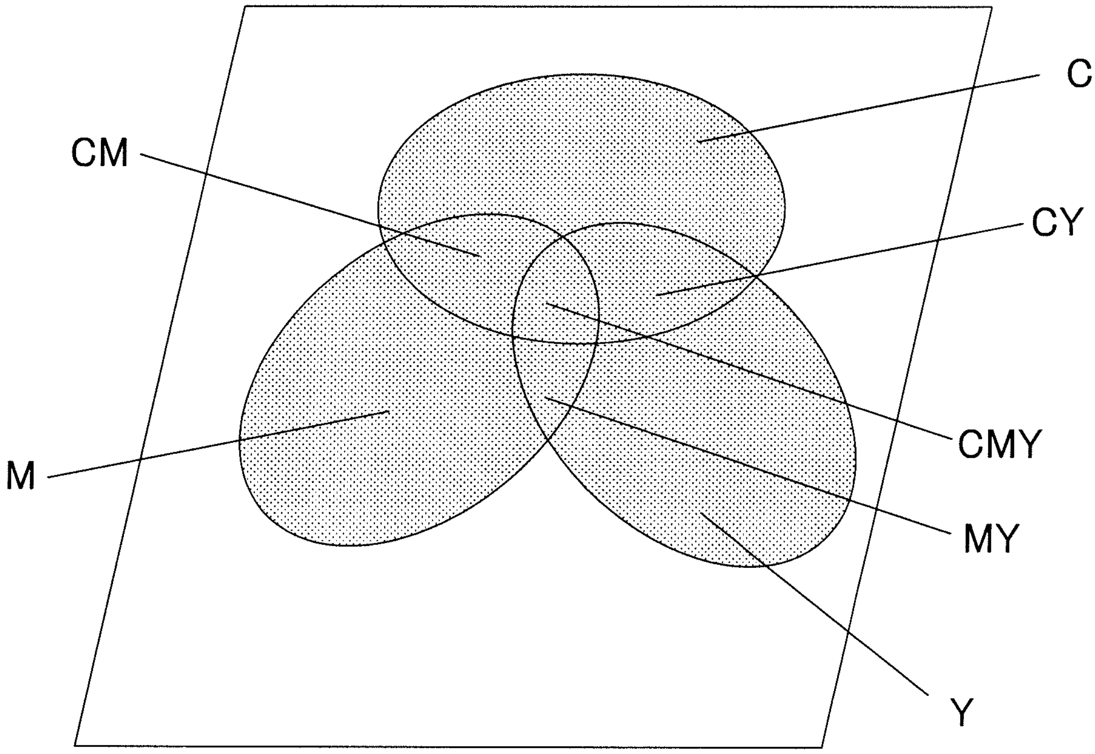

FIG. 16A

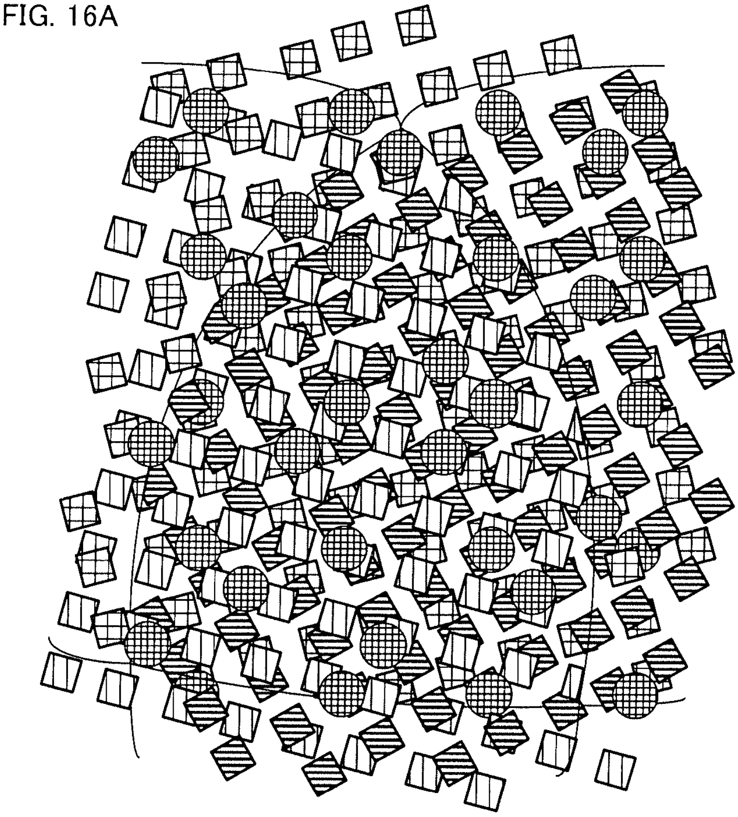

FIG. 16B

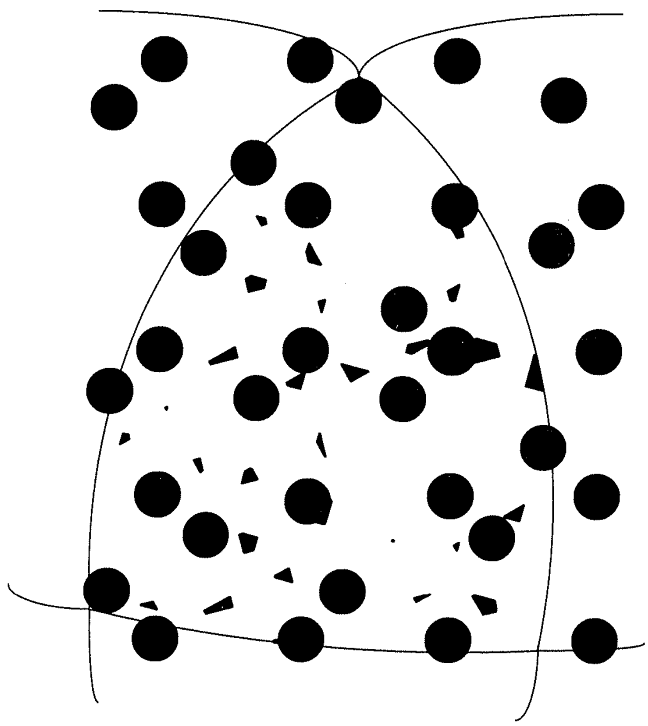

FIG. 17

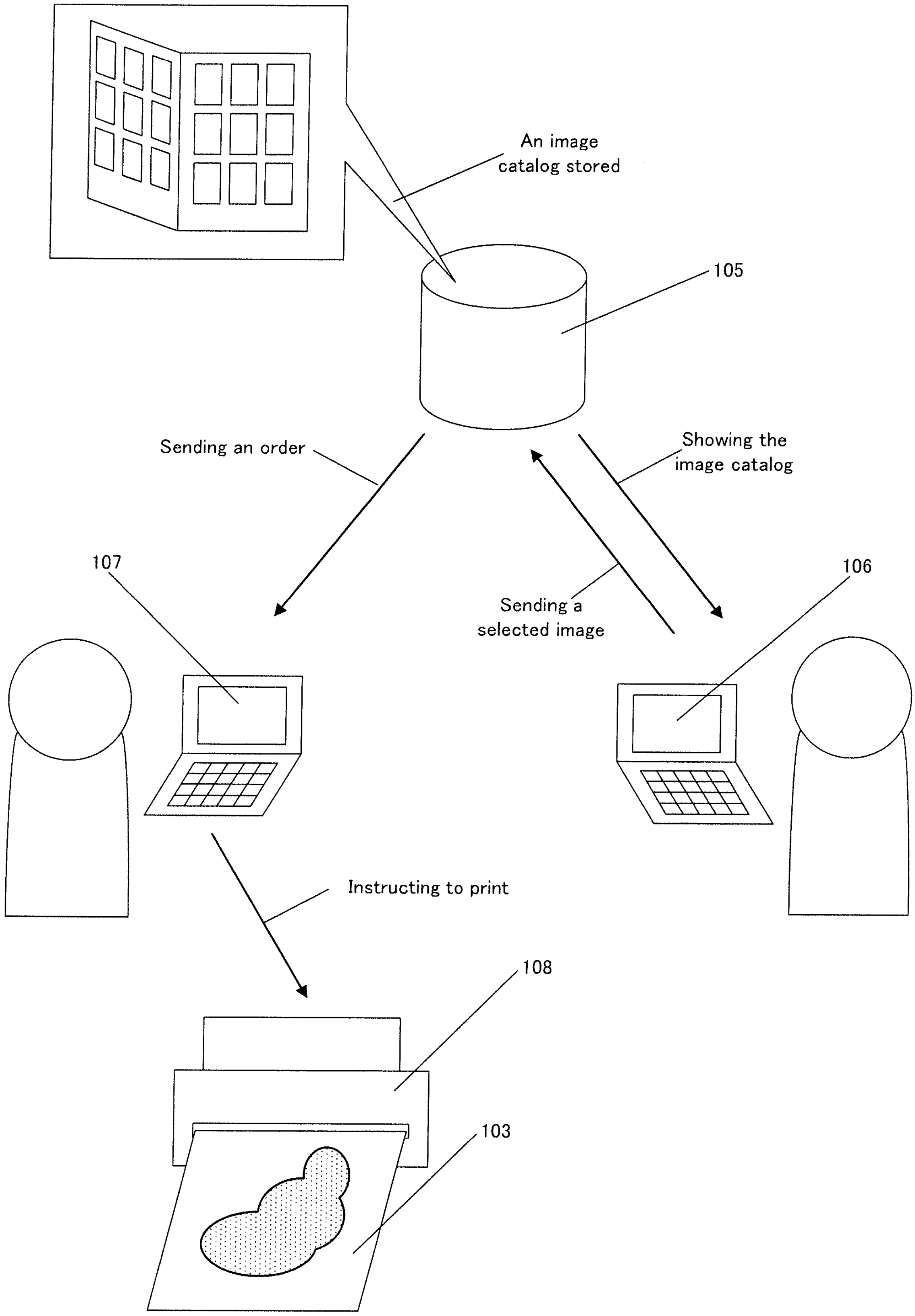
An image
catalog stored
105
Sending an order
Showing the
image catalog
107
106
Sending a
selected image
Instructing to print
108
103

FIG.18

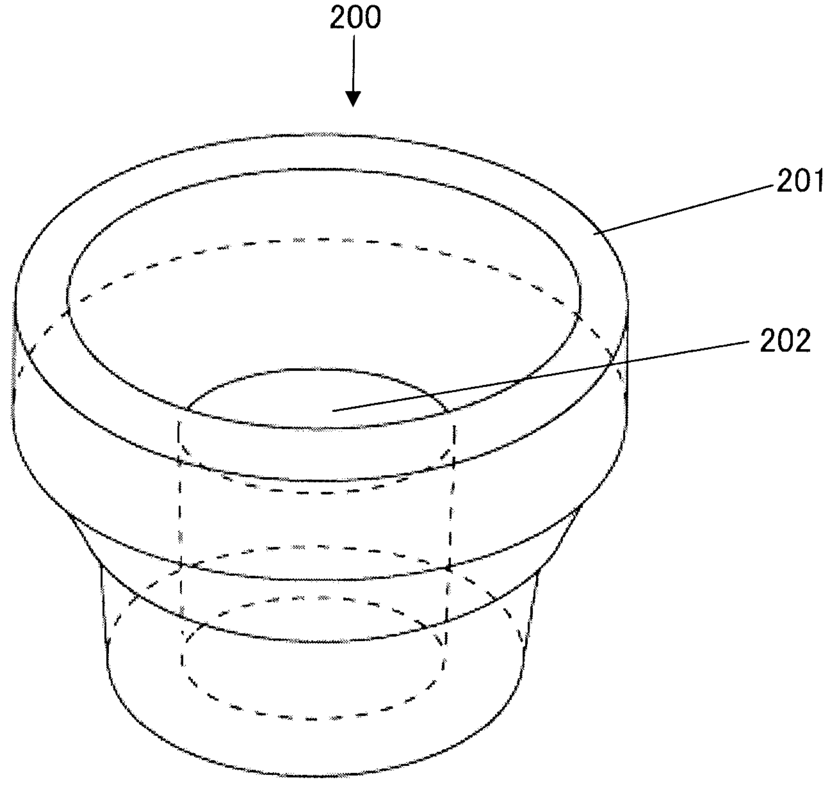

FIG. 19A

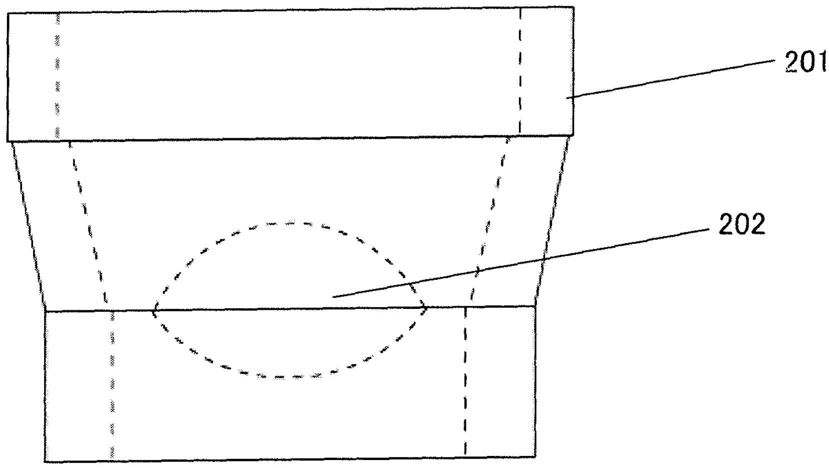


FIG. 19B

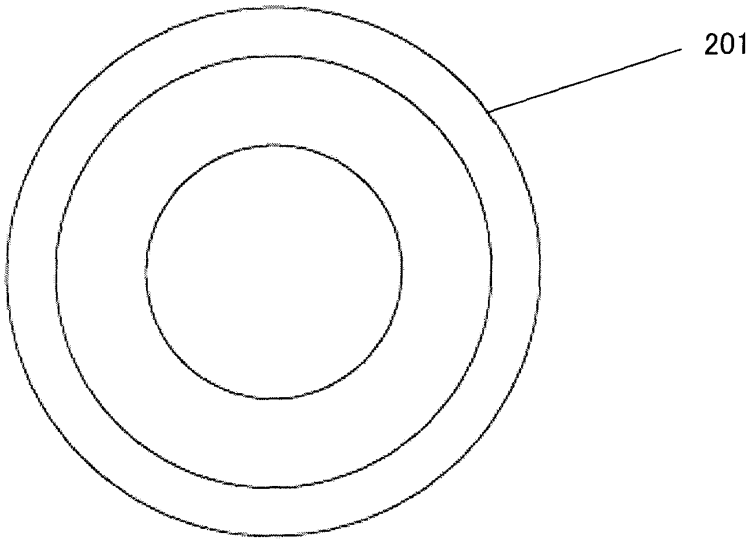


FIG. 19C

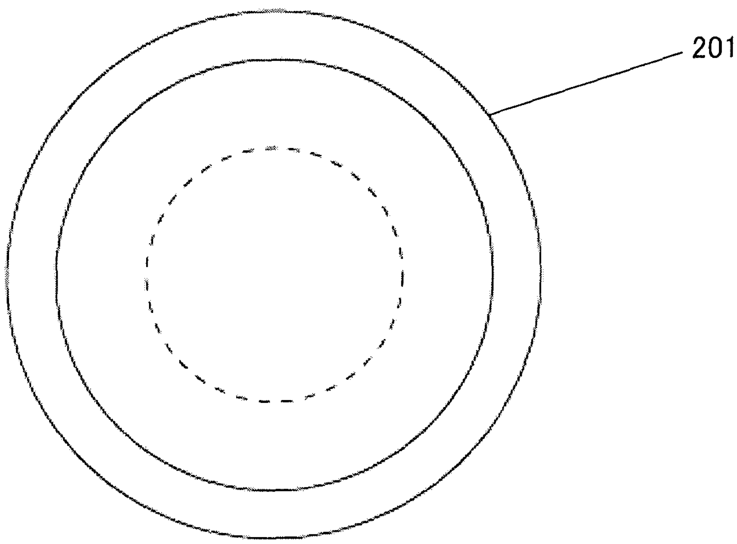

FIG. 20C

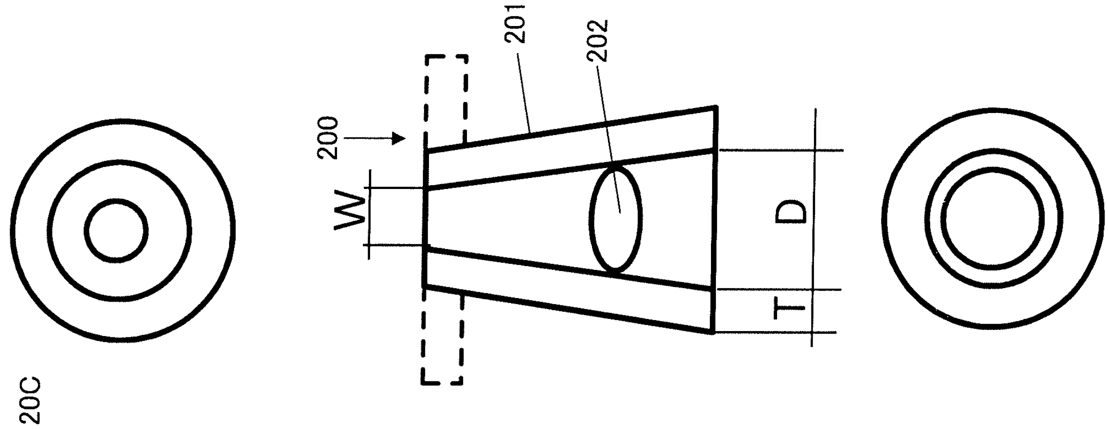


FIG. 20B

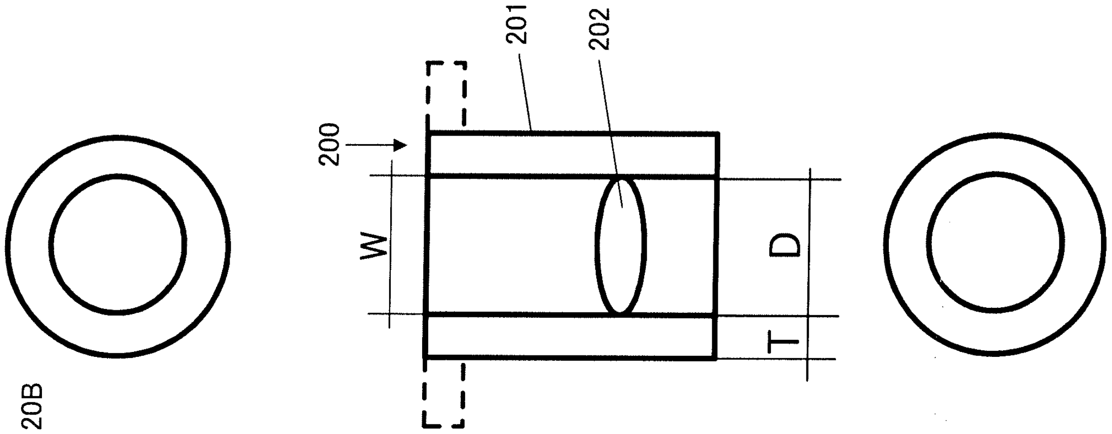


FIG. 20A

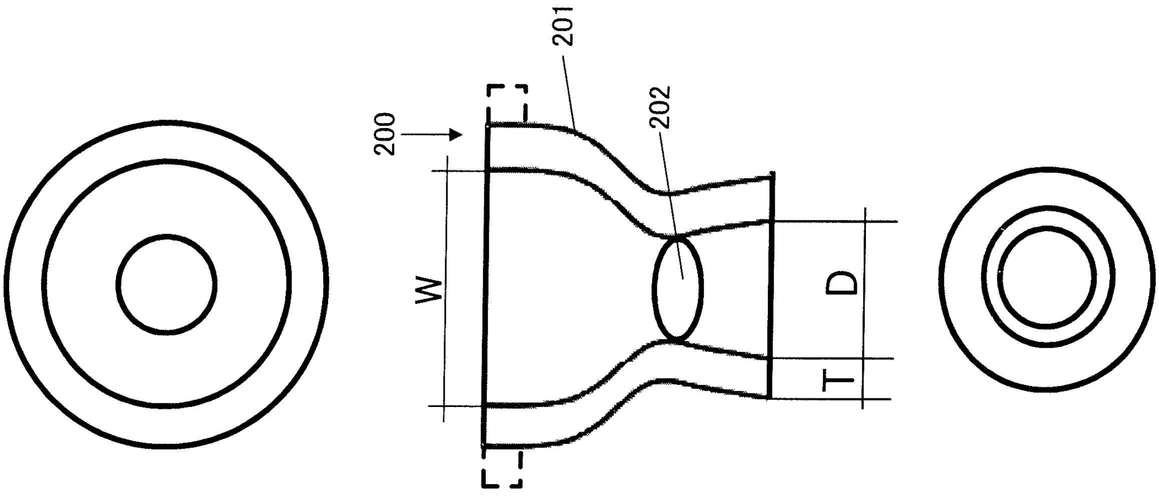

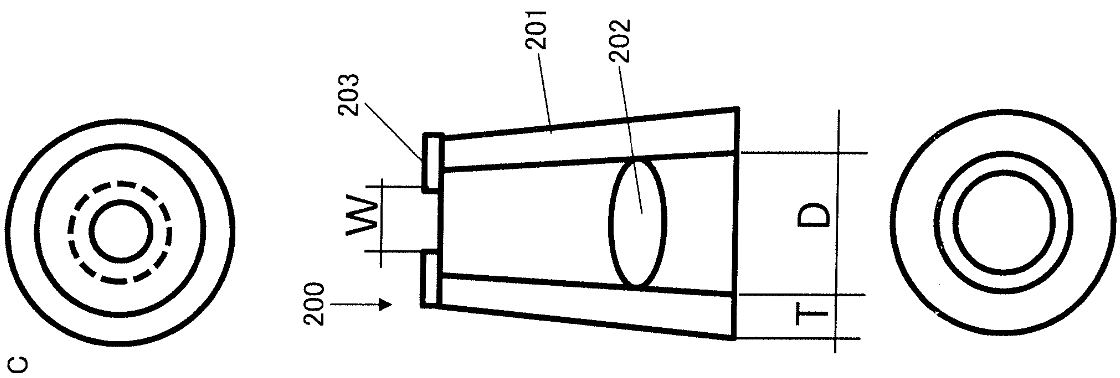


FIG. 21C

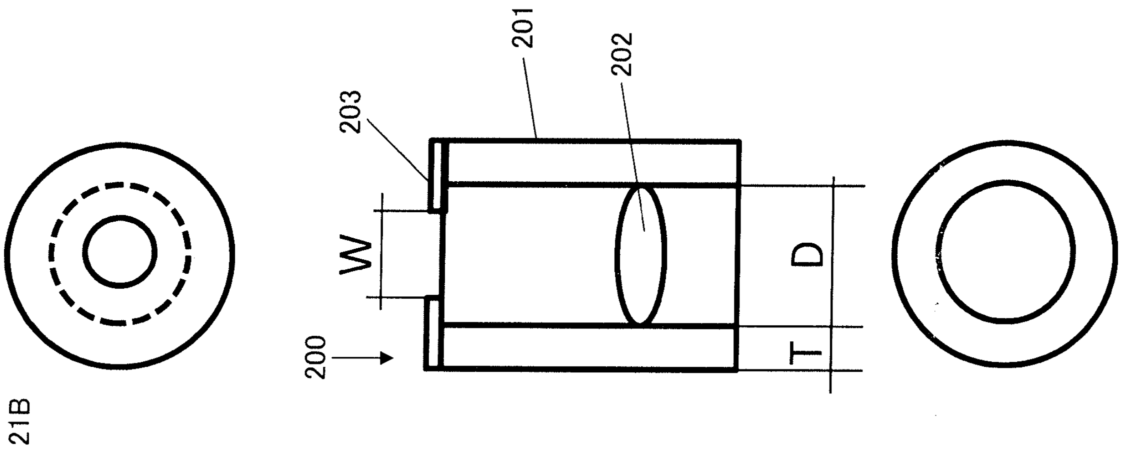


FIG. 21B

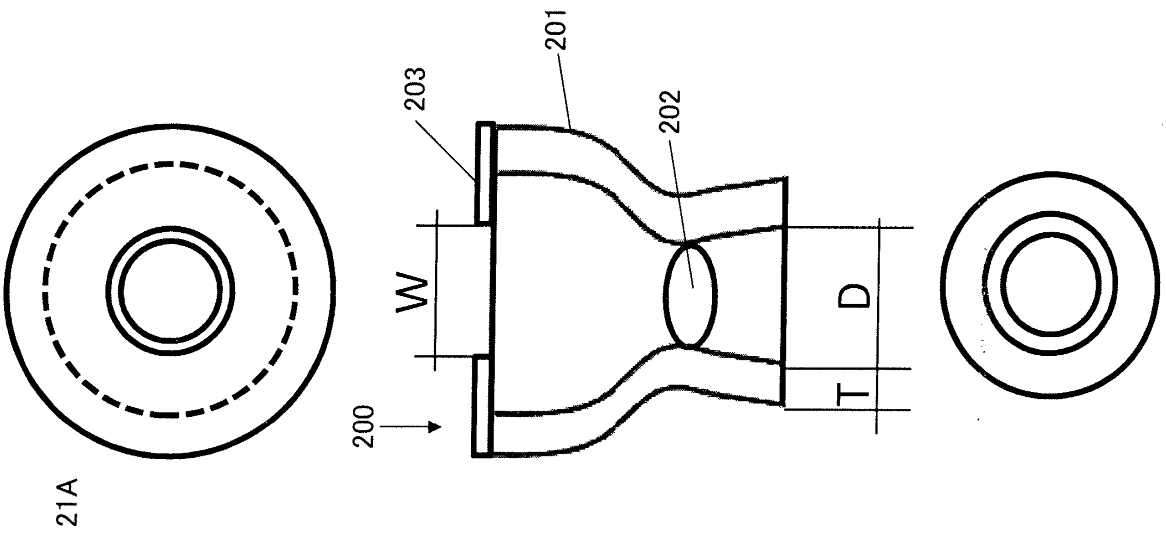


FIG. 21A

FIG. 22A

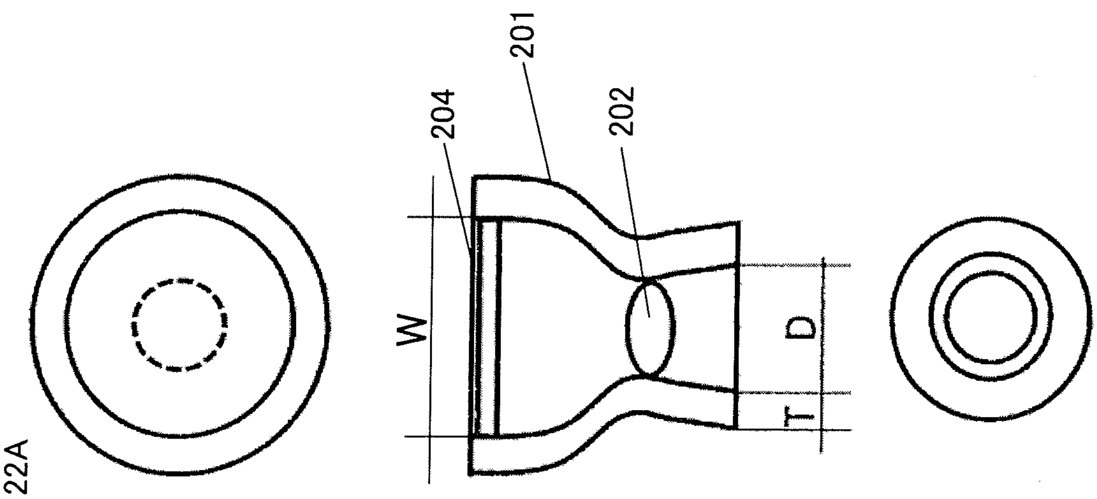


FIG. 22B

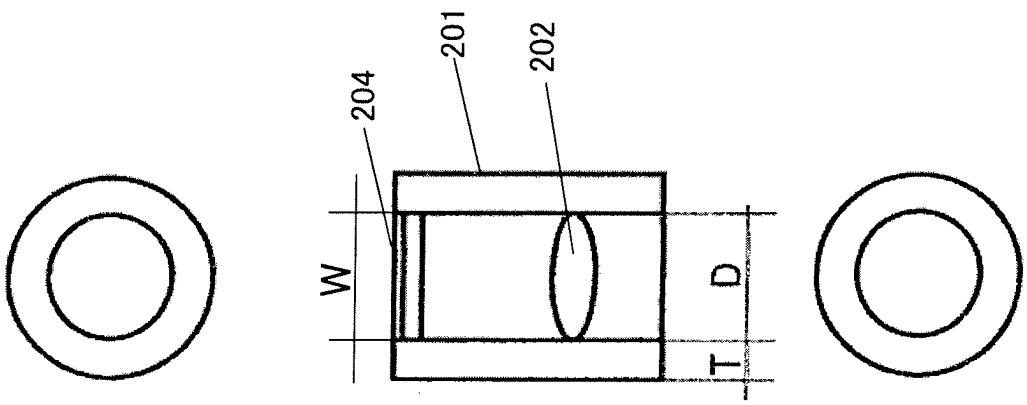


FIG. 22C

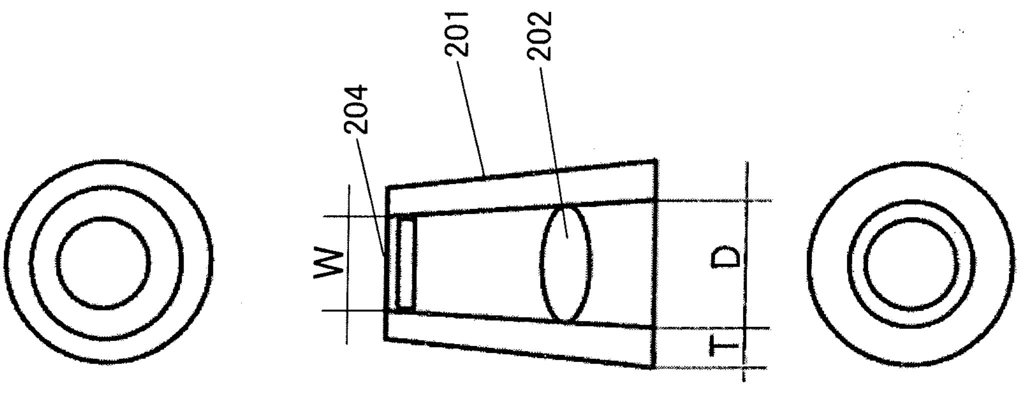

FIG. 23A

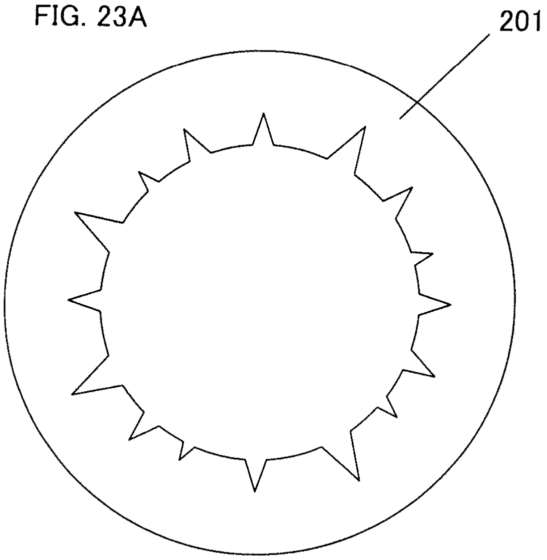


FIG. 23B

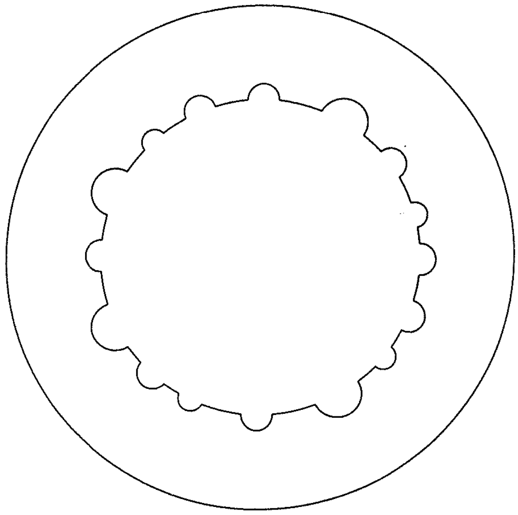

FIG. 23C

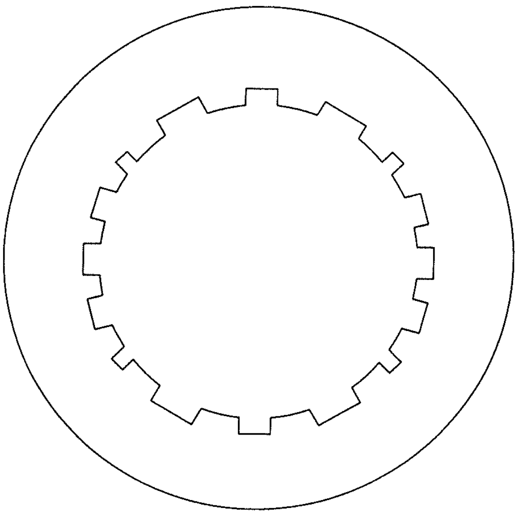

FIG. 23D

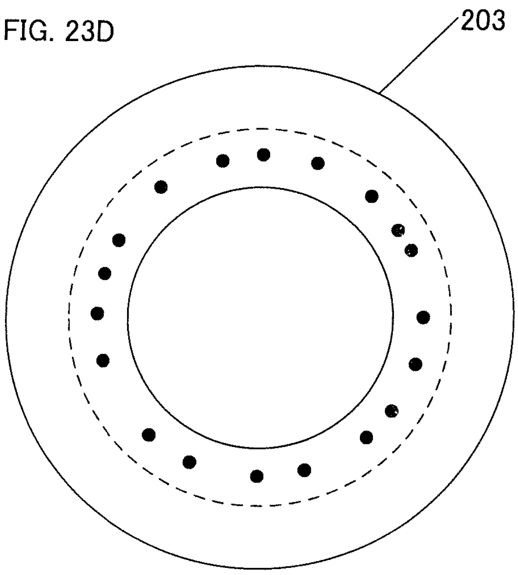

FIG. 24A

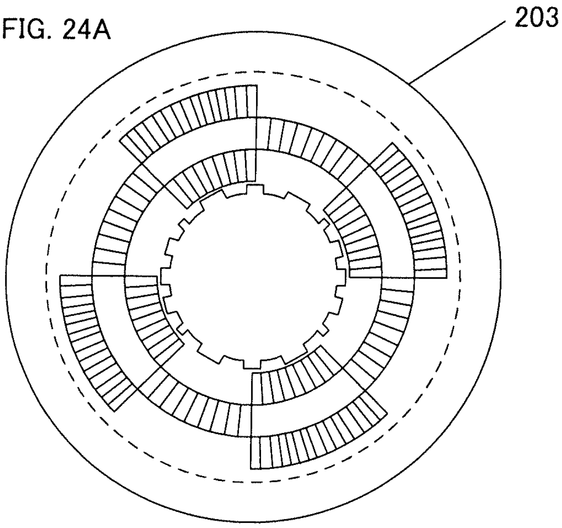


FIG. 24B

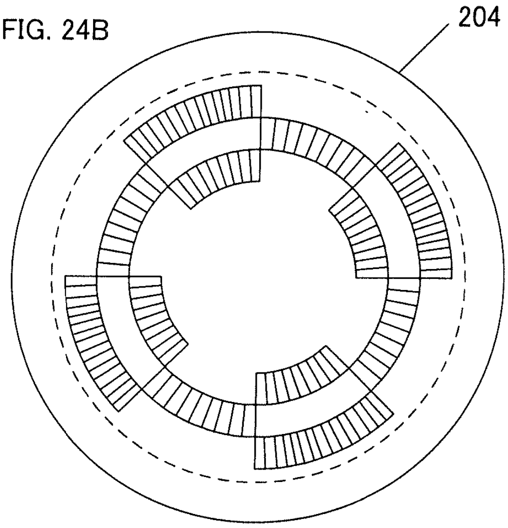


FIG. 24C

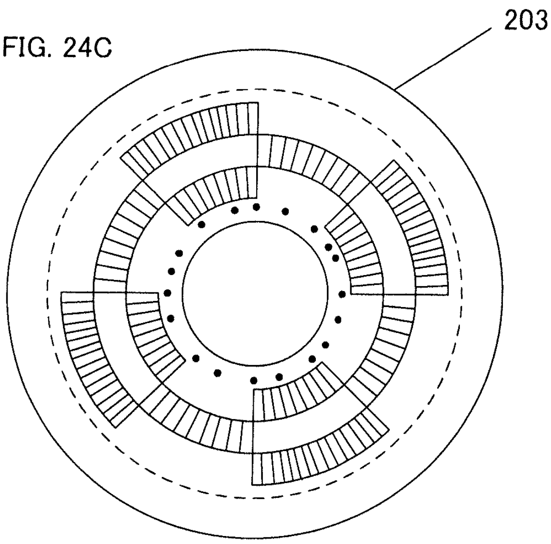


FIG. 24D

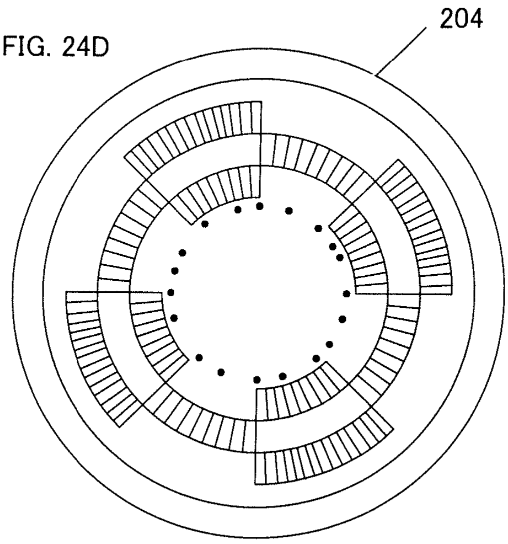

FIG. 25A

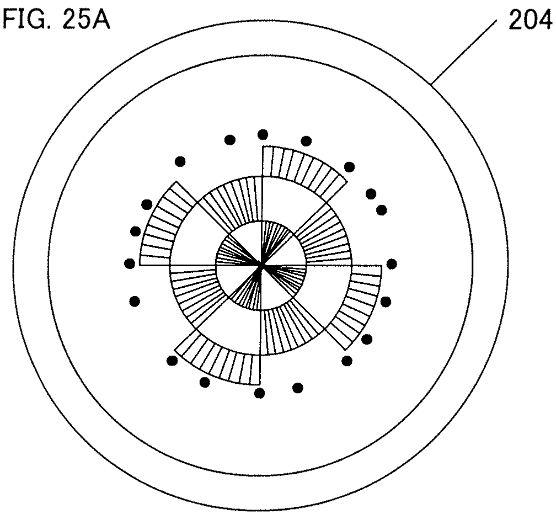


FIG. 25B

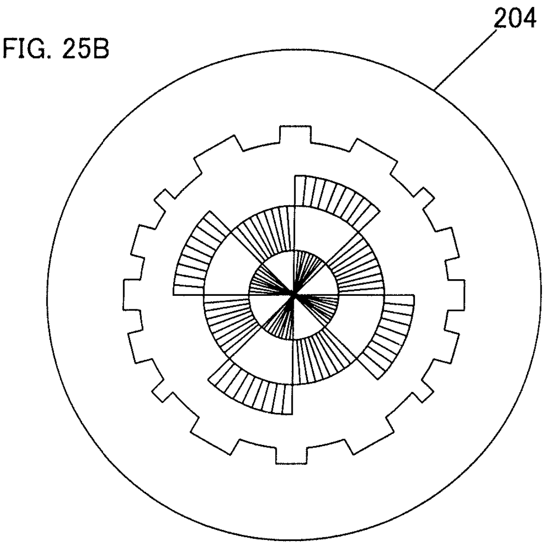


FIG. 25C

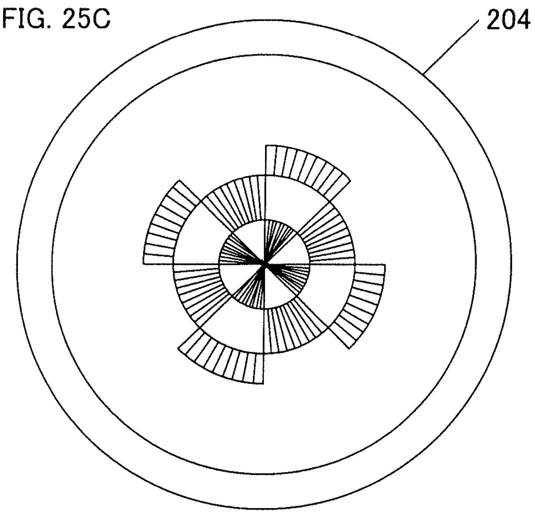

FIG. 26C

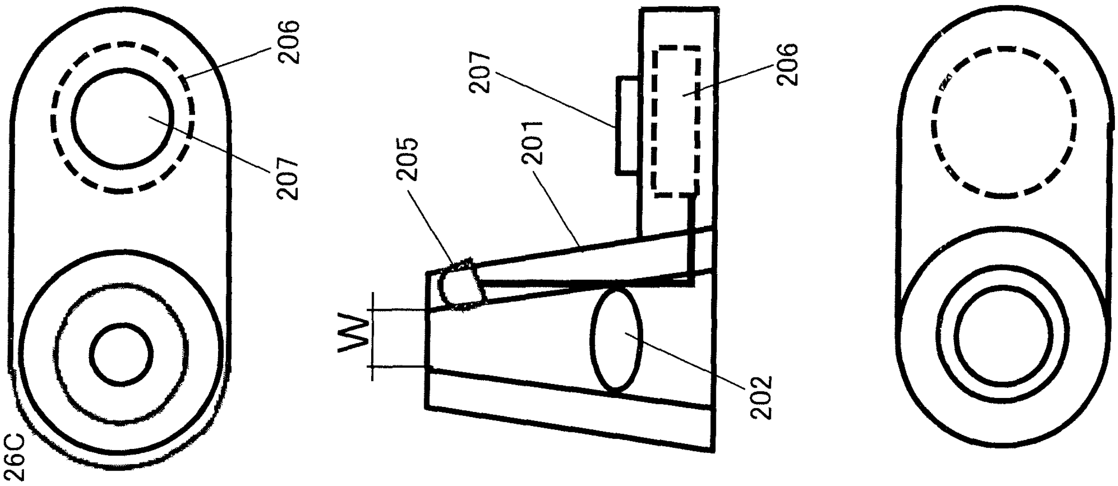


FIG. 26B

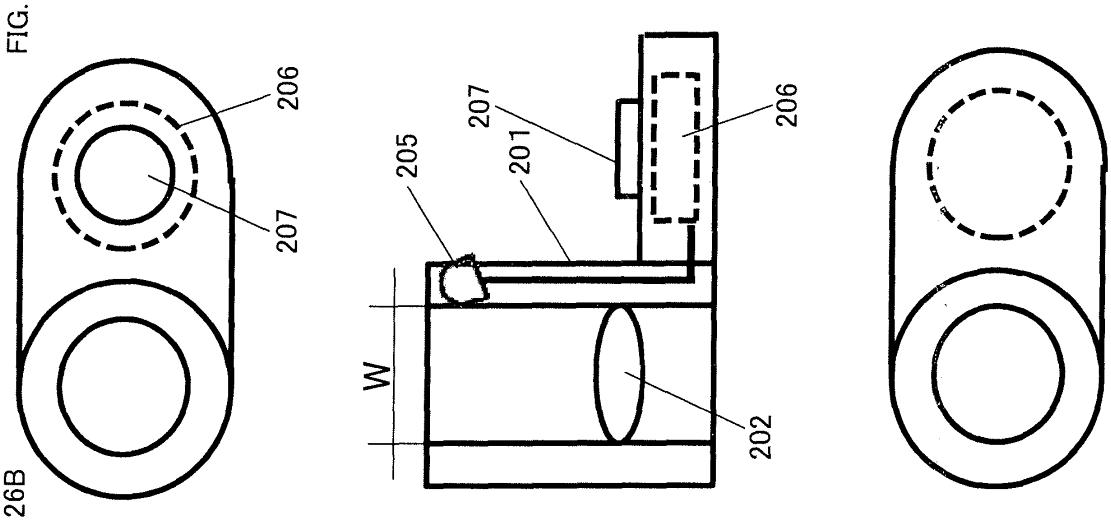


FIG. 26A

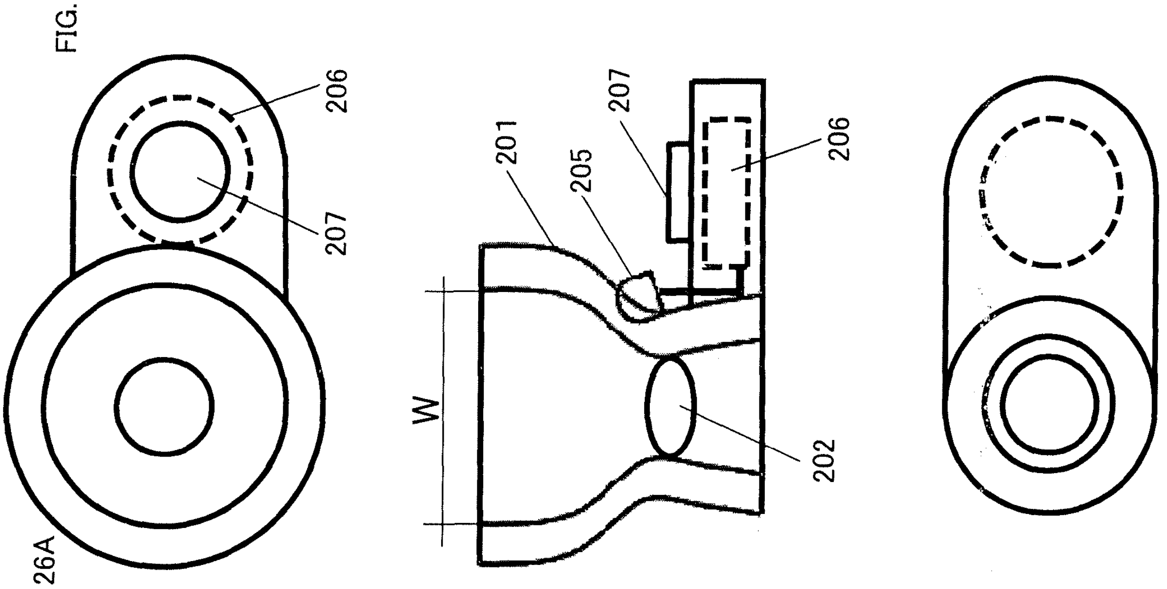

FIG. 27A

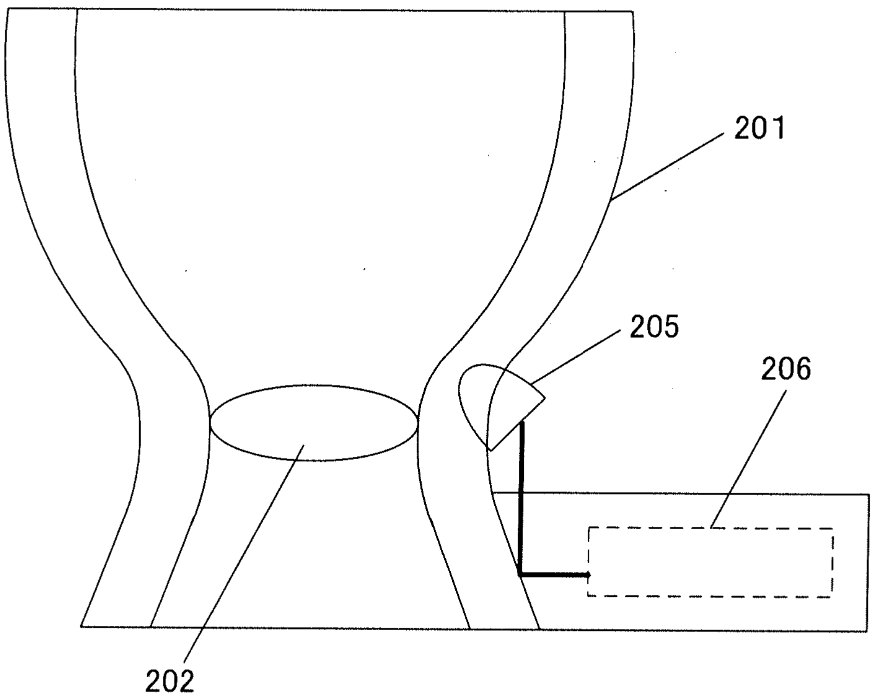


FIG. 27B

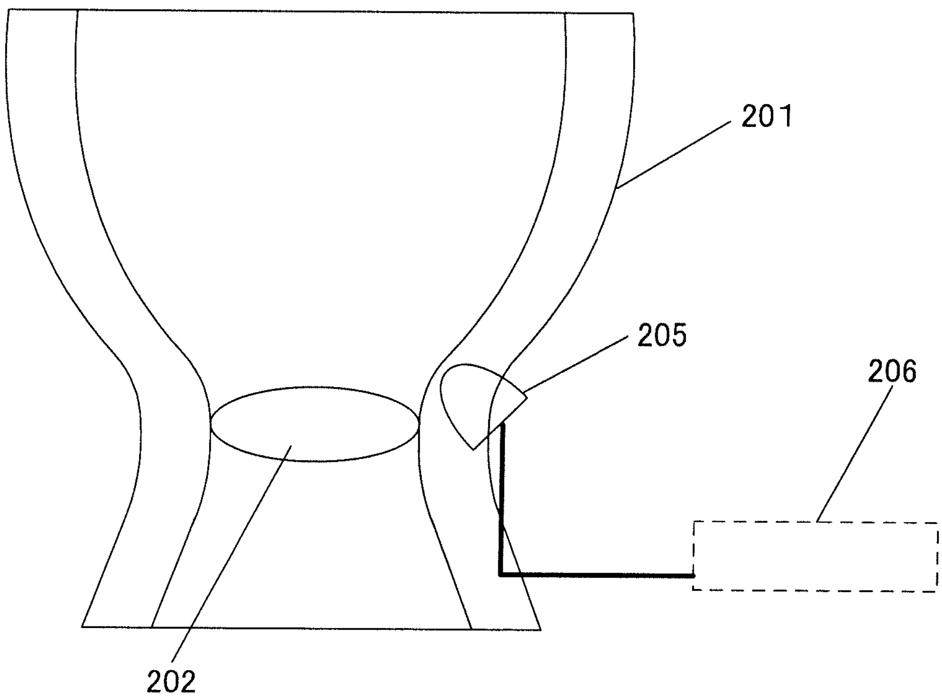

FIG. 28A

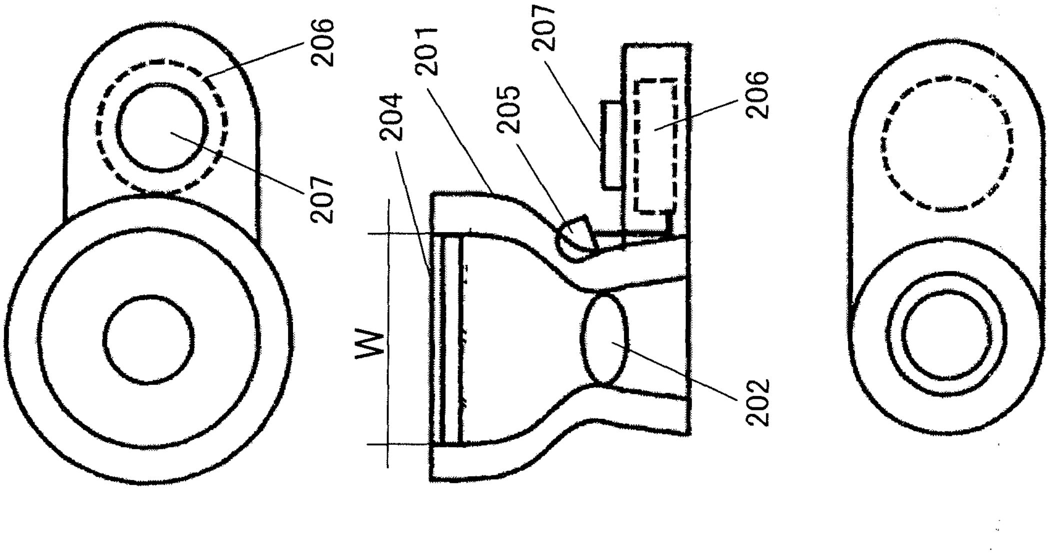


FIG. 28B

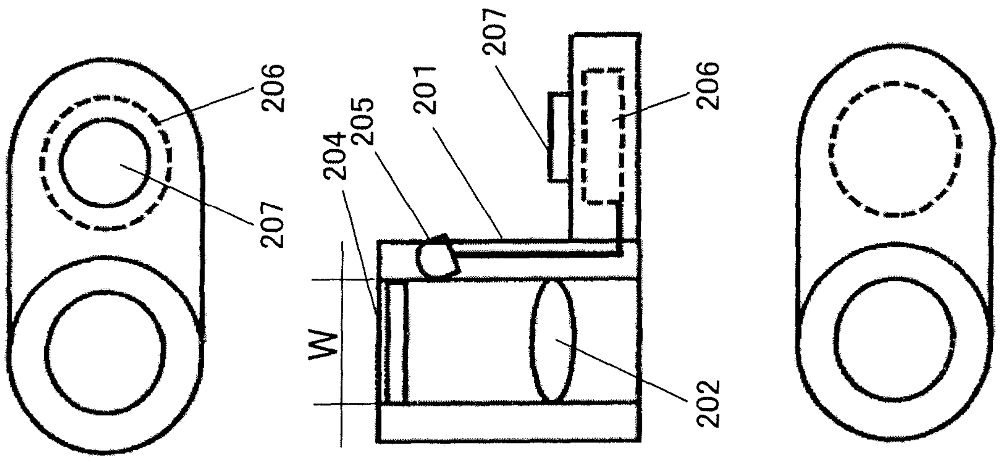


FIG. 28C

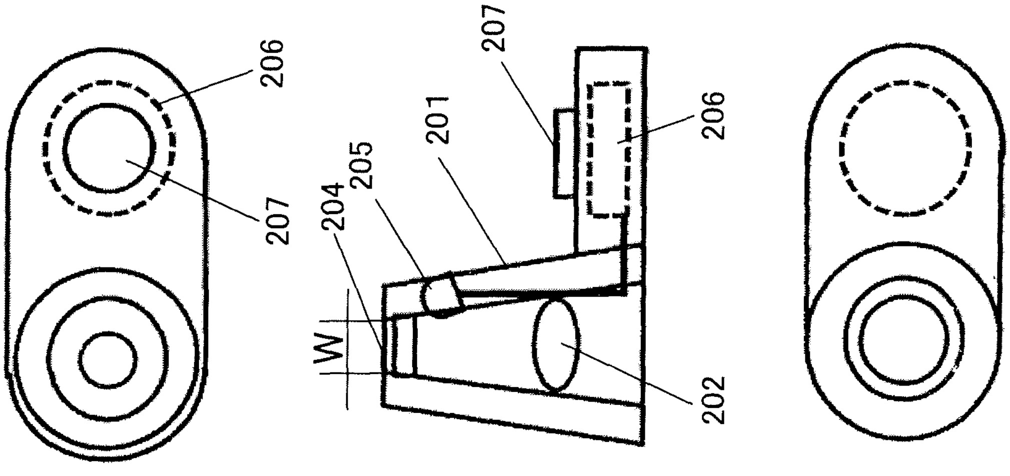

FIG. 29A

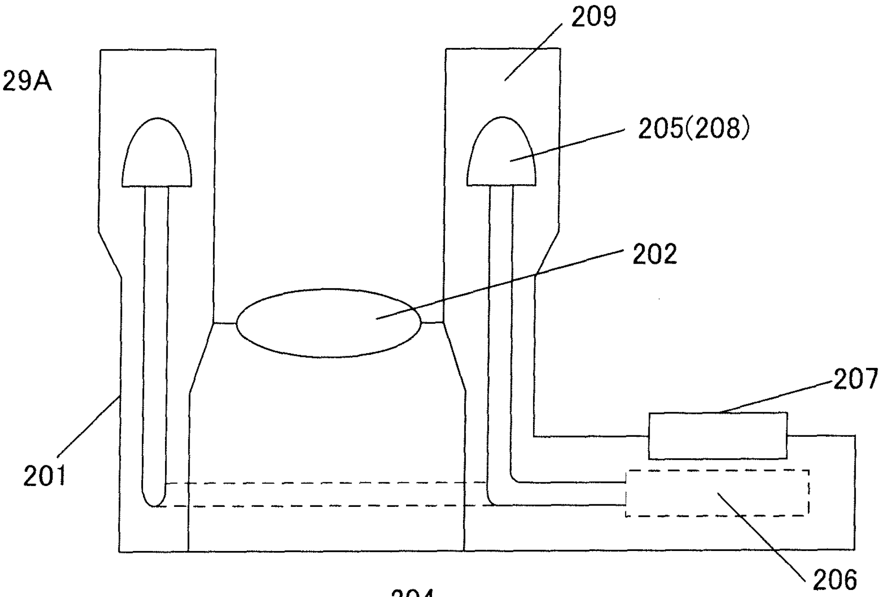


FIG. 29B

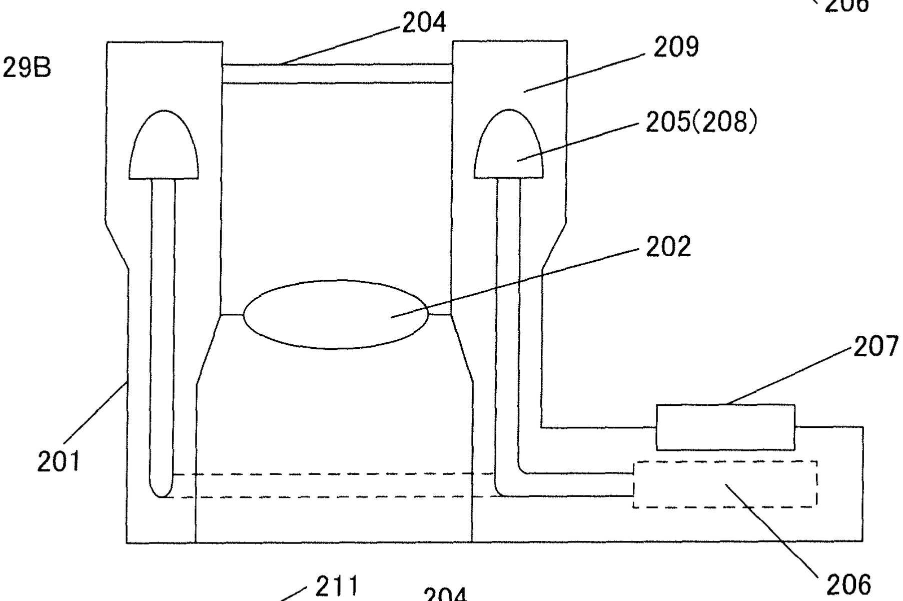


C

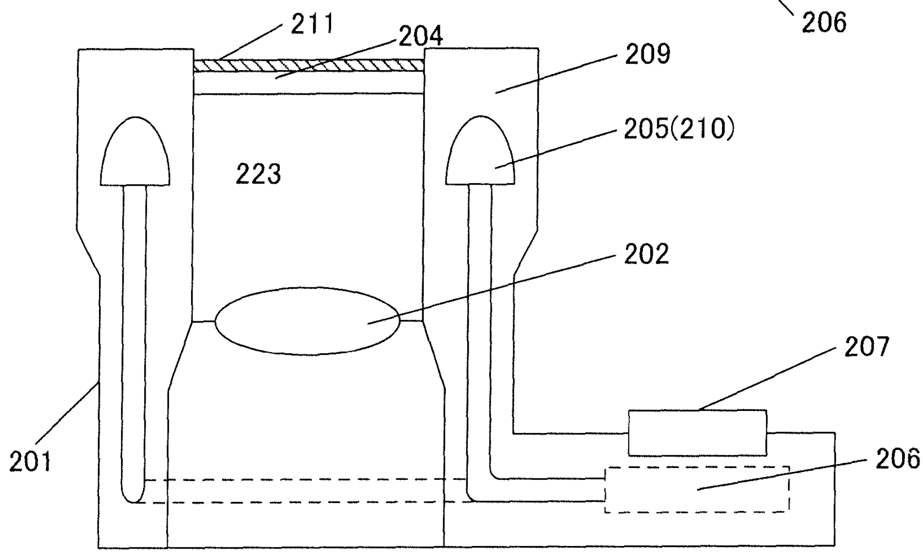

FIG.30

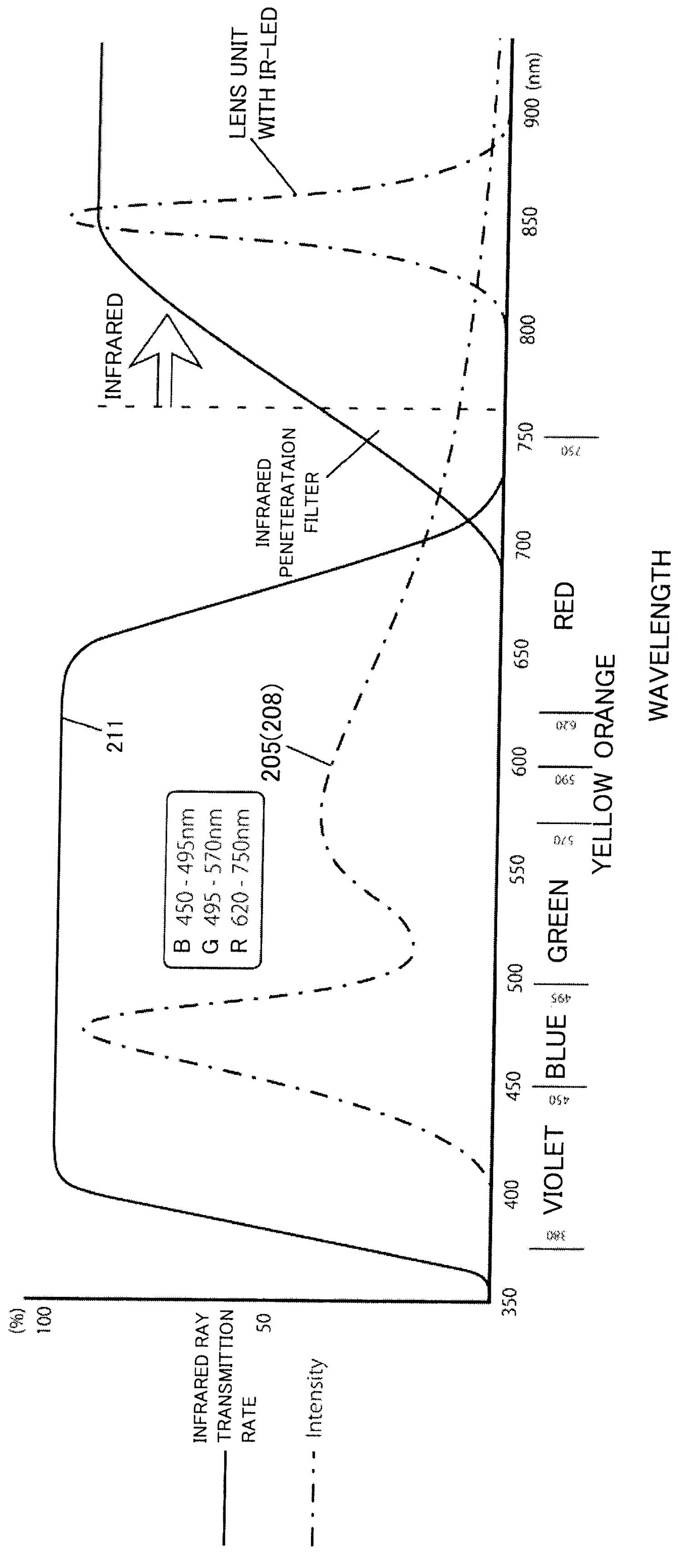
INFRARED RAY TRANSMITTION RATE
Intensity
(%)
100
50
350
400
450
500
550
600
650
700
750
800
850
900 (nm)
380
450
495
570
590
620
750
VIOLET
BLUE
GREEN
YELLOW
ORANGE
RED
WAVELENGTH
B 450 - 495nm
G 495 - 570nm
R 620 - 750nm
211
205(208)
INFRARED PENETERATAION FILTER
INFRARED
LENS UNIT WITH IR-LED

FIG.31

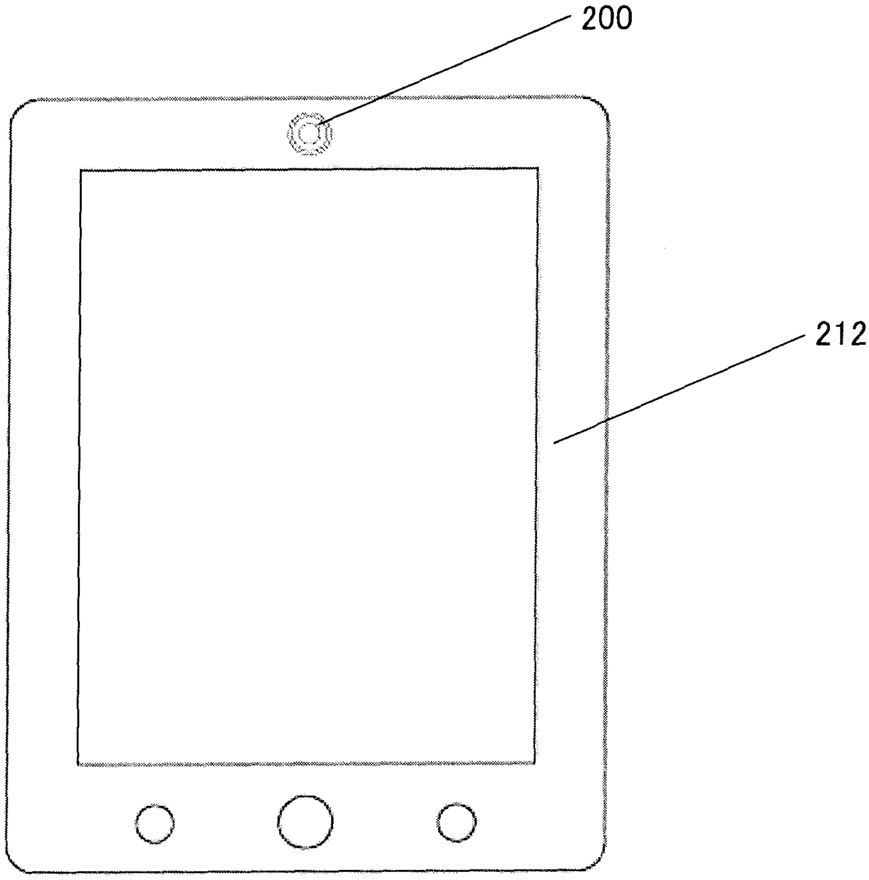

FIG. 32A

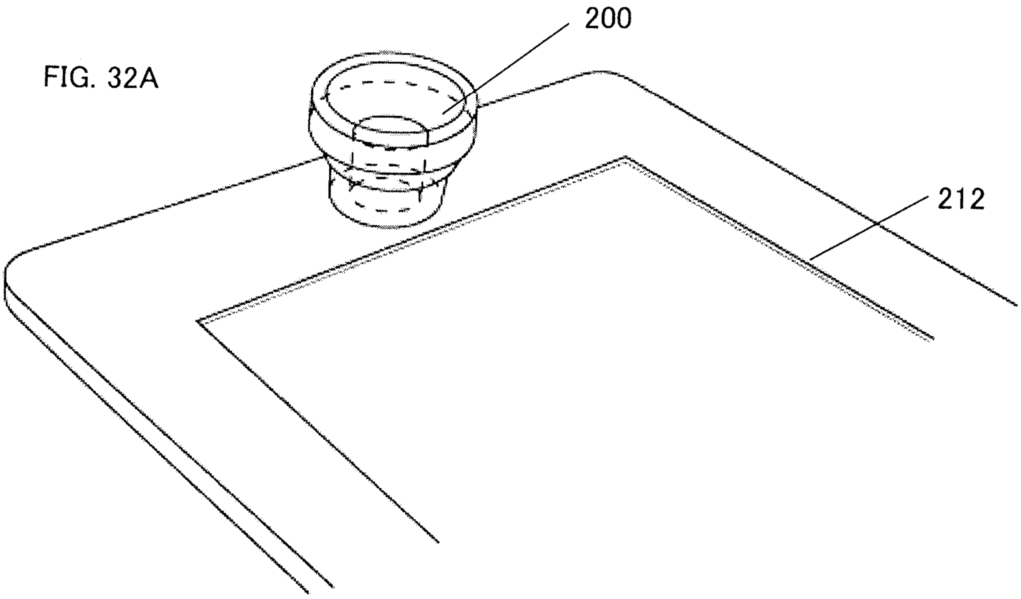


FIG. 32B

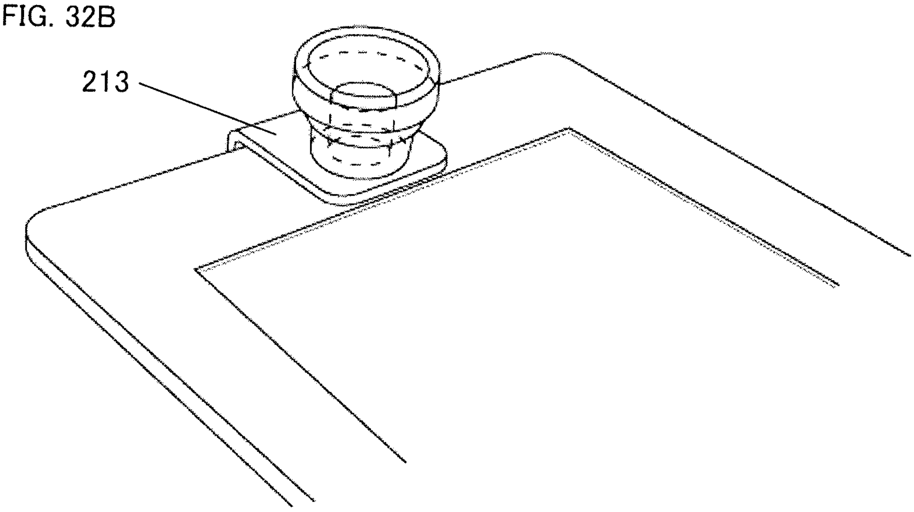


FIG. 32C

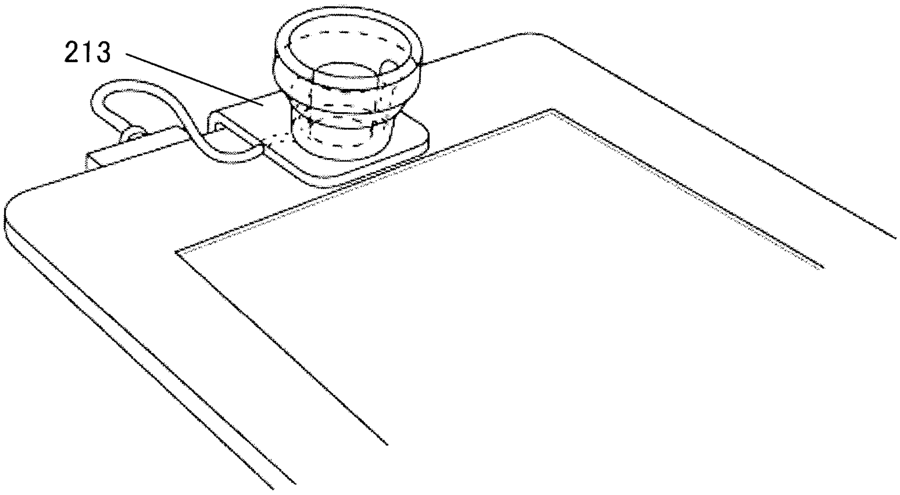

FIG. 33A

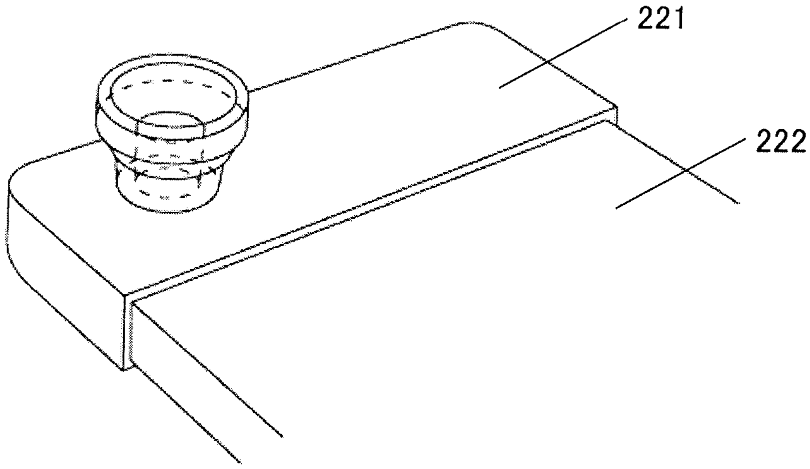


FIG. 33B

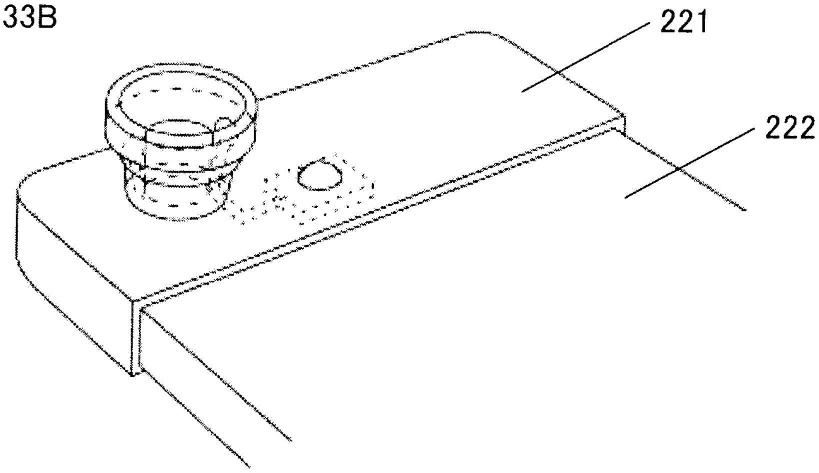


FIG. 33C

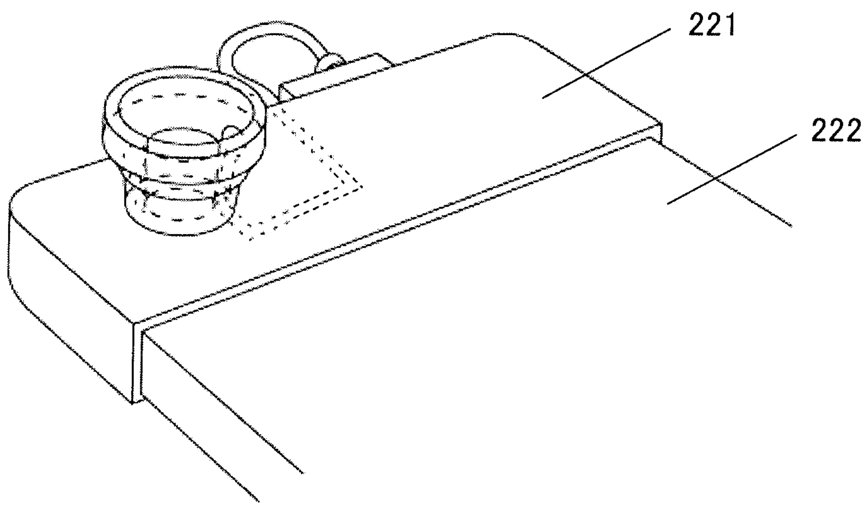

FIG. 34A

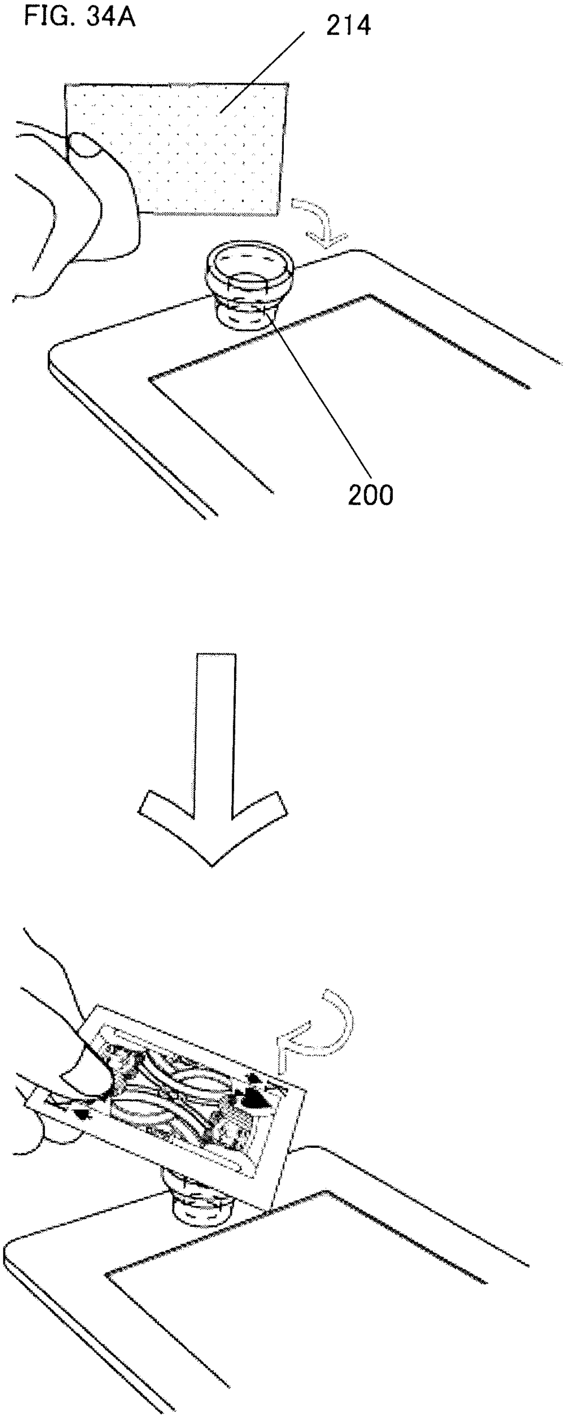


FIG. 34B

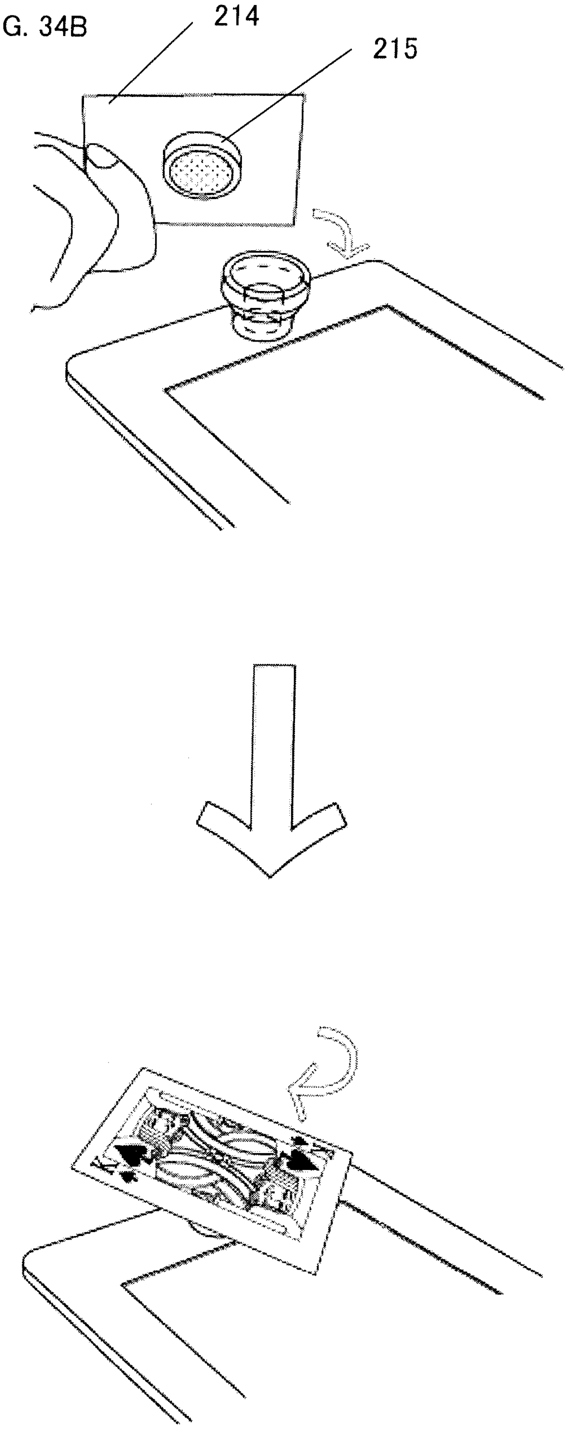

FIG. 35A

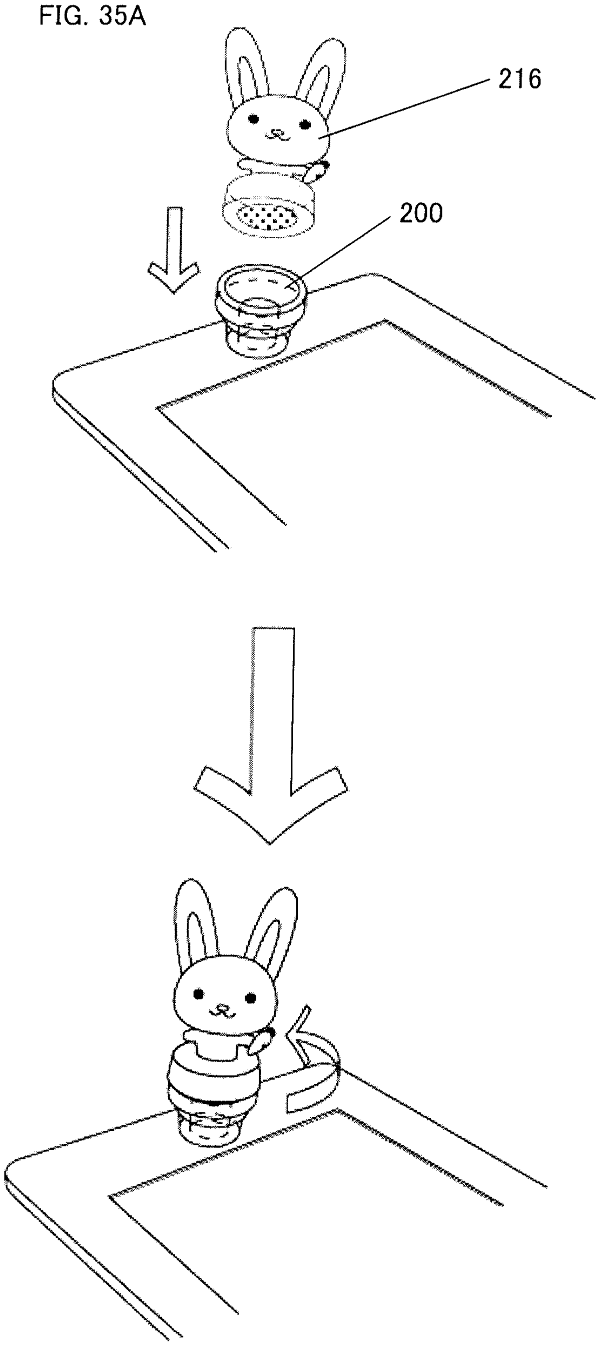


FIG. 35B

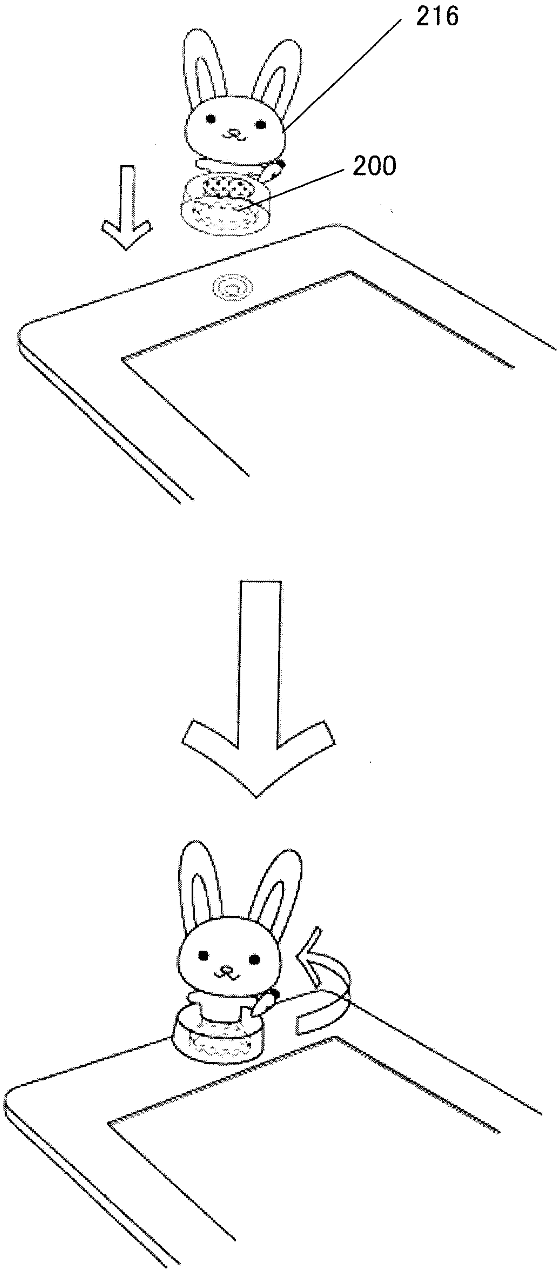

FIG. 36A

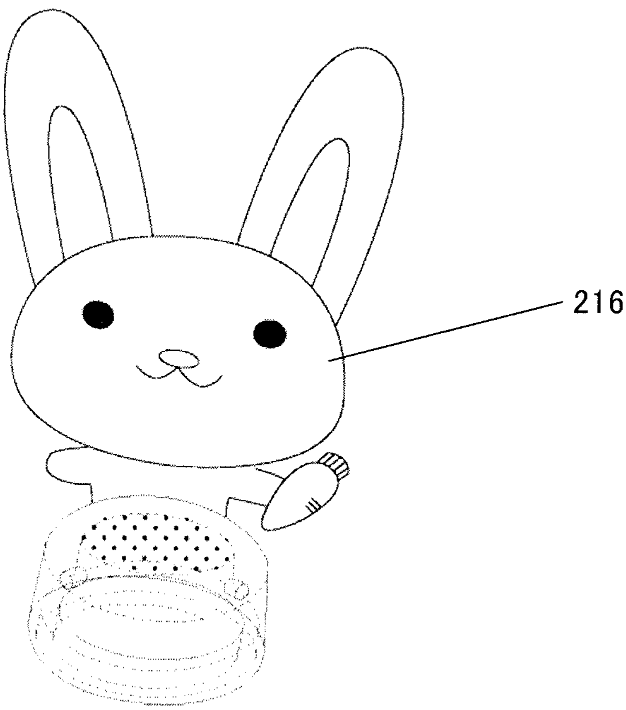


FIG. 36B

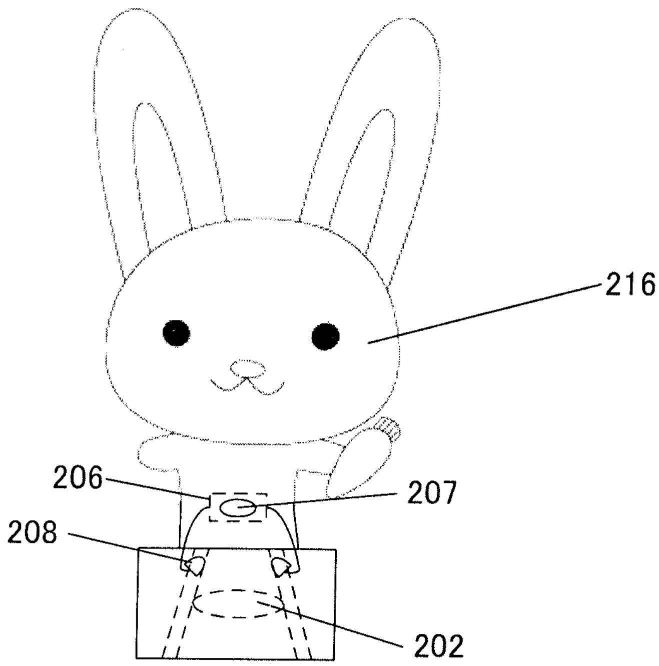

FIG.37

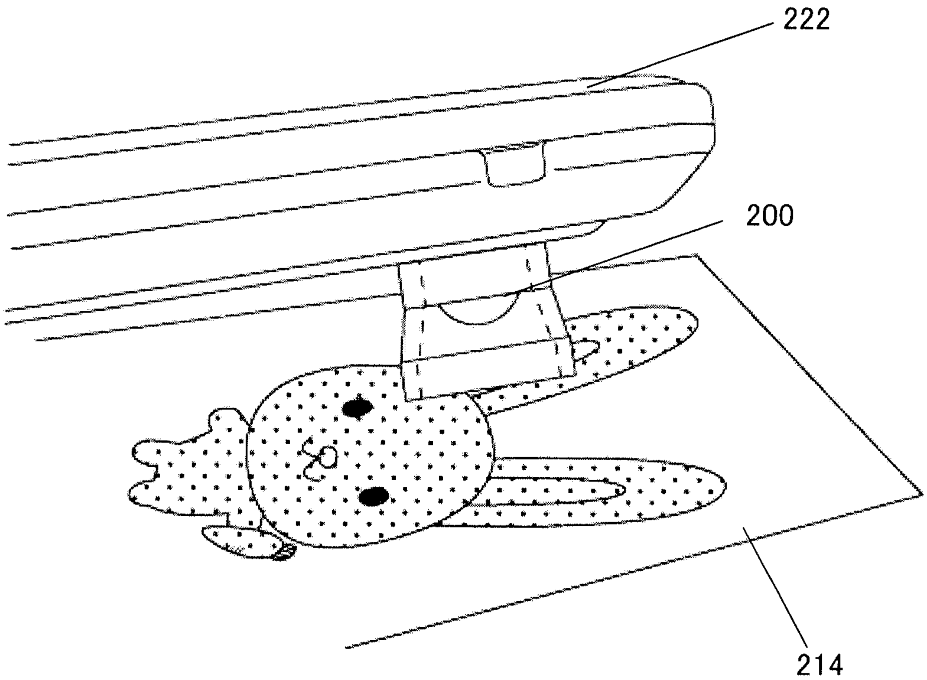


FIG.38

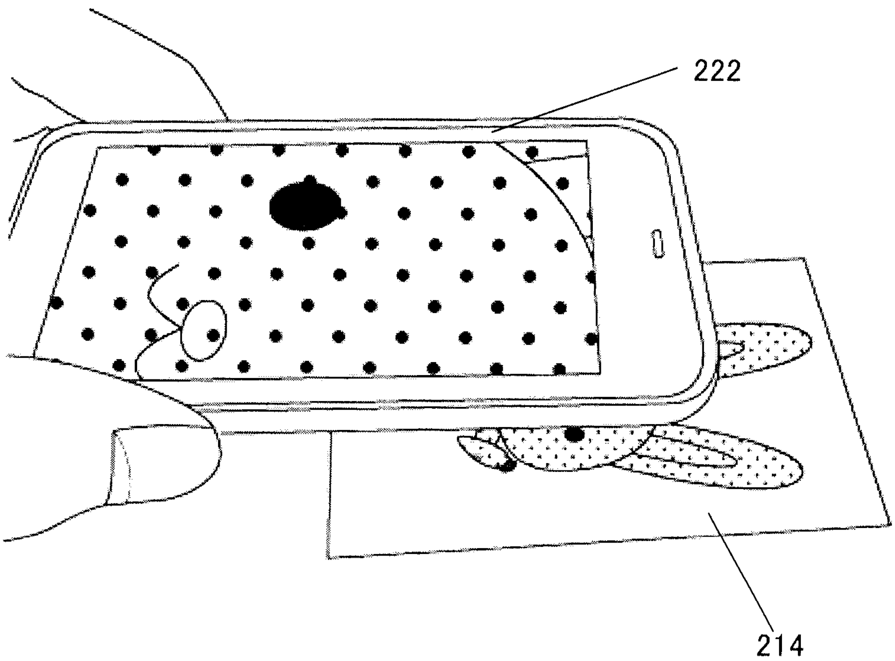

FIG. 39A

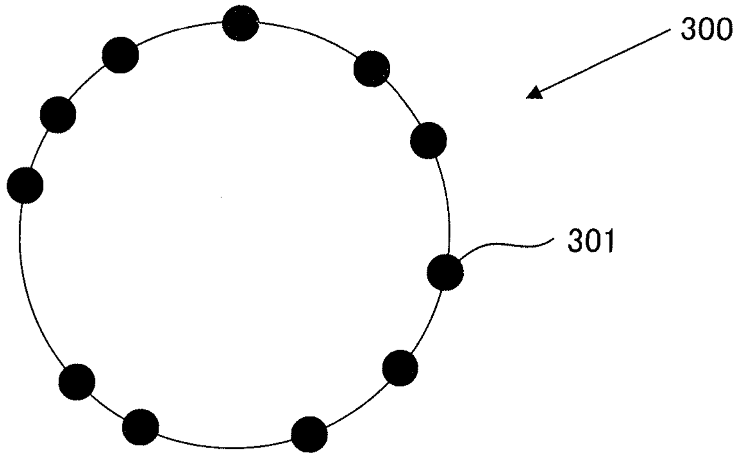


FIG. 39B

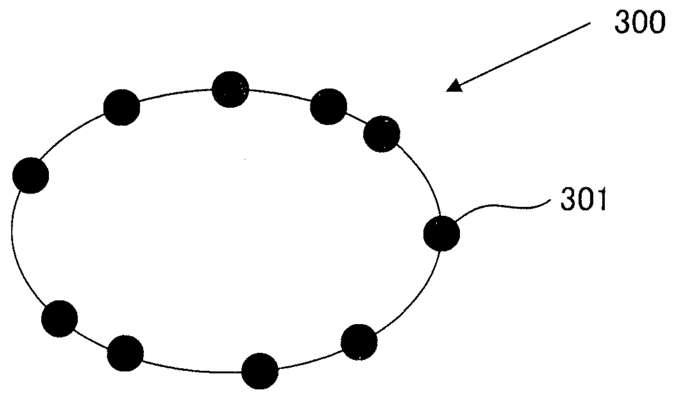


FIG. 39C

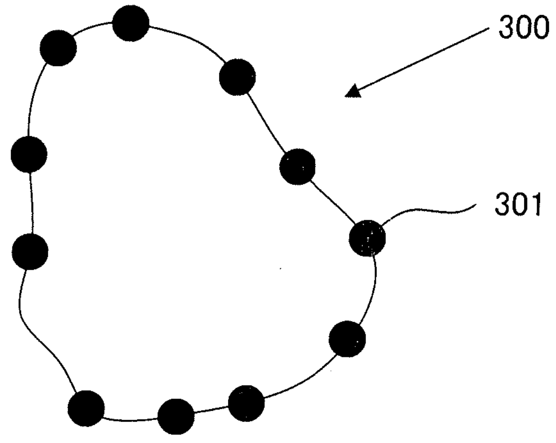

FIG. 40A

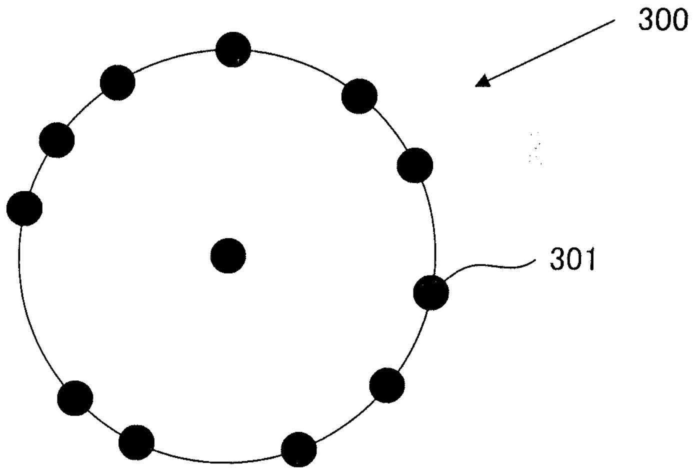


FIG. 40B

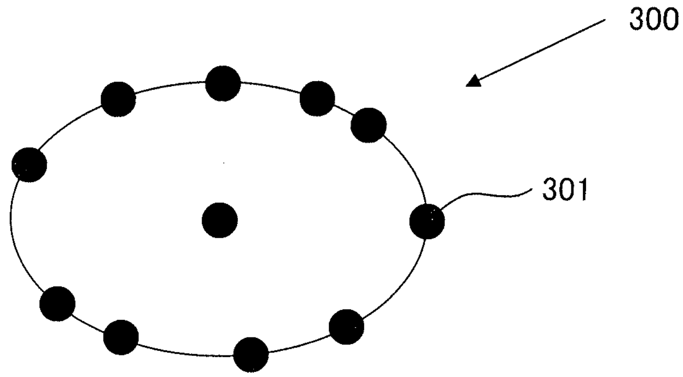


FIG. 40C

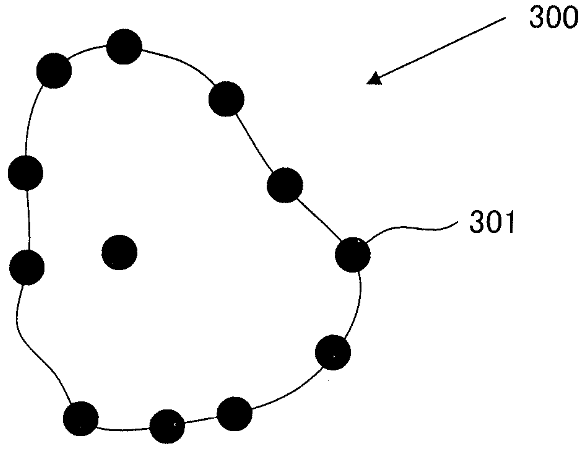

FIG. 41A

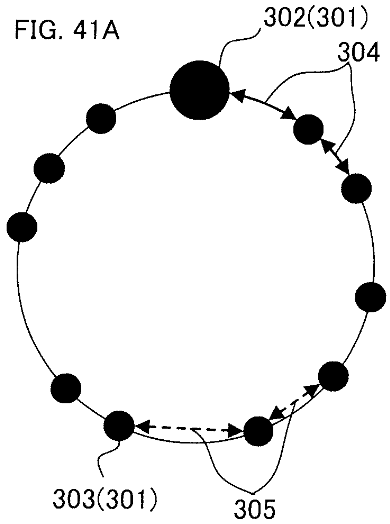


FIG. 41B

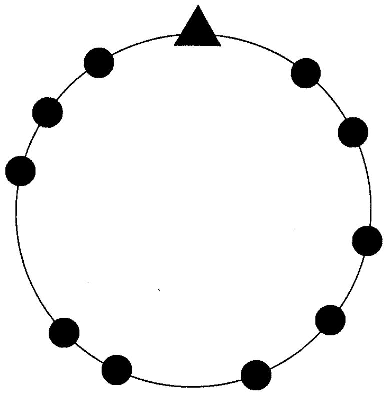

FIG. 41C

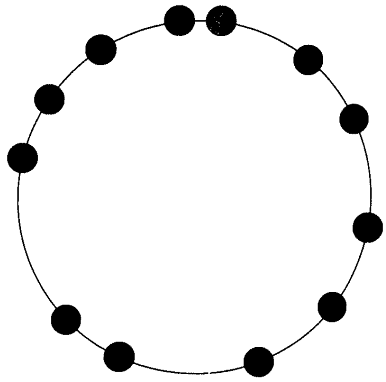

FIG. 41D

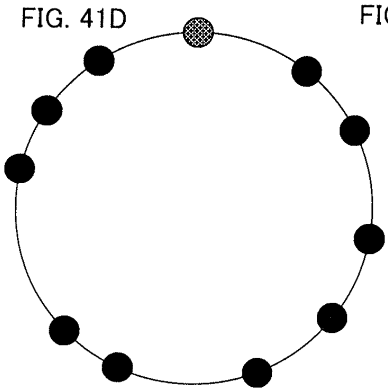

FIG. 41E

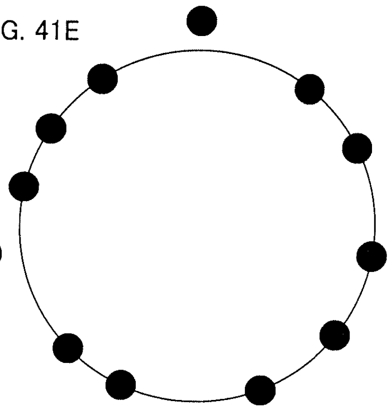

FIG. 41F

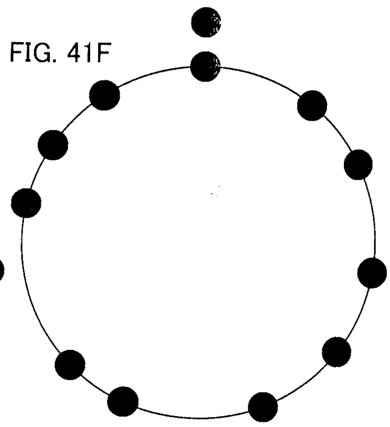

FIG. 41G

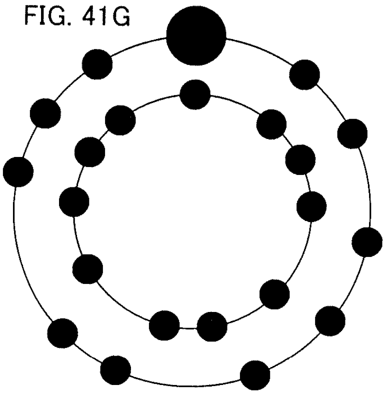

FIG. 41H

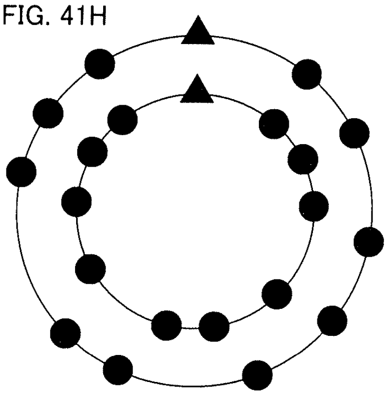

FIG. 41I

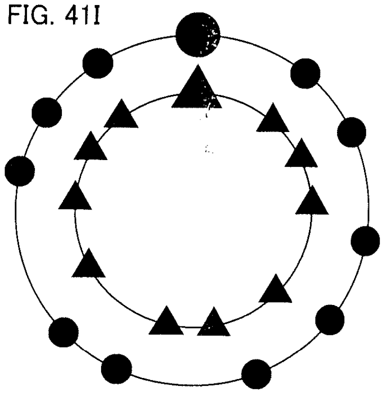

FIG. 42A

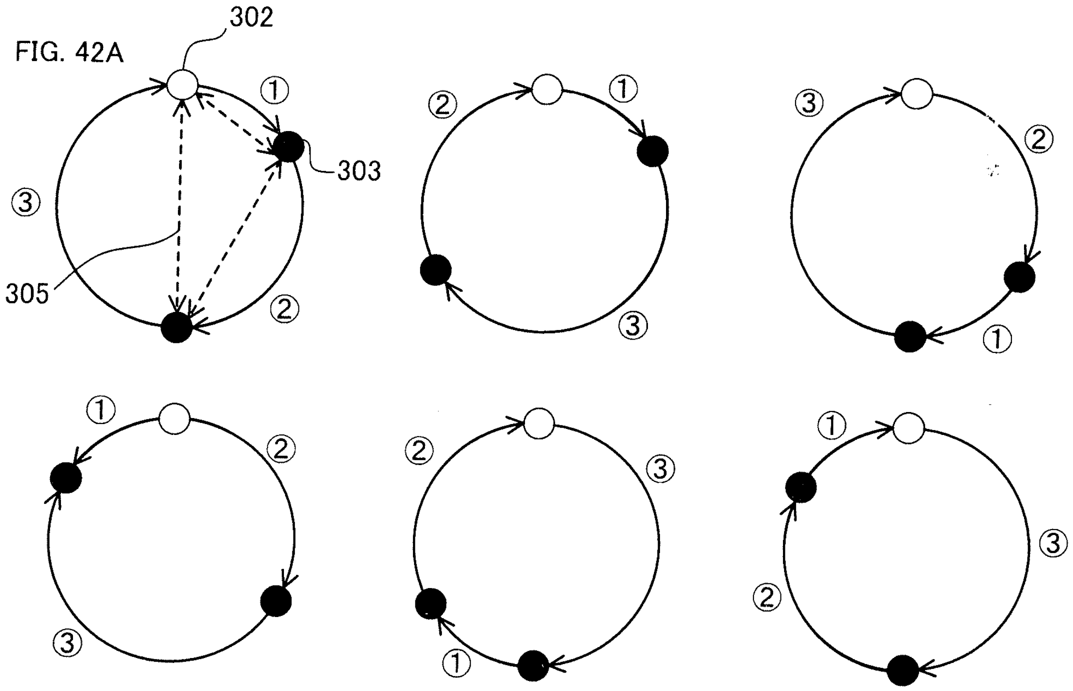


FIG. 42B

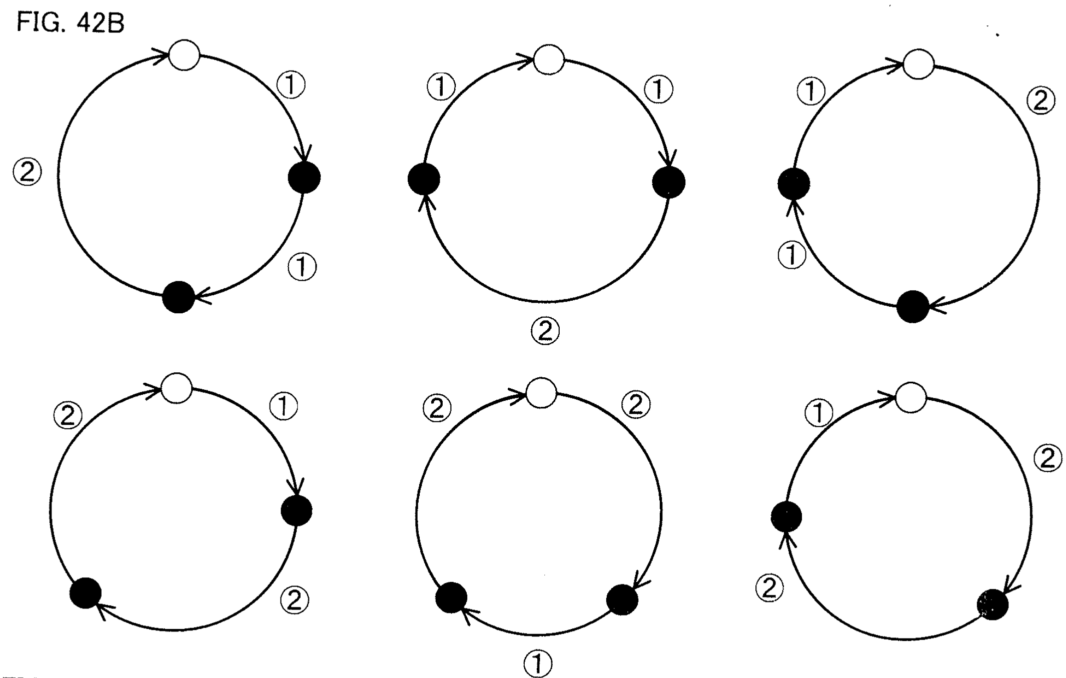

FIG. 42C

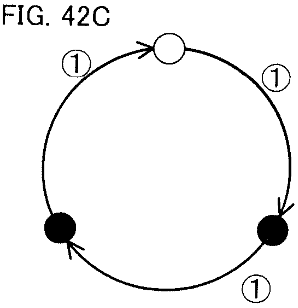

FIG.43

| TYPE NO. | CASE | CODE |
|---|---|---|
| 3 | ①→②→③ | 1 |
| | ①→③→② | 2 |
| | ②→①→③ | 3 |
| | ②→③→① | 4 |
| | ③→①→② | 5 |
| | ③→②→① | 6 |
| 2 | ①→①→② | 7 |
| | ①→②→① | 8 |
| | ②→①→① | 9 |
| | ①→②→② | 10A |
| | ②→①→② | 11B |
| | ②→②→① | 12C |
| 1 | ①→①→① | 13D |

FIG. 44A

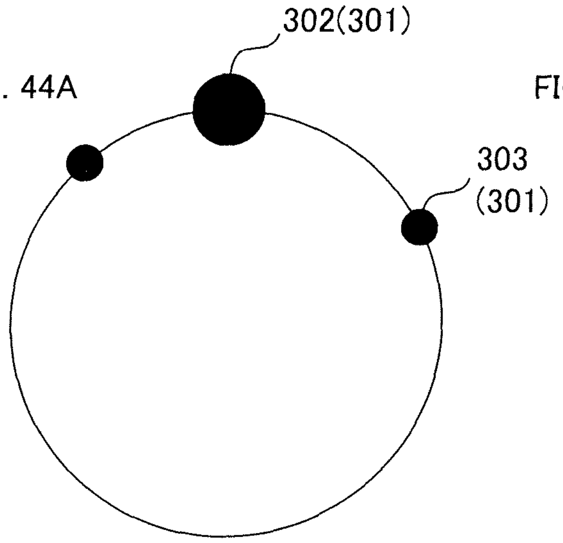


FIG. 44B

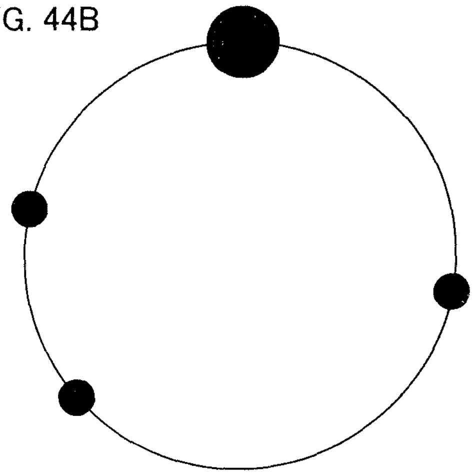

FIG. 44C

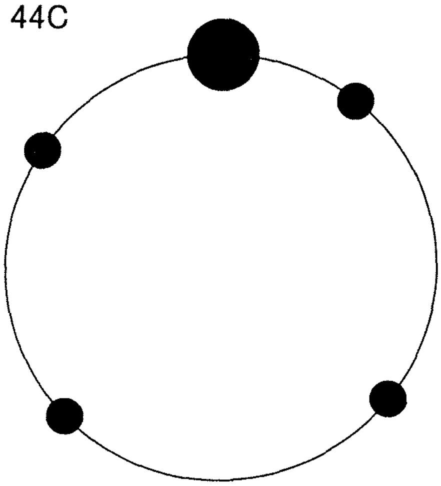

FIG. 45A

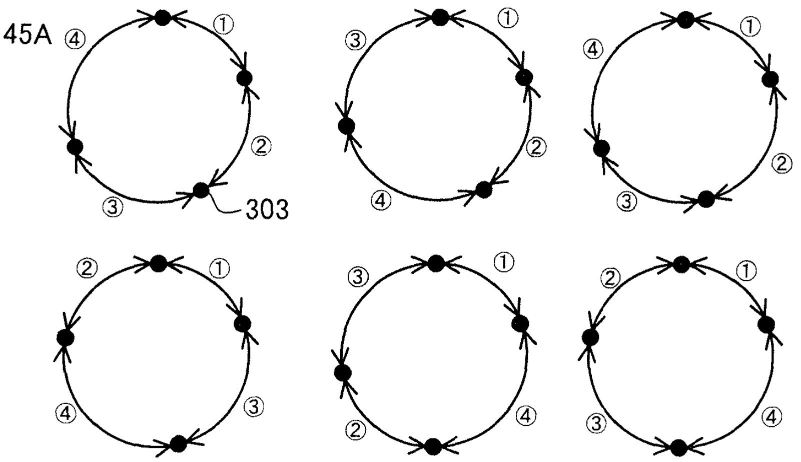


FIG. 45B

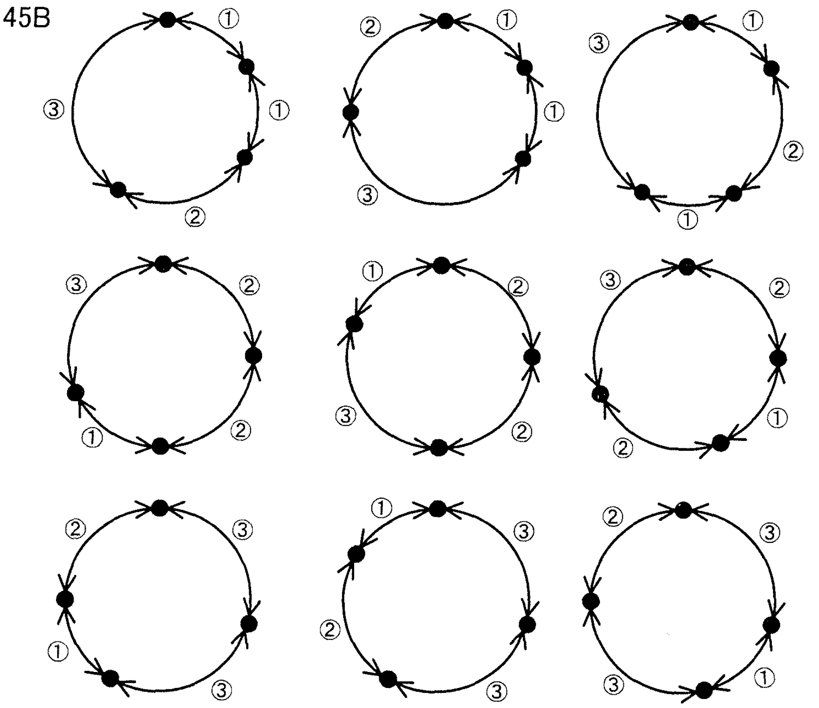

FIG. 45C

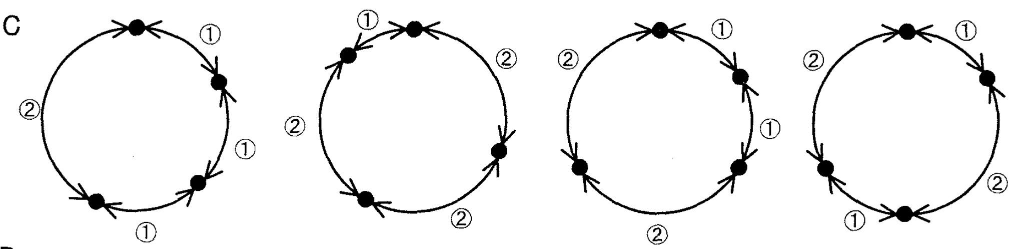

FIG. 45D

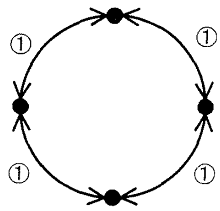

FIG.46

| TYPE NO. | CASE | CODE |
|---|---|---|
| 4 | 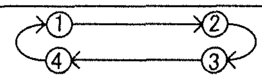 | 1 |
| | 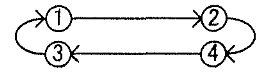 | 2 |
| | 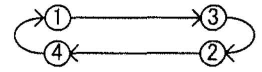 | 3 |
| | 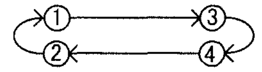 | 4 |
| | 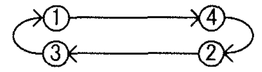 | 5 |
| | 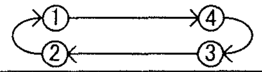 | 6 |
| 3 | 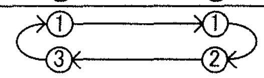 | 7 |
| | 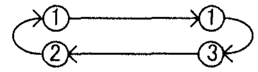 | 8 |
| | 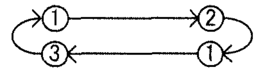 | 9 |
| | 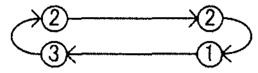 | 10A |
| | 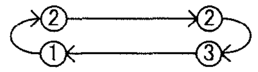 | 11B |
| | 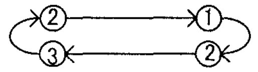 | 12C |
| | 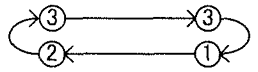 | 13D |
| | 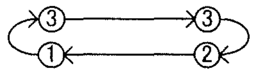 | 14(E) |
| | 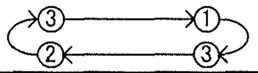 | 15(F) |
| 2 | 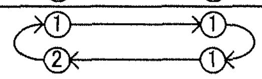 | 16(G) |
| | 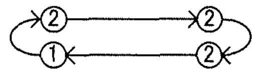 | 17(H) |
| | 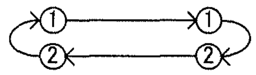 | 18(I) |
| | 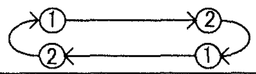 | 19(J) |
| 1 | 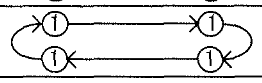 | 20(K) |

FIG.47

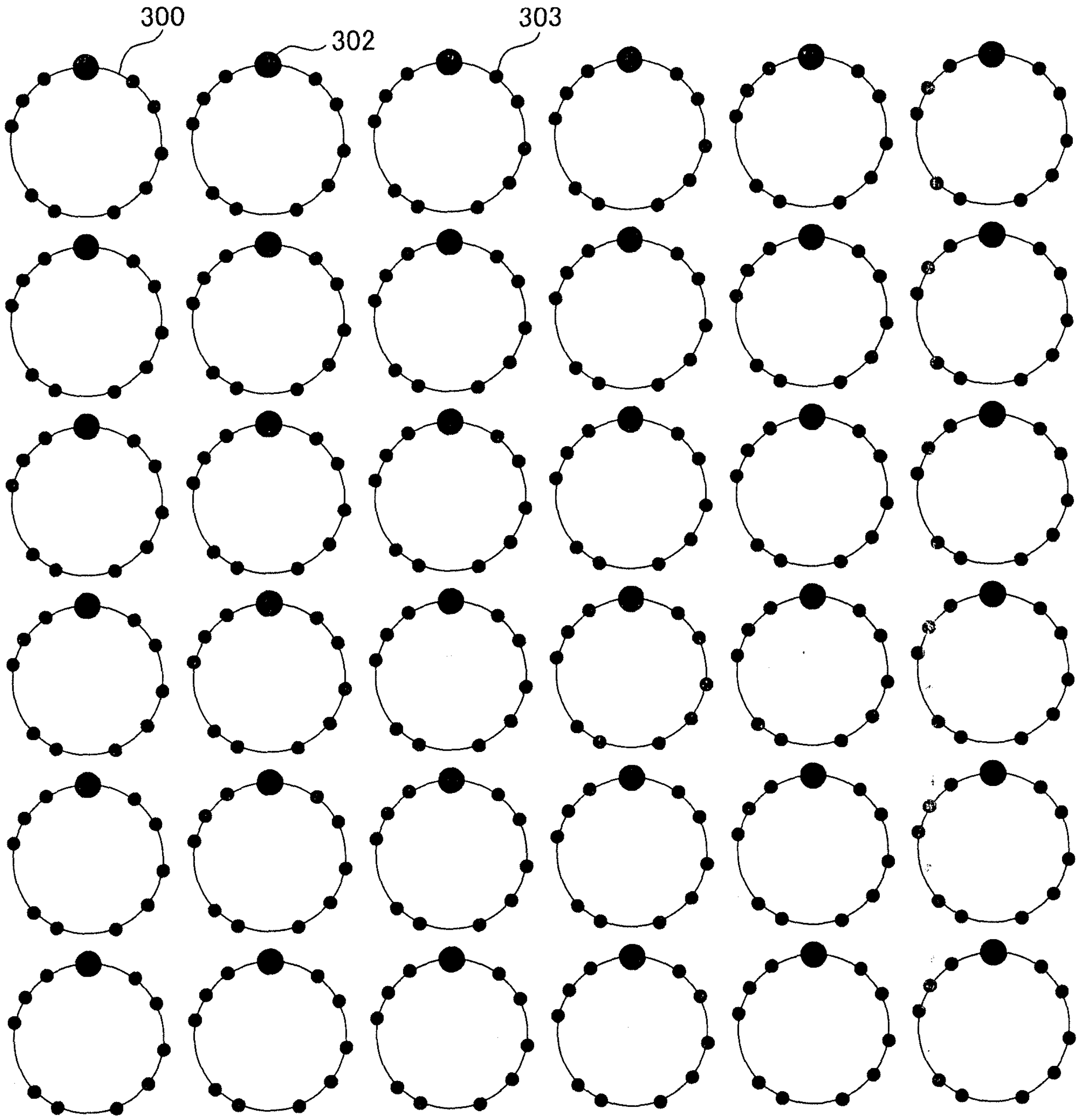

FIG. 48A

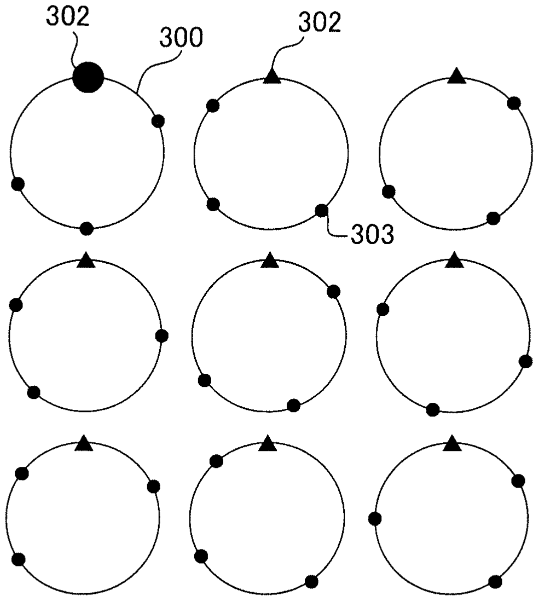


FIG. 48B

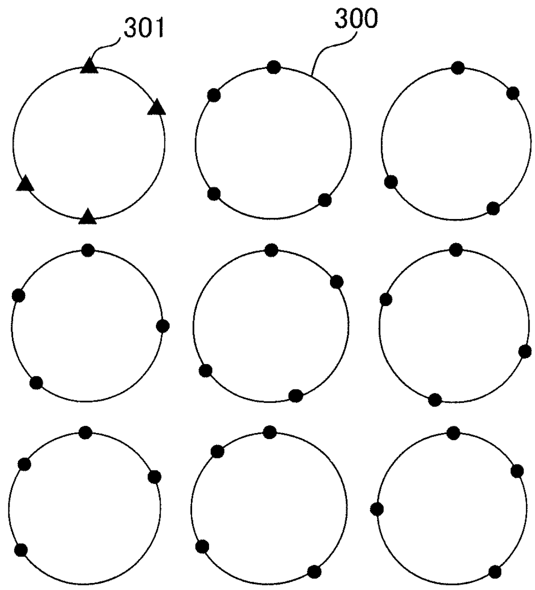


FIG. 48C

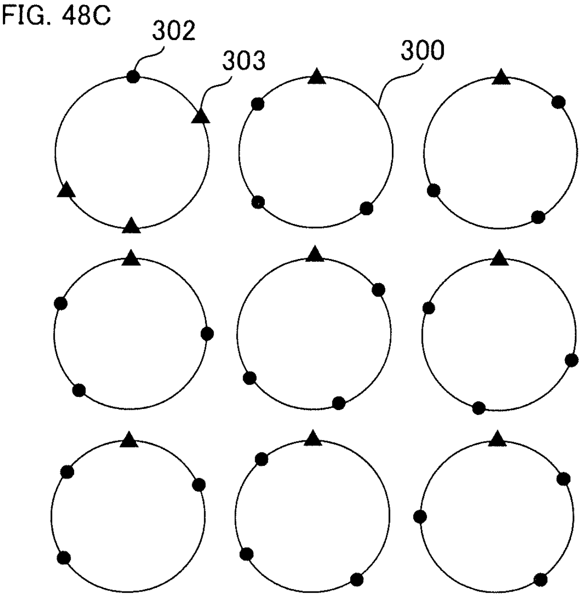

FIG. 49A

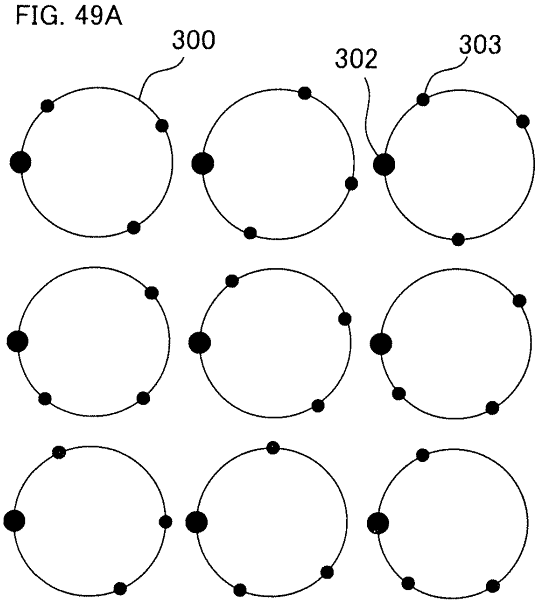


FIG. 49B

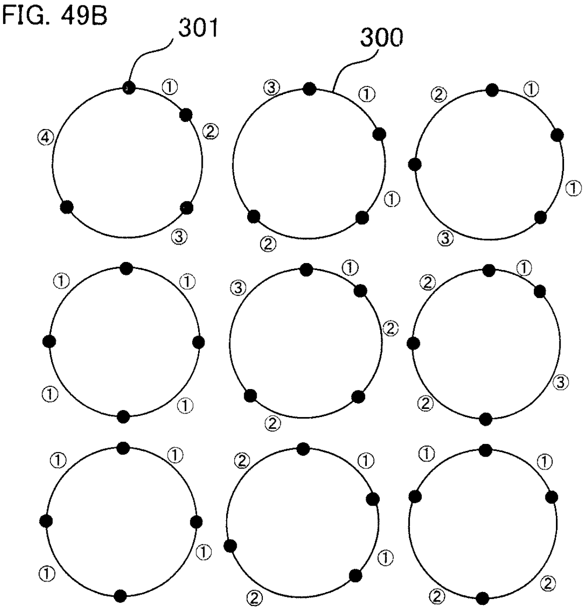


FIG. 49C

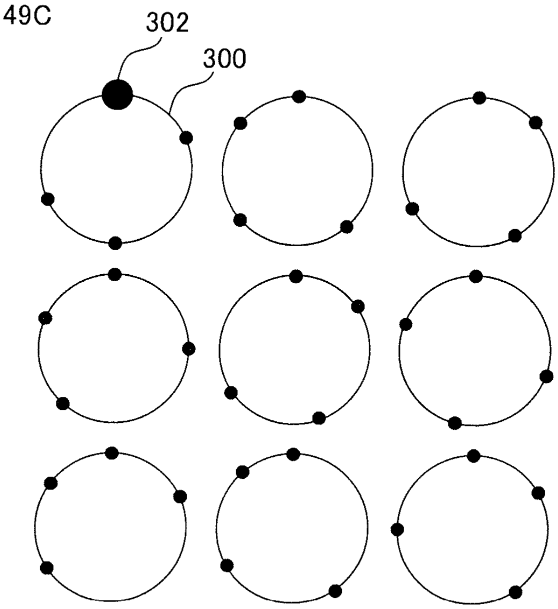

FIG.50

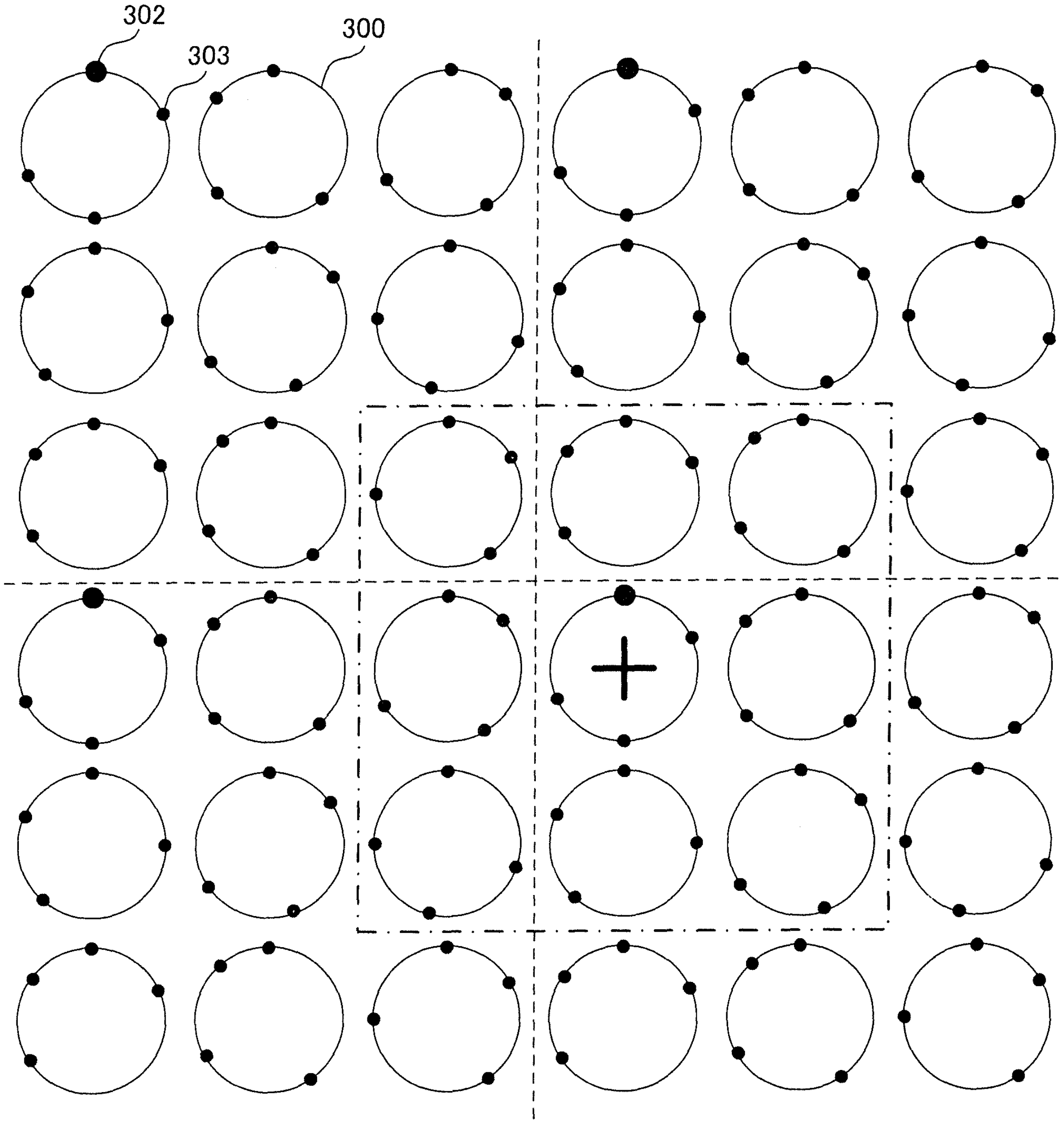

FIG. 51

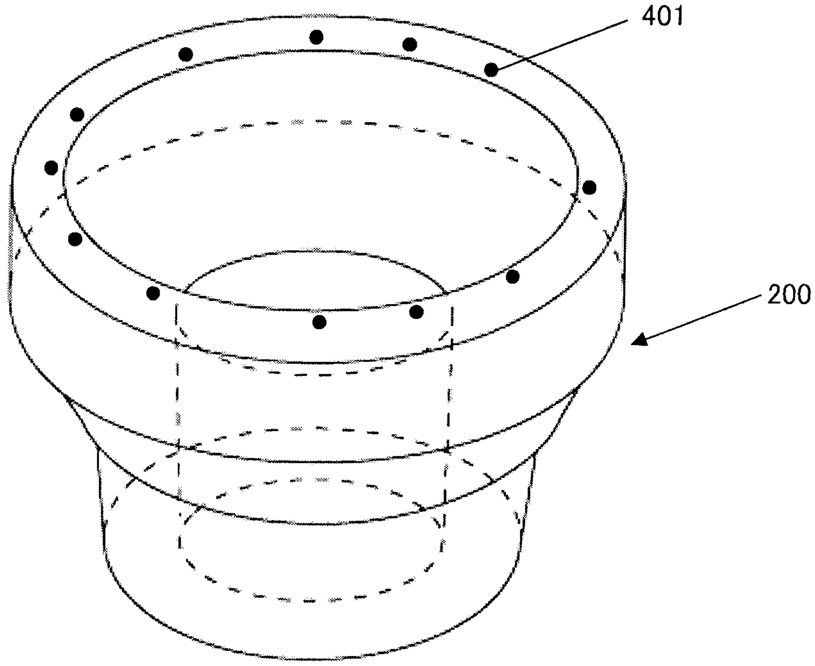

FIG. 52A

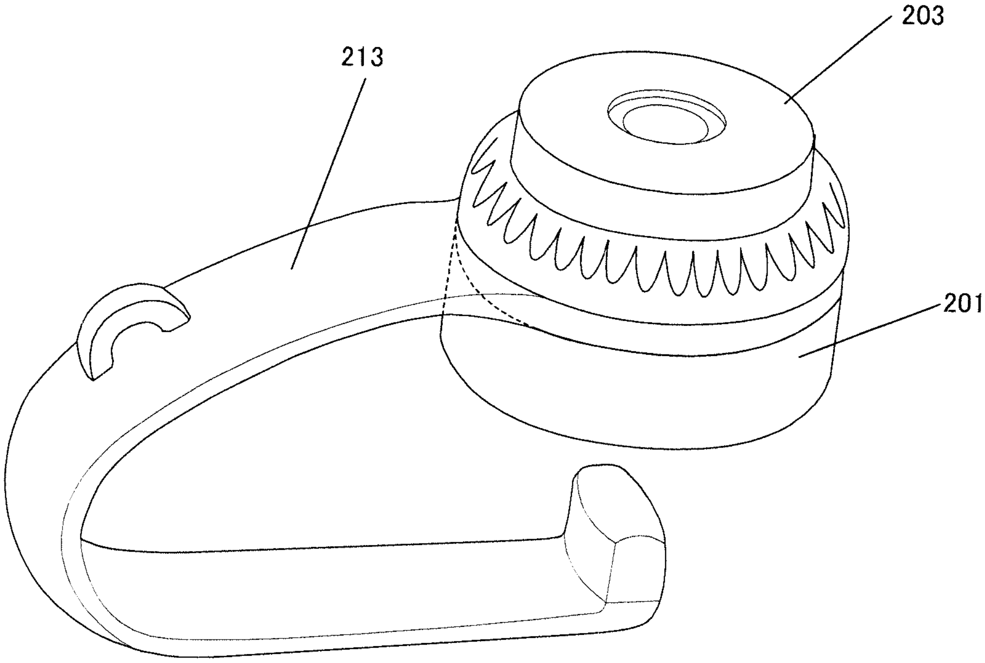


FIG. 52B

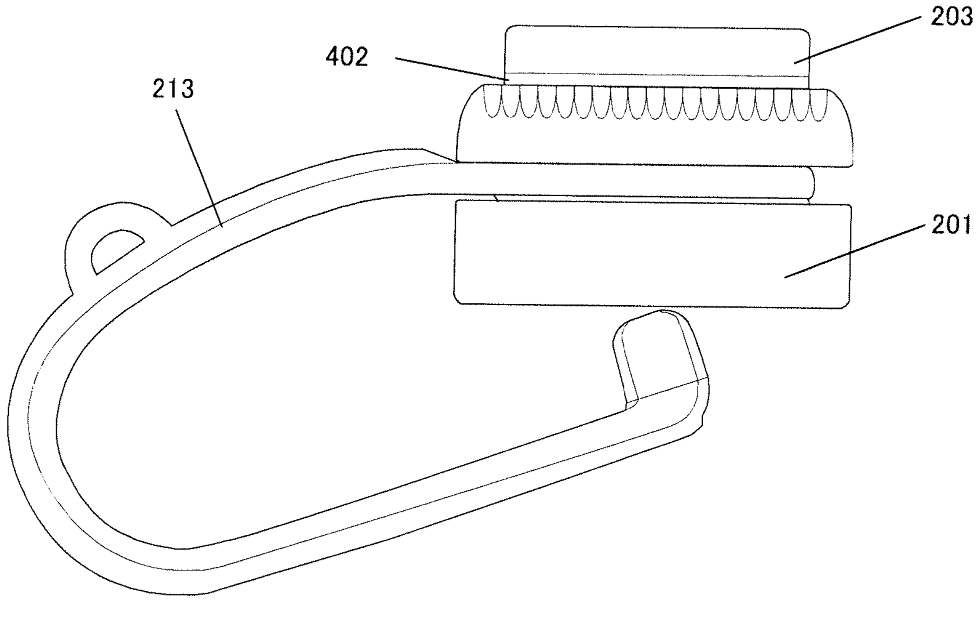

FIG. 53A

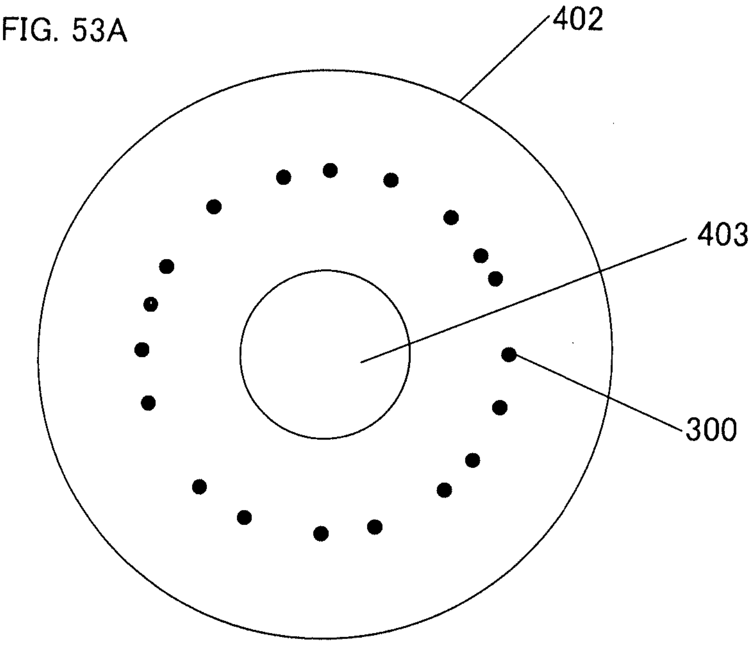


FIG. 53B

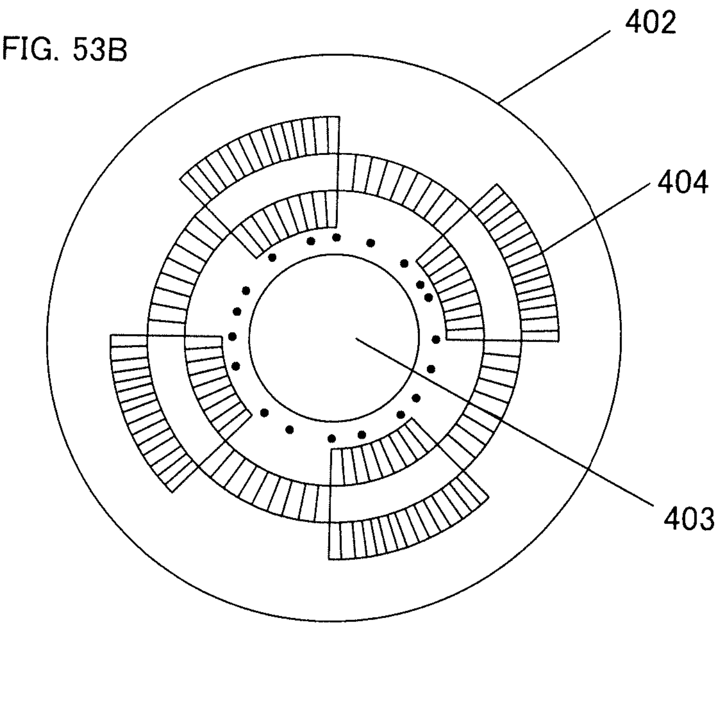

FIG. 54A

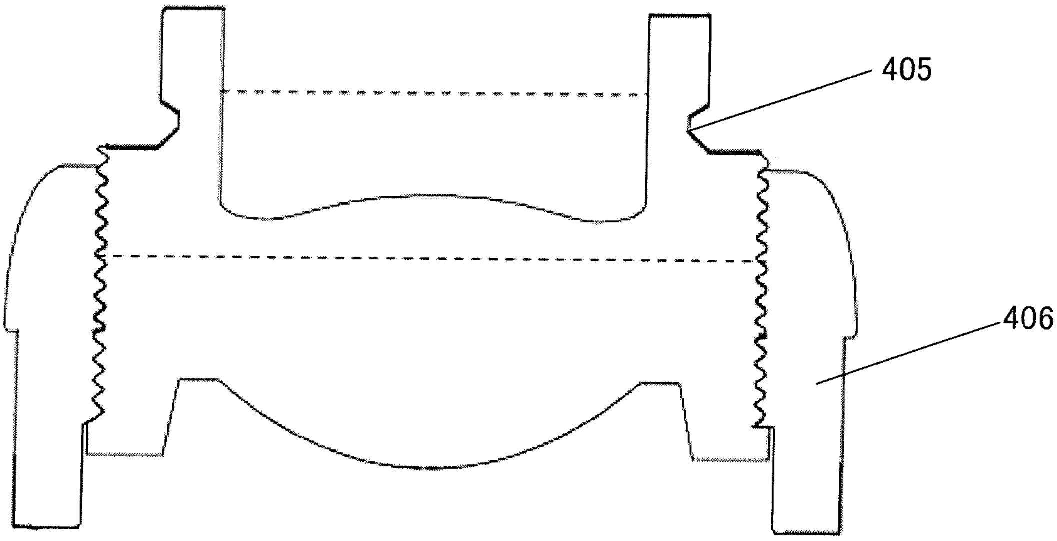


FIG. 54B

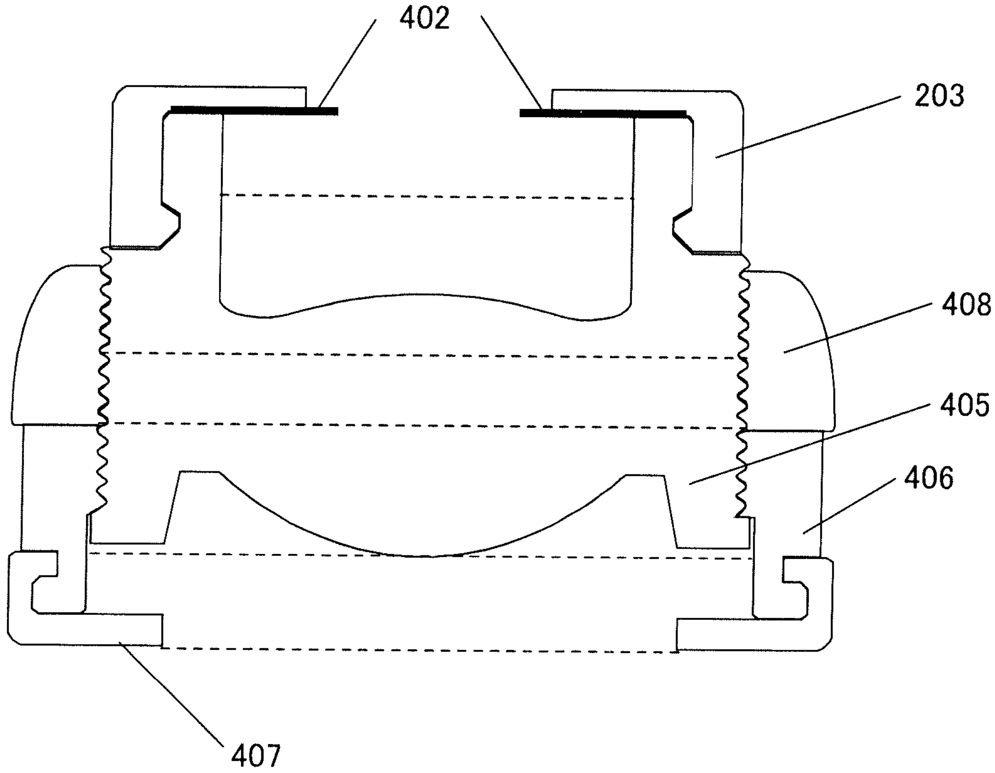

FIG. 55A

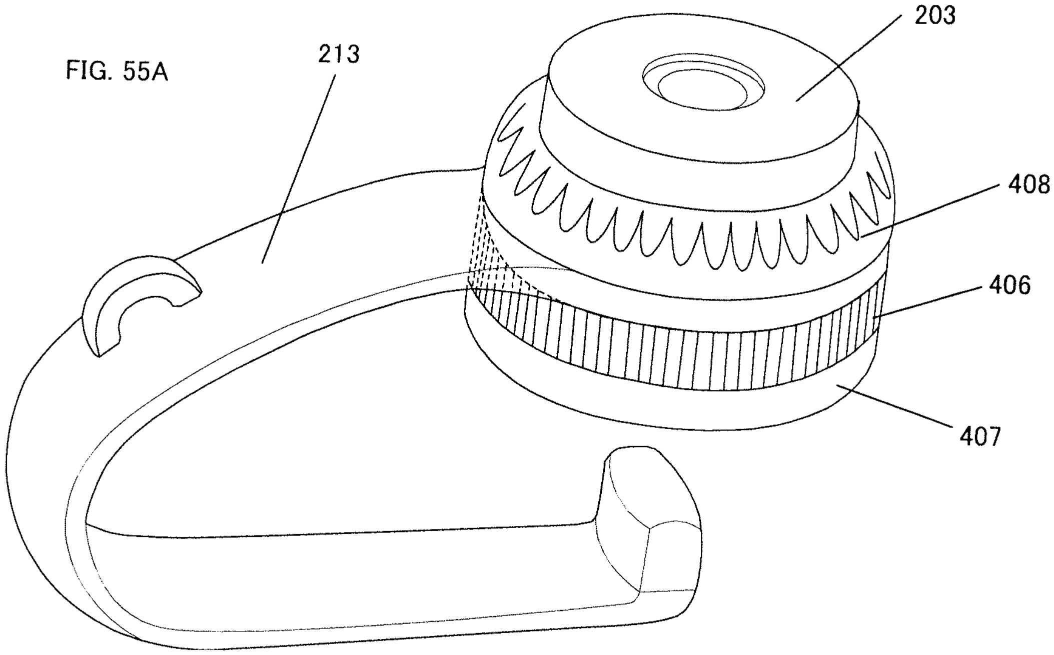


FIG. 55B

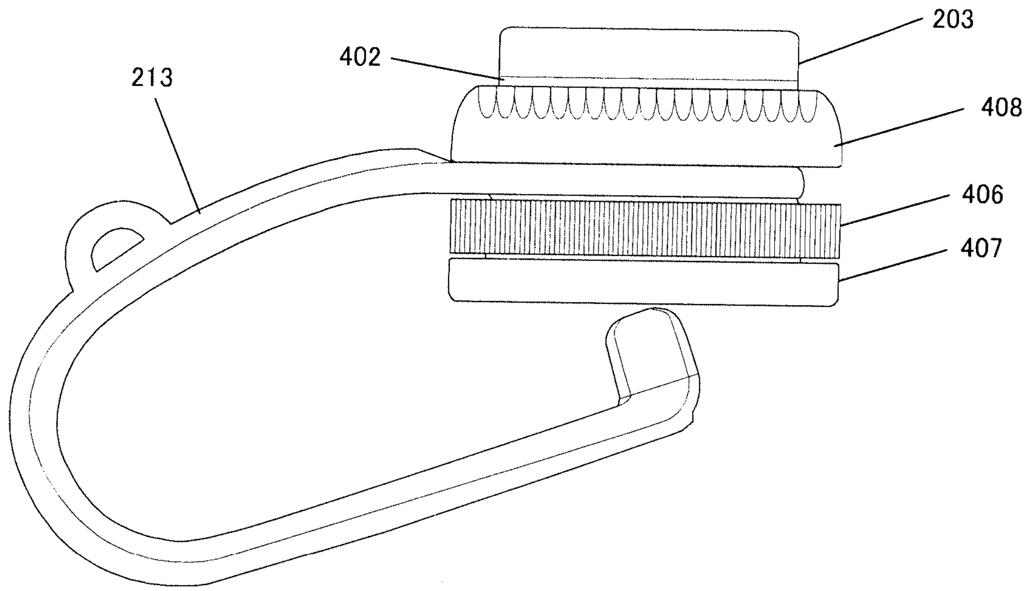

FIG. 56A

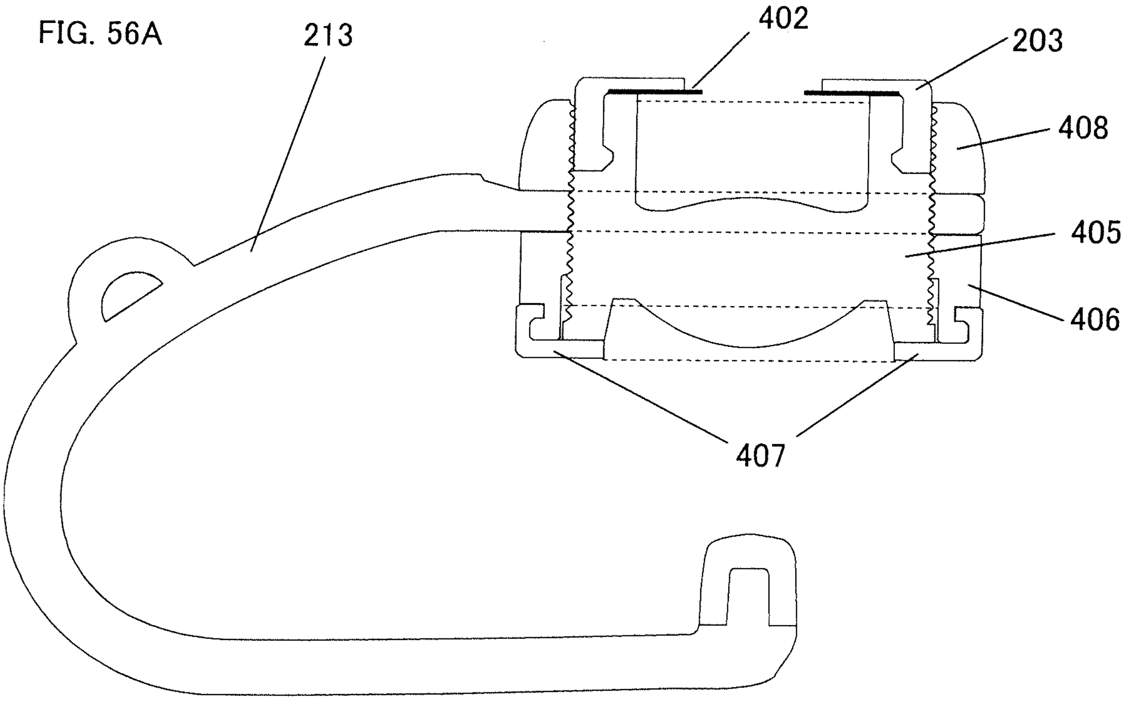


FIG. 56B

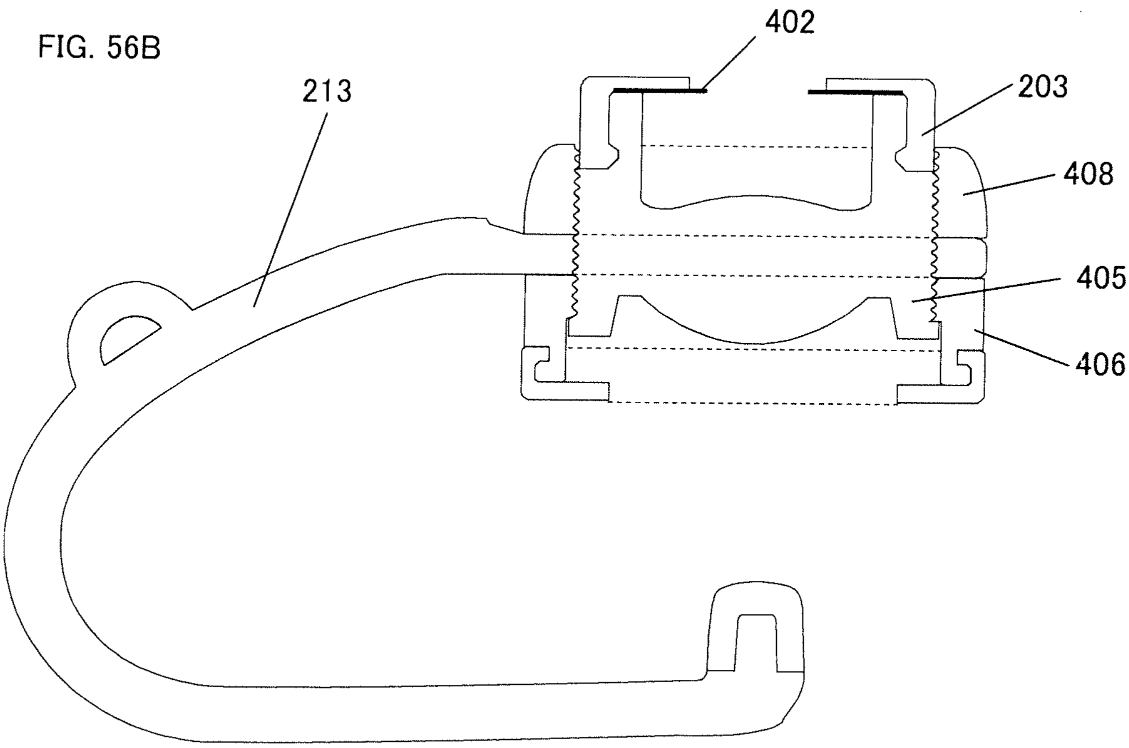

FIG. 57

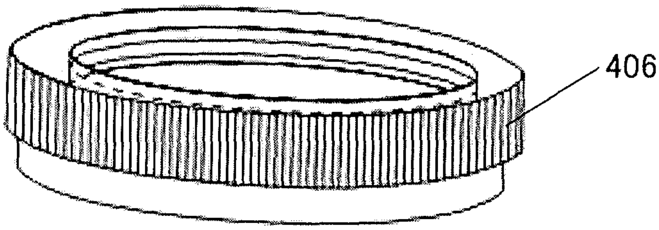

FIG. 58A

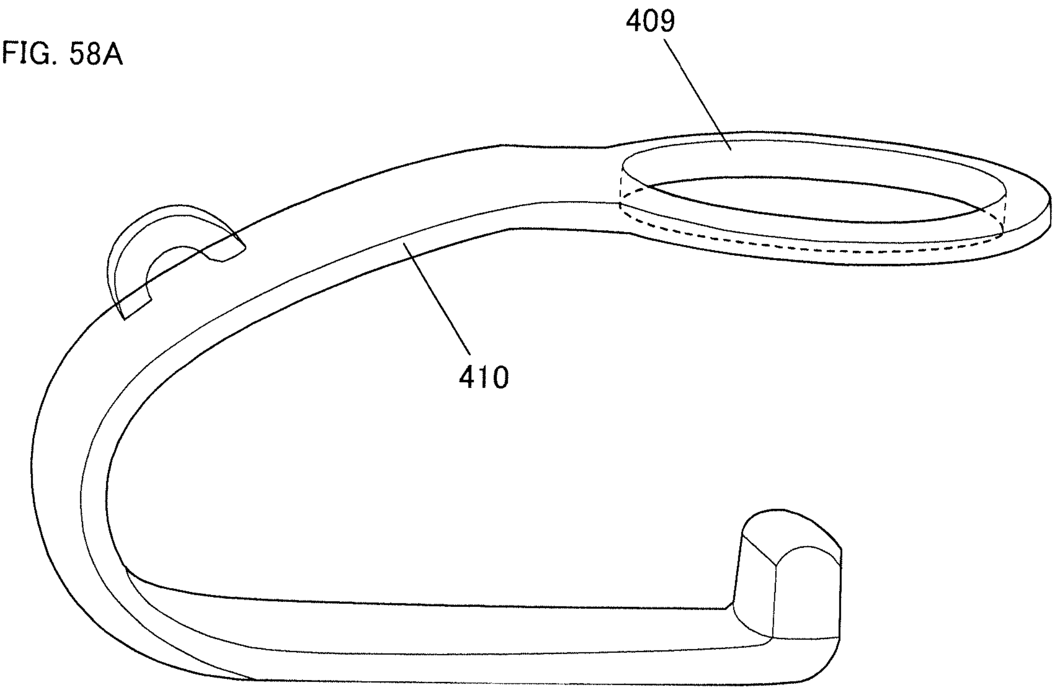


FIG. 58B

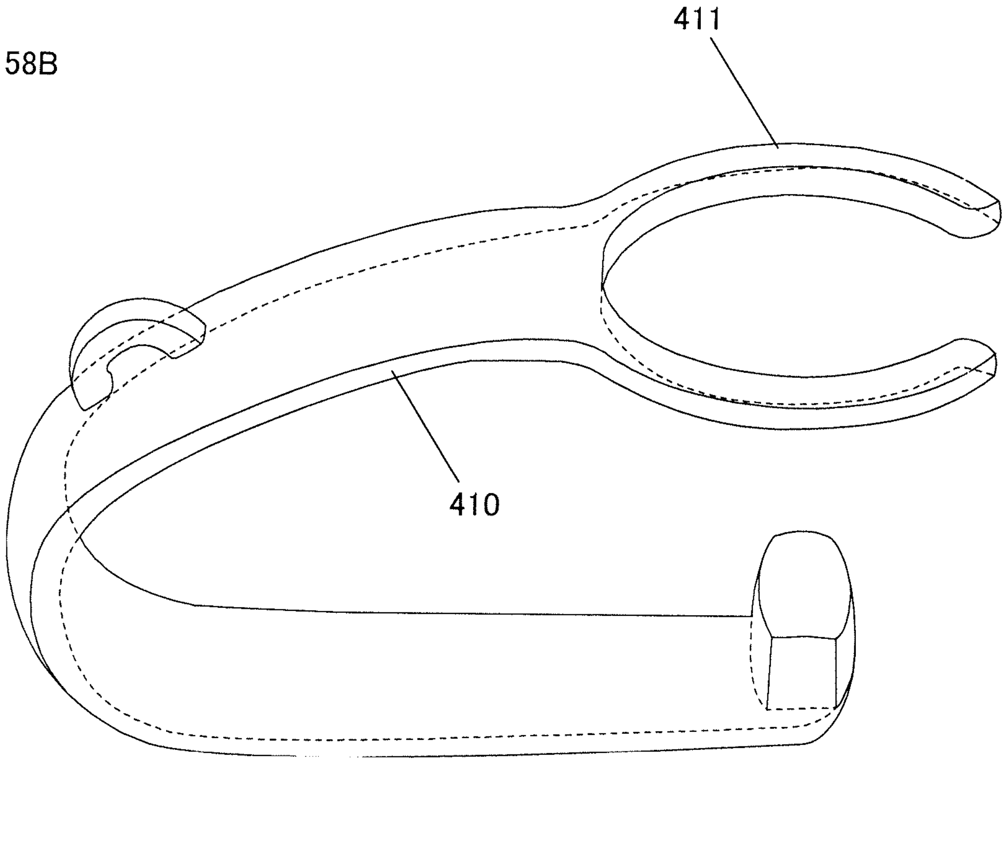

FIG. 59

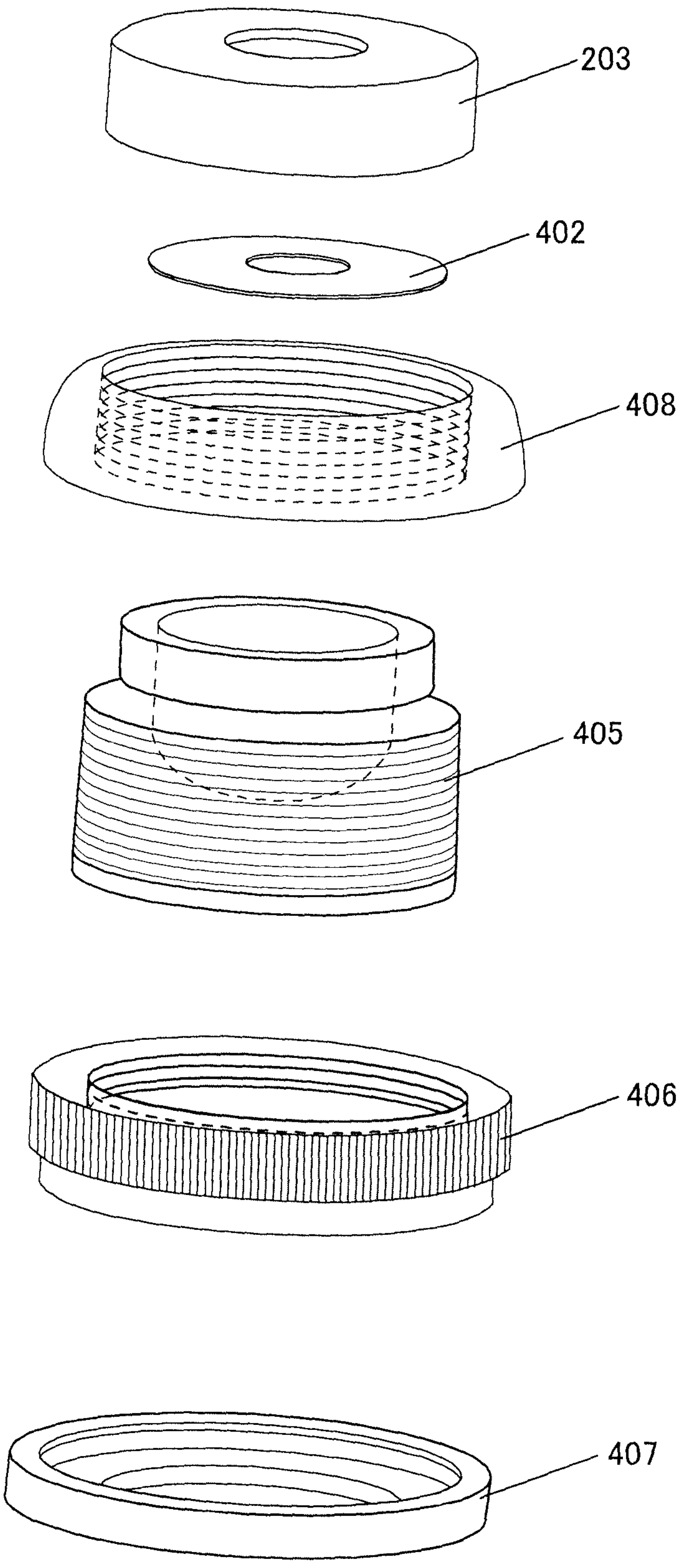

FIG. 60

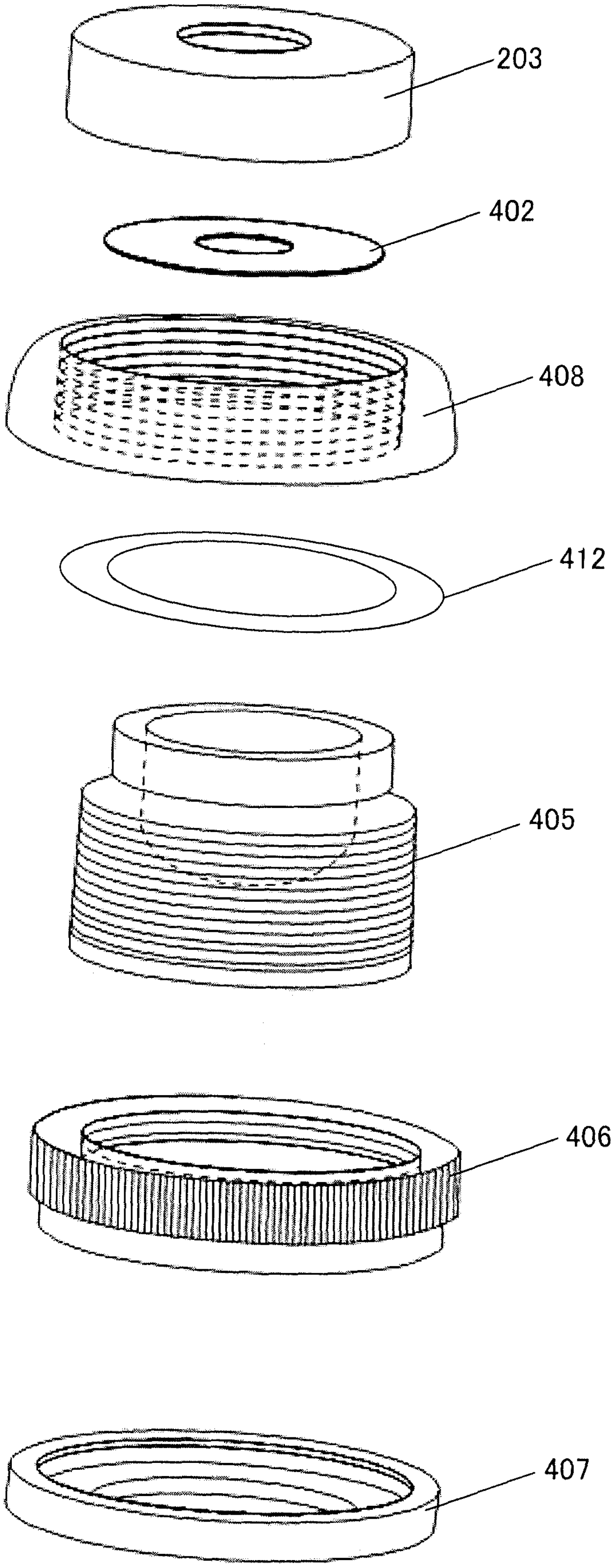

FIG. 61

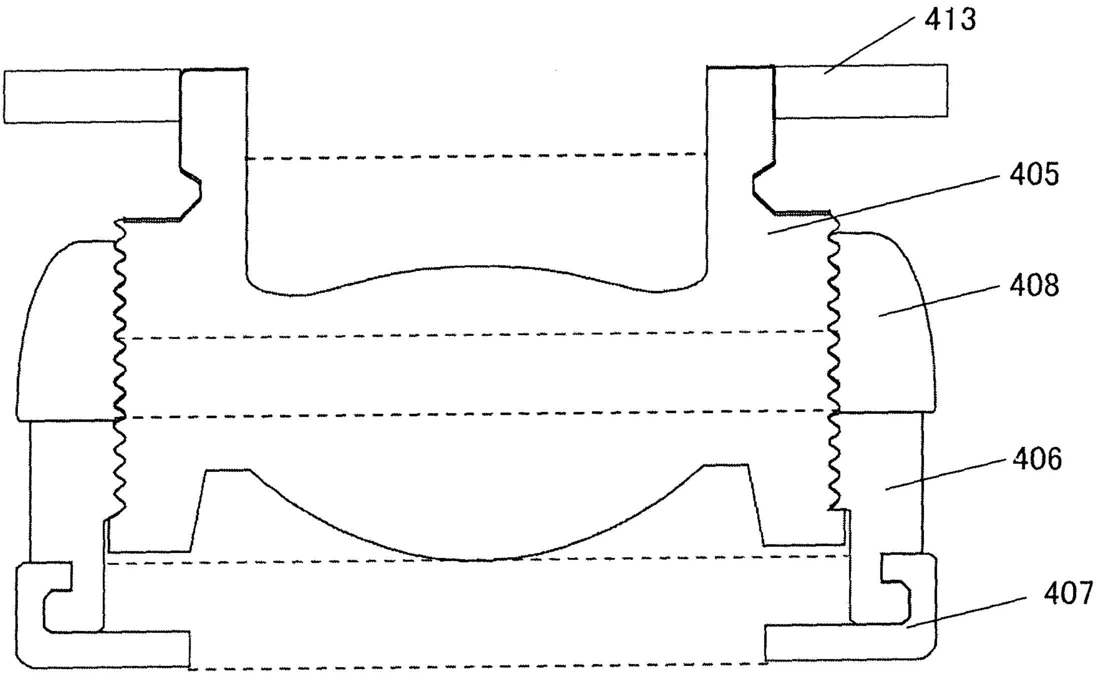

FIG. 62A

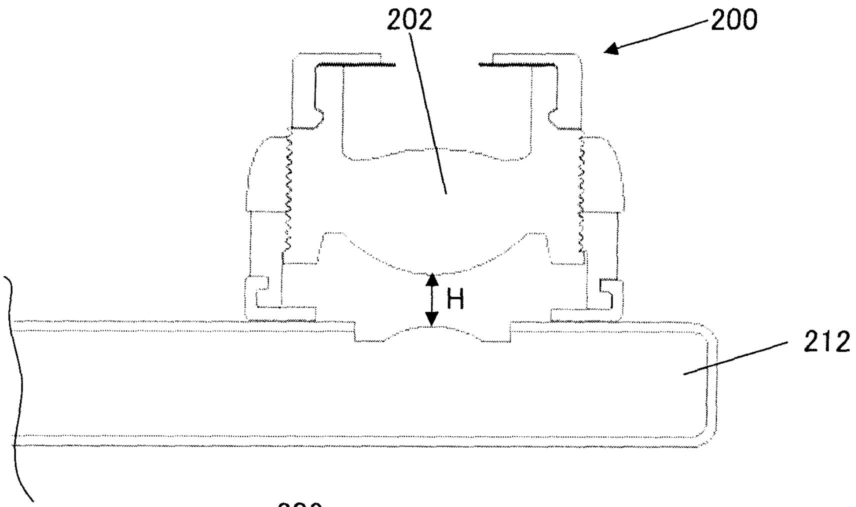


FIG. 62B

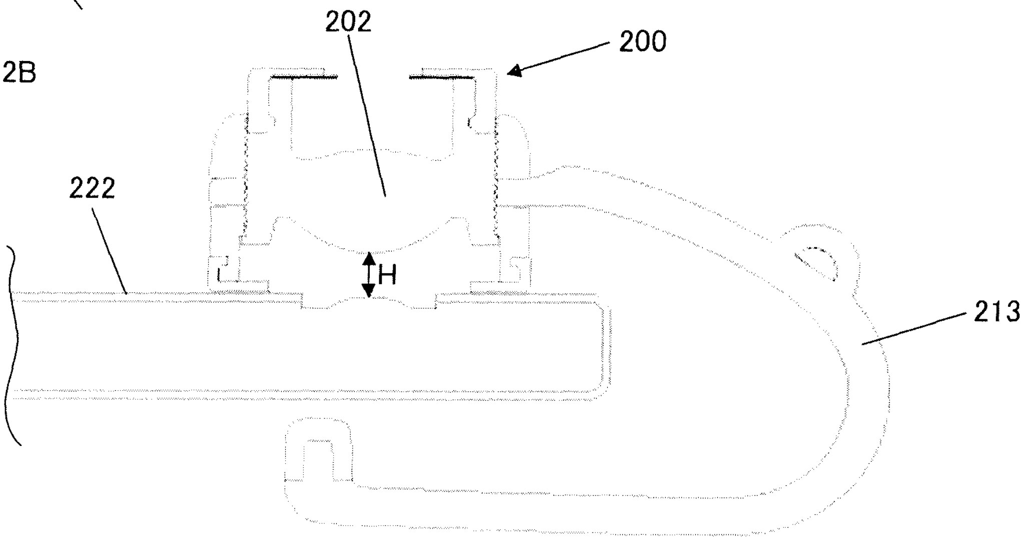


FIG. 62C

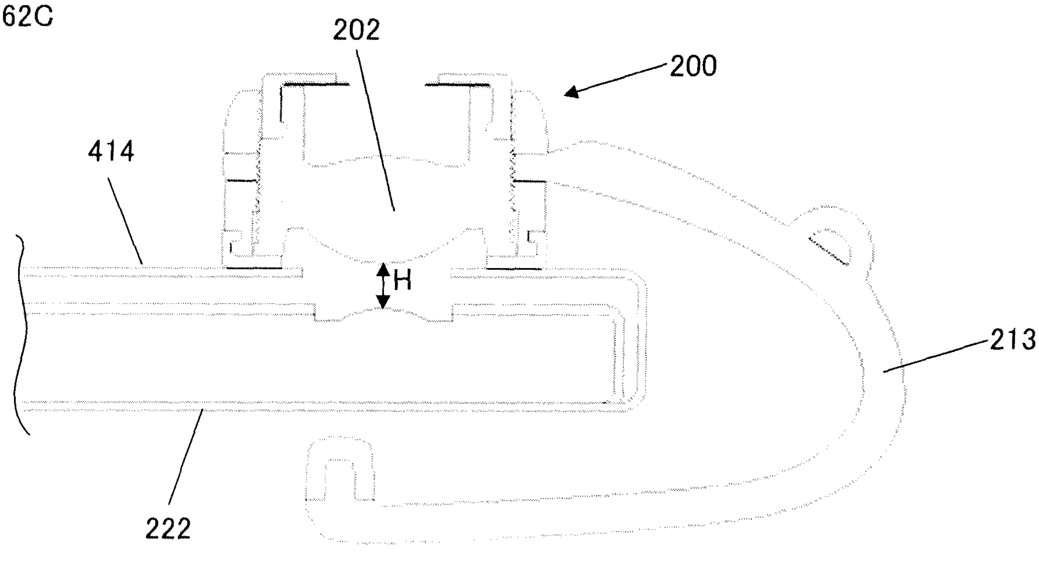

FIG.63

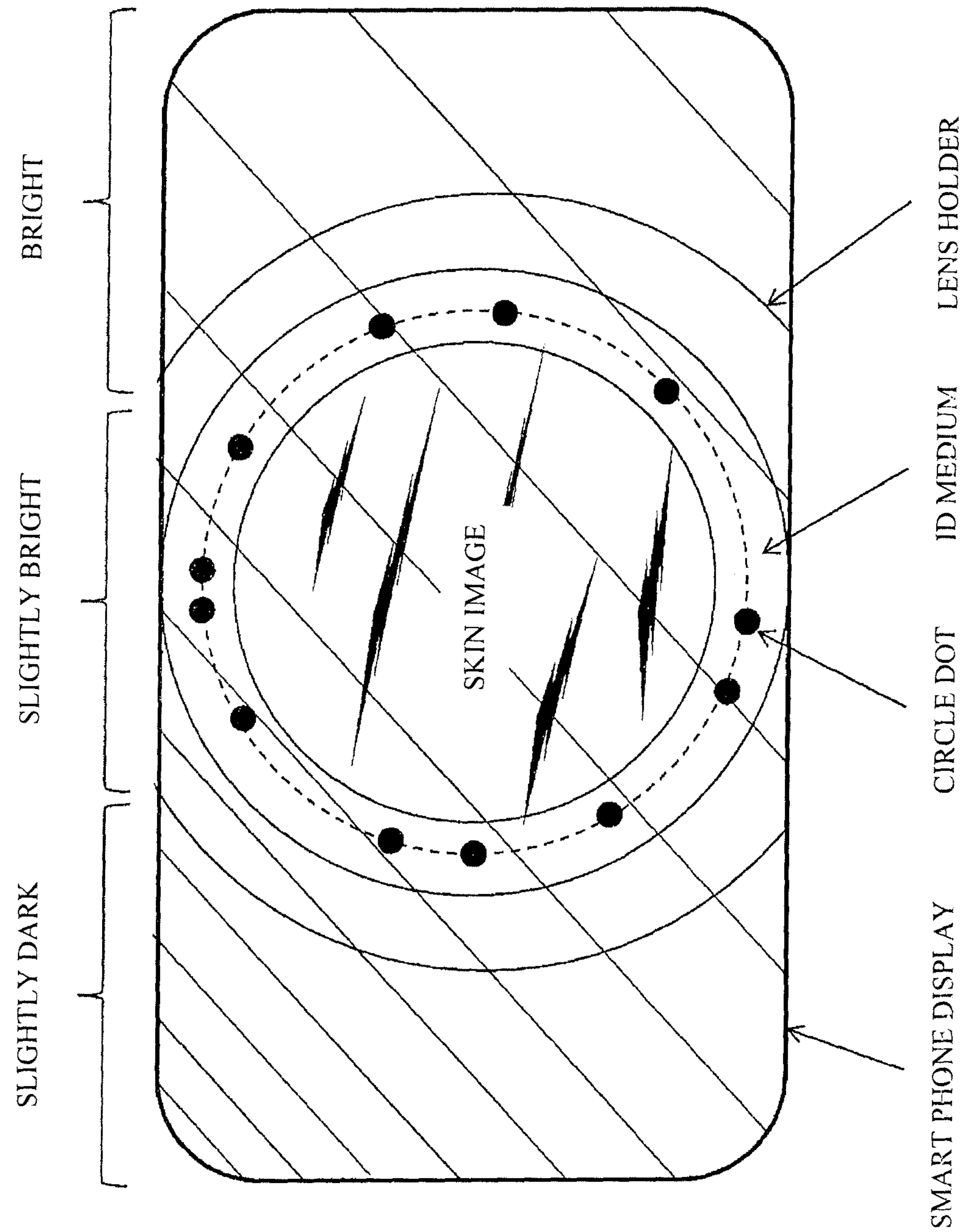
BRIGHT
SLIGHTLY BRIGHT
SLIGHTLY DARK
SKIN IMAGE
LENS HOLDER
ID MEDIUM
CIRCLE DOT
SMART PHONE DISPLAY

FIG.64A

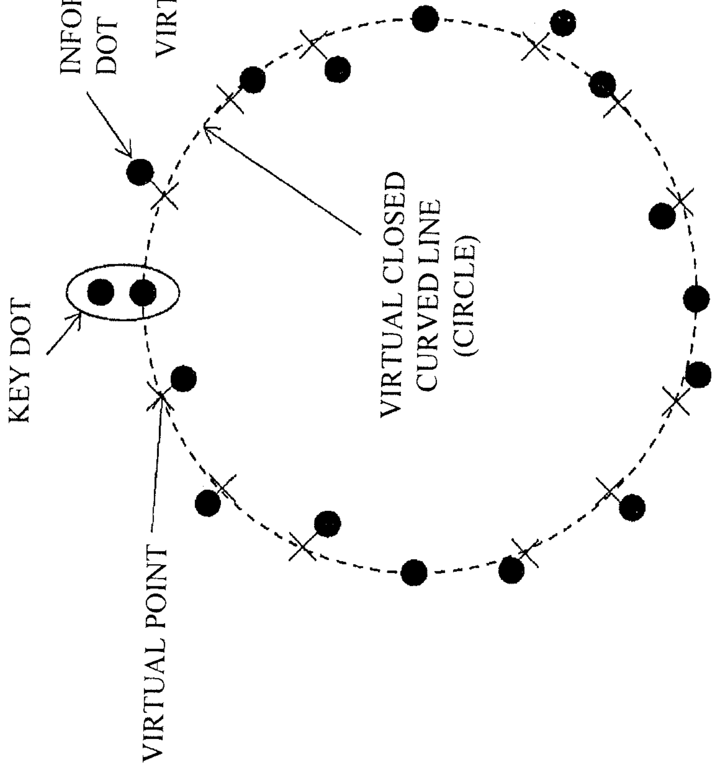


FIG.64B

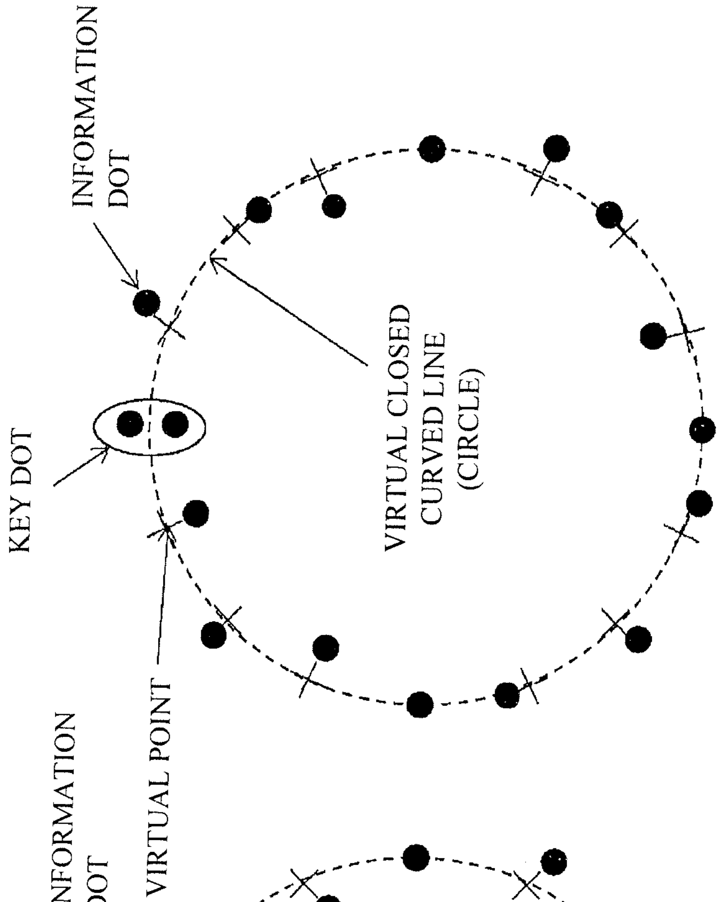

FIG.65A

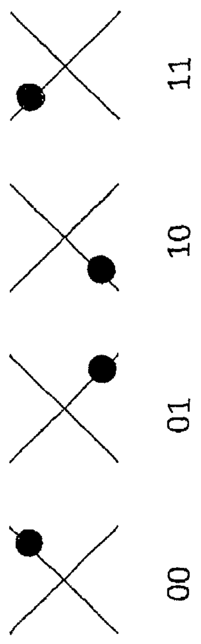


FIG.65B

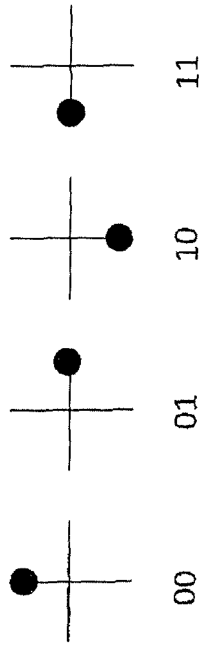


FIG.65C

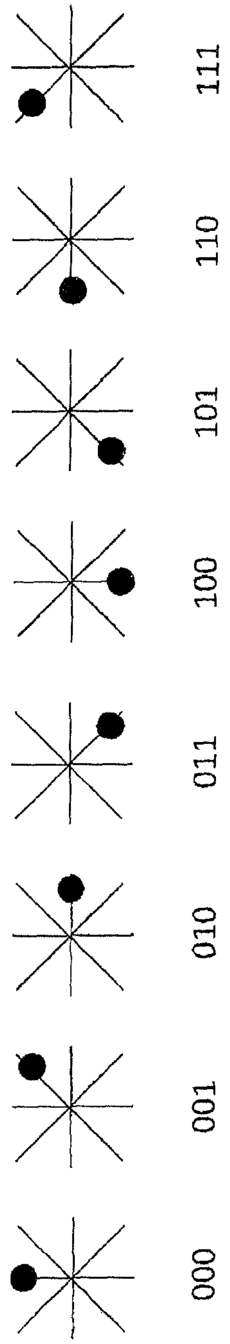

FIG. 66A

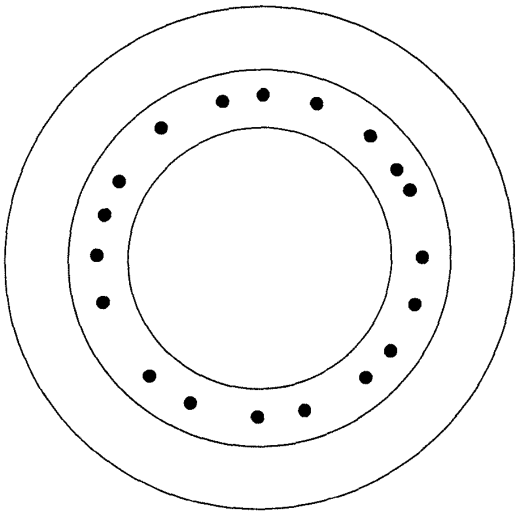

FIG. 66B

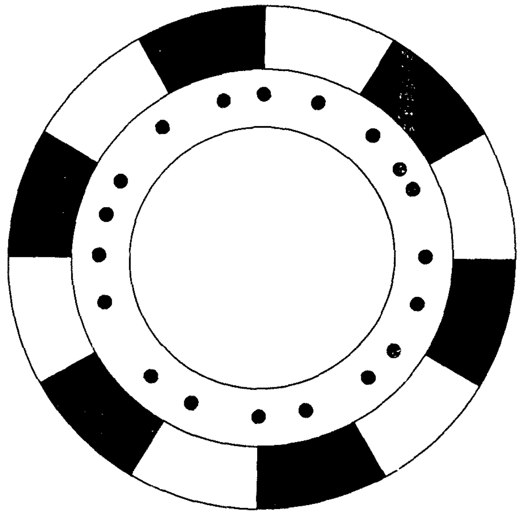

FIG. 66C

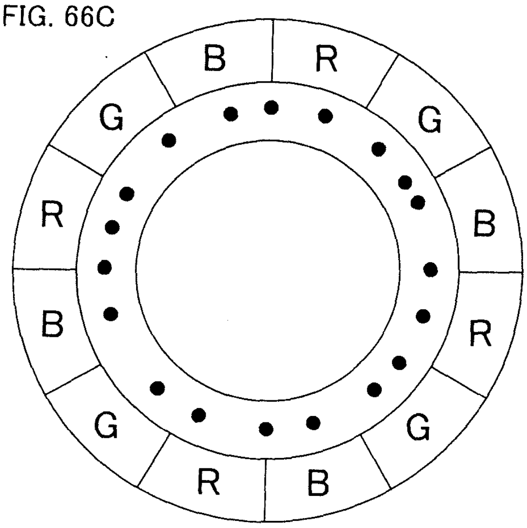


FIG. 66D

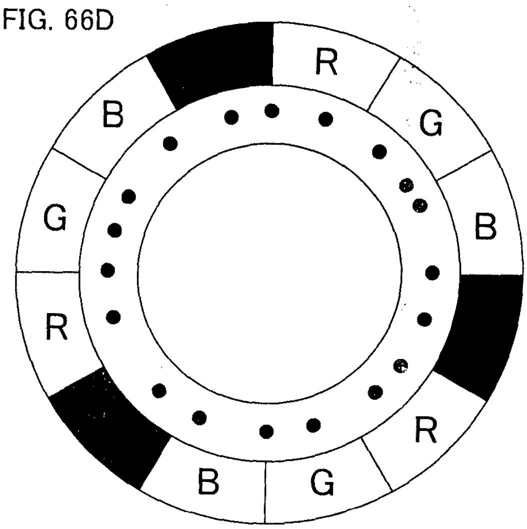

FIG. 67A

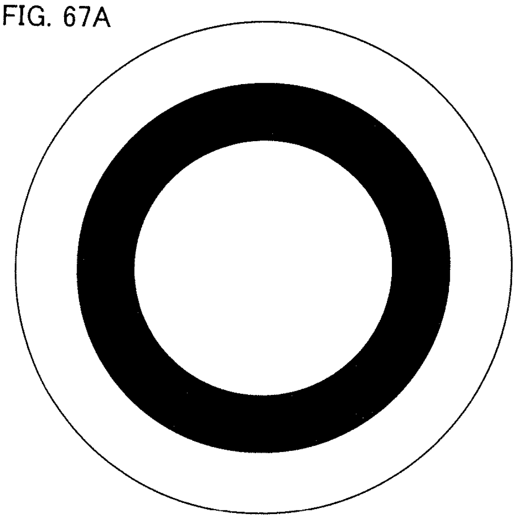

FIG. 67B

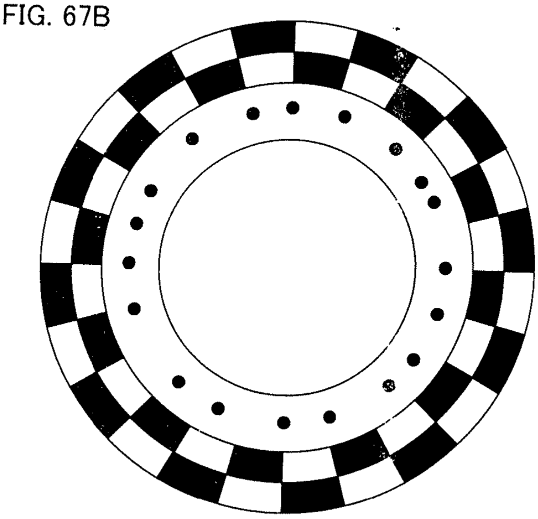

FIG. 67C

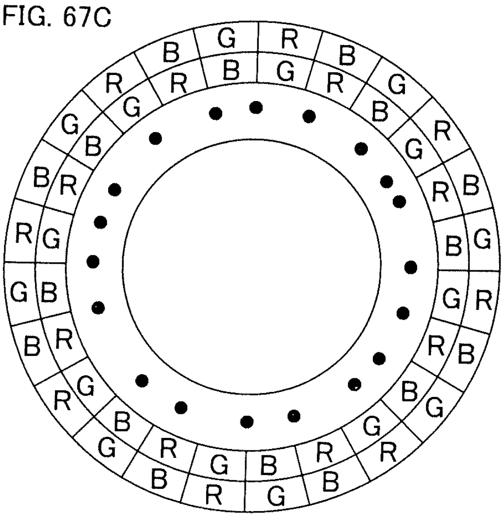

FIG. 67D

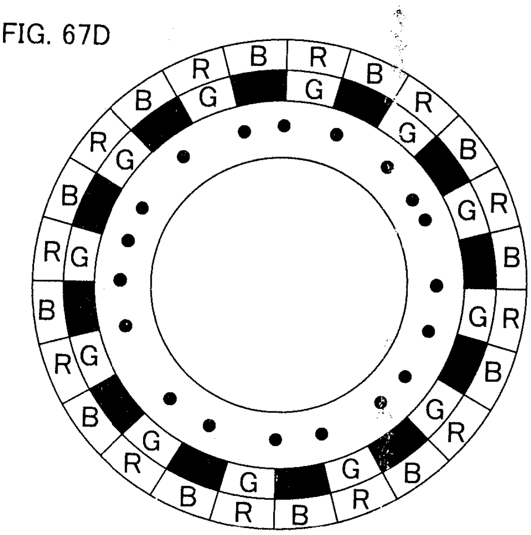

FIG. 68A

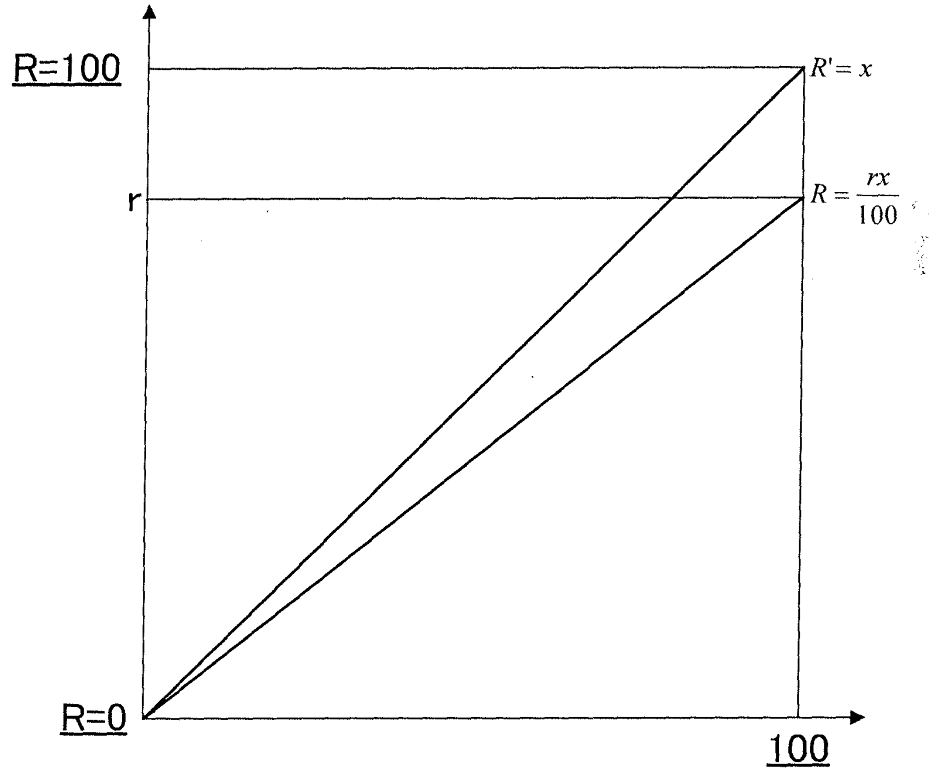


FIG. 68B

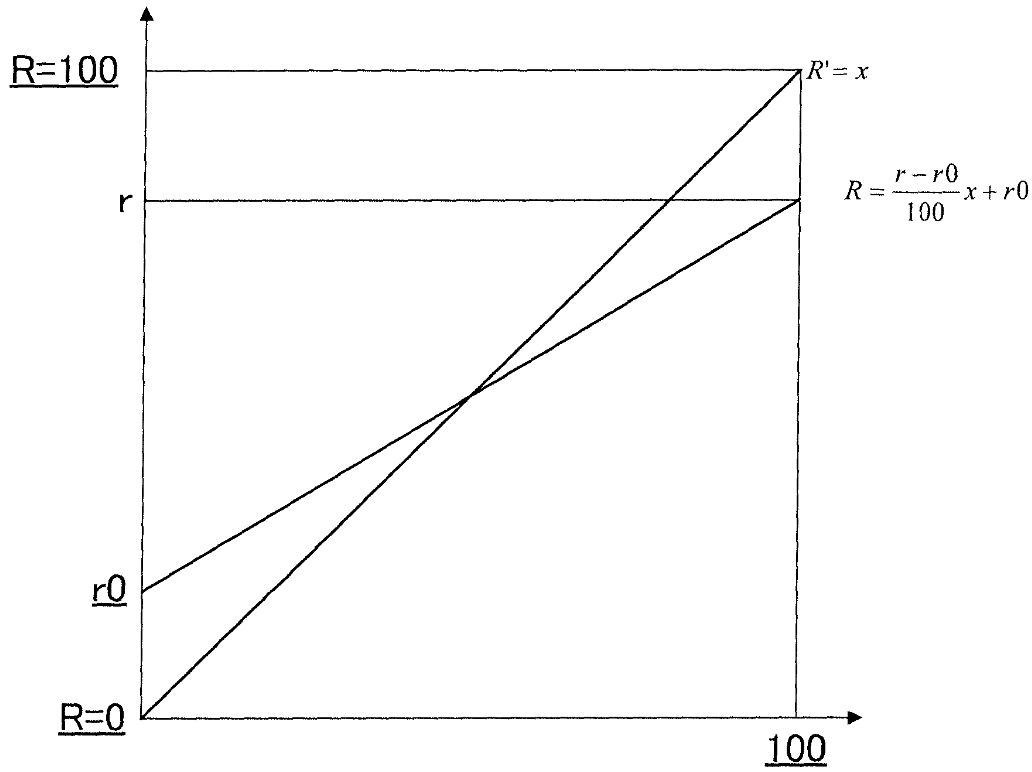

FIG. 69A

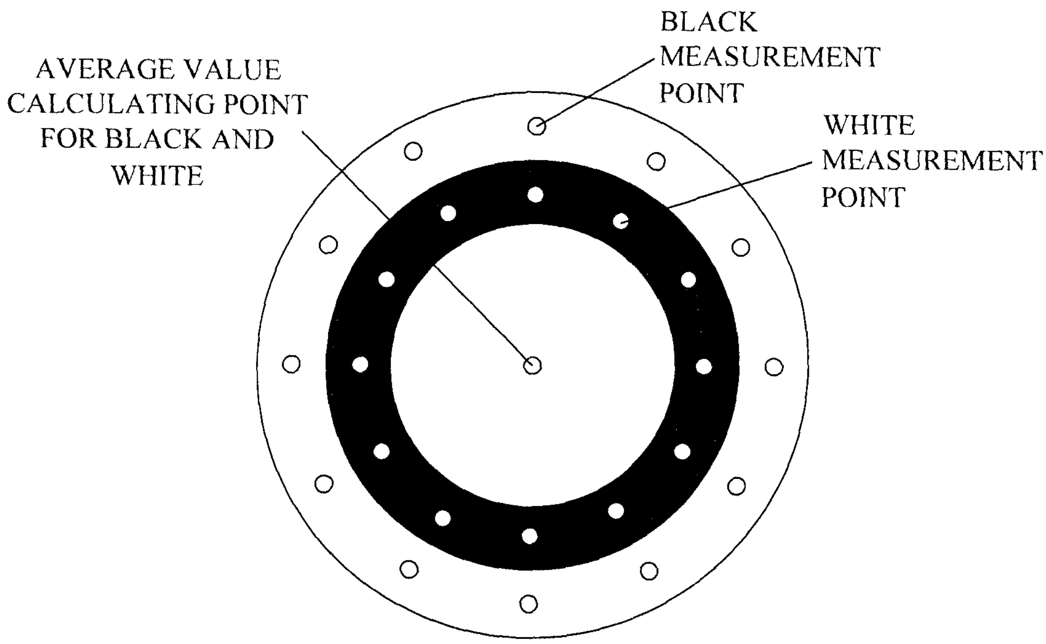


FIG. 69B

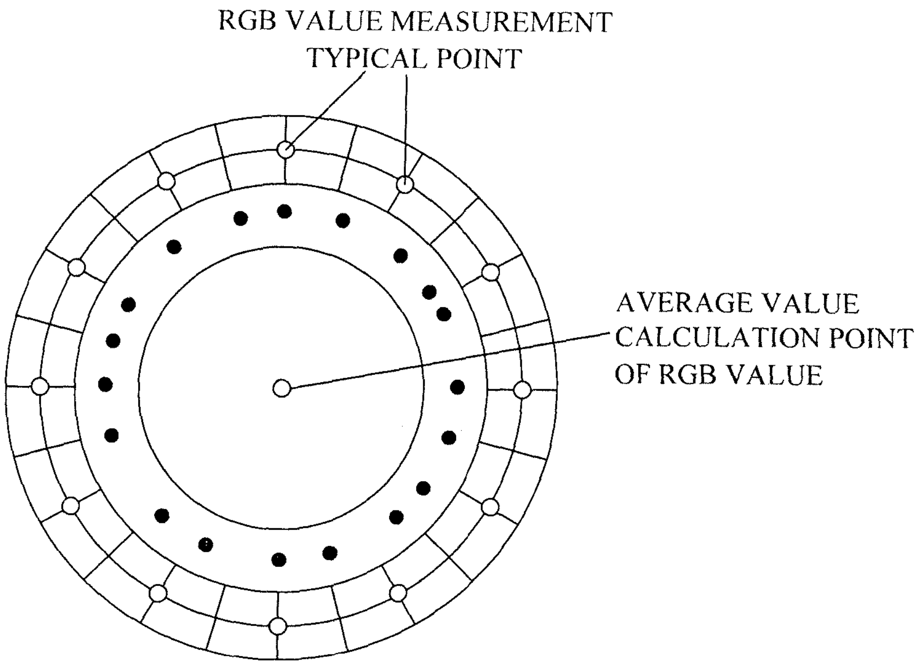

**INTERNATIONAL SEARCH REPORT**

International application No.
PCT/JP2013/068186

A. CLASSIFICATION OF SUBJECT MATTER
*G06K7/10*(2006.01)i, *G02B7/02*(2006.01)i

According to International Patent Classification (IPC) or to both national classification and IPC

B. FIELDS SEARCHED

Minimum documentation searched (classification system followed by classification symbols)
G06K7/00-7/14, G02B7/02

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br><br><br>A | JP 11-312214 A (Toshiba Tec Corp.), 09 November 1999 (09.11.1999), paragraphs [0018] to [0021], [0031]; fig. 1, 4 to 7 (Family: none) | 28,37-47, 56-62,65-66, 71,73,75-76<br>1-27,29-36, 48-55,63-64, 67-70,72,74 |
| Y<br><br><br>A | JP 7-311811 A (Olympus Optical Co., Ltd.), 28 November 1995 (28.11.1995), paragraphs [0036] to [0044]; fig. 3(A) (Family: none) | 28,37-47, 56-62,65-66, 71,73,75-76<br>1-27,29-36, 48-55,63-64, 67-70,72,74 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 26 July, 2013 (26.07.13) | 06 August, 2013 (06.08.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2013/068186

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2010/016277 A2 (Kenji YOSHIDA), 11 February 2010 (11.02.2010), paragraph [0053]; fig. 1 (Family: none) | 38-39,47 |
| Y | JP 2007-310894 A (Kenji YOSHIDA), 29 November 2007 (29.11.2007), paragraph [0092]; fig. 25 (Family: none) | 60 |
| Y | JP 2000-11083 A (Denso Corp.), 14 January 2000 (14.01.2000), paragraph [0042]; fig. 4(c) (Family: none) | 61-62 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009259192 A
- JP 2009230729 A
- JP 2004029871 A
- JP 2007105819 A
- JP 2006040832 A
- WO 2011007783 A
- JP 4465016 B